# EUROPEAN PATENT APPLICATION

(11) **EP 4 848 812 A1**
(43) Date of publication of application: **02.12.2026**
(21) Application number: 25762385.0
(22) Date of filing: 27.02.2025
(51) Int. Cl.: H04W 36/00, H04W 36/18, H04W 84/12, H04W 36/08, H04W 76/15

(54) **METHOD AND APPARATUS FOR PERFORMING MLD ROAMING BY TRANSFERRING CONTEXT IN WIRELESS LAN SYSTEM**

(30) Priority: 27.02.2024 KR 20240028290; 04.04.2024 KR 20240046207; 12.06.2024 KR 20240076629; 18.07.2024 KR 20240094802; 26.07.2024 KR 20240099667; 16.01.2025 KR 20250006859
(71) Applicant: LG Electronics Inc., Yeongdeungpo-gu Seoul 07336 (KR)
(72) Inventor: YOON, Yelin, Seoul 06772 (KR); CHOI, Jinsoo, Seoul 06772 (KR); LEE, Hongwon, Seoul 06772 (KR); JANG, Insun, Seoul 06772 (KR); BAEK, Sunhee, Seoul 06772 (KR); KIM, Geonhwan, Seoul 06772 (KR); CHA, Dongju, Seoul 06772 (KR)
(74) Representative: Plasseraud IP
(86) International application number: PCT/KR2025/002727
(87) International publication number: WO 2025/183468

(57) **Abstract**

Proposed are a method and an apparatus for performing MLD roaming by transferring context in a wireless LAN system. Specifically, a first non-AP STA transmits an MLD roaming request frame to a first AP, and receives an MLD roaming response frame from the first AP. The first non-AP STA performs roaming from the first AP to a second AP on the basis of the MLD roaming request frame and the MLD roaming response frame. The MLD roaming request frame includes information on a context transfer level. A context to be transferred from the first AP MLD to the second AP MLD is selected on the basis of the information on the context transfer level.

## Description

### TECHNICAL FIELD

The present specification relates to a scheme for performing MLD roaming by transferring a context in a wireless LAN system, and more specifically, relates to a method and apparatus for selecting a context to be transferred from a Serving AP MLD to a Target AP MLD based on information on a context transfer level.

### BACKGROUND ART

Wireless Local Area Network (WLAN) has been improved in various ways. Based on for example, the IEEE 802.11ax standard proposed an improved communication environment using Orthogonal Frequency Division Multiple Access (OFDMA) and Downlink Multi-User Multiple Input Multiple Output (DL MU MIMO) scheme.

The present specification proposes technical features usable in a new communication standard. Based on for example, the new communication standard may be an Extreme High Throughput (EHT) specification being recently discussed. The EHT specification may use a newly proposed increased bandwidth, an improved PHY Layer Protocol Data Unit (PPDU) structure, an improved sequence, Hybrid Automatic Repeat Request (HARQ) scheme and the like. The EHT specification may be called the IEEE 802.11be specification.

In a new WLAN specification, an increased number of spatial streams may be used. In this case, in order to appropriately use the increased number of spatial streams, a signaling scheme within a WLAN system may need to be improved.

### DISCLOSURE

### TECHNICAL PROBLEM

The present specification proposes a method and apparatus for performing MLD roaming by transferring a context in a wireless LAN system.

### TECHNICAL SOLUTION

An example of the present specification proposes a method of performing MLD roaming by transferring a context.

The present embodiment may be performed in a network environment in which a next-generation wireless LAN system (an Ultra High Reliability (UHR) wireless LAN system or next Wi-Fi) is supported. The next-generation wireless LAN system is a wireless LAN system improving an 802.11be system, and may satisfy backward compatibility with the 802.11be system.

The present embodiment proposes a method of selecting a context to be transferred from a Serving AP MLD to a Target AP MLD based on information on a context transfer level in an exchange procedure of a Roaming Request frame and a Roaming Response frame for MLD roaming. Specifically, the present embodiment has an effect that a delay due to unnecessary context transfer may be prevented by selectively transferring contexts based on whether re-negotiation between a non-AP STA and a Target AP MLD is performed.

A first non-access point station (non-AP STA) transmits a multi-link device (MLD) Roaming Request frame to a first AP.

The first non-AP STA receives an MLD Roaming Response frame from the first AP.

The first non-AP STA performs roaming from the first AP to a second AP based on the MLD Roaming Request frame and the MLD Roaming Response frame.

The first AP is affiliated with a first AP multi-link device (MLD), and the second AP is affiliated with a second AP MLD. The first and second AP MLDs are included in a group capable of roaming.

The first AP may be called an Old AP (O_AP), a Serving AP or a Current AP. The second AP may be called a New AP (N_AP) or a Target AP. The first AP MLD including the first AP may be called a Serving AP MLD. The second AP MLD including the second AP may be called a Target AP MLD. MLD roaming from a Serving AP MLD to a Target AP MLD is defined as an operation of seamlessly moving from an AP to another AP without disconnection between an AP and an STA in an MLD.

The group capable of roaming may be called a UHR AP MLD. Although the first and second AP MLDs are non-collocated, they are included in the same group capable of roaming, so roaming (or movement) from an AP of the first AP MLD to an AP of the second AP MLD may be possible. APs in the first AP MLD are collocated. APs in the second AP MLD are also collocated.

The MLD Roaming Request frame includes information on a context transfer level.

A context transferred from the first AP MLD to the second AP MLD is selected based on the information on the context transfer level.

The present embodiment proposes a method of selecting a context for proactively transferring information required before a non-AP STA performs roaming to a Target AP MLD. Particularly, the present embodiment defines a context transfer level for the context, and proposes a method of selecting a context required for roaming based on the context transfer level.

### ADVANTAGEOUS EFFECTS

According to an embodiment proposed in the present specification, a delay caused by transfer of unnecessary contexts may be avoided and only necessary information may be transferred, having an effect that more improved seamless roaming may be implemented.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 shows an example of a header of a MAC frame.
FIG. 14 illustrates an example of a modified transmission device and/or receiving device of the present specification.
FIG. 15 illustrates an Over-The-Air (OTA) FT protocol in a Robust Security Network (RSN).
FIG. 16 illustrates a high-level architecture for an AP MLD.
FIG. 17 illustrates an example of a high-level architecture for a UHR AP MLD.
FIG. 18 illustrates another example of a high-level architecture for a UHR AP MLD.
FIG. 19 illustrates another example of a High-level Architecture for a UHR AP MLD.
FIG. 20 illustrates an example of a High-level Architecture based on a case where there is only an entity that is not MLD based.
FIG. 21 illustrates another example of a High-level Architecture based on a case where there is only an entity that is not MLD based.
FIG. 22 illustrates an example of a roaming architecture in an AP MLD area.
FIG. 23 shows an example of an RNR IE.
FIG. 24 shows another example of an RNR IE.
FIG. 25 shows still another example of an RNR IE.
FIG. 26 illustrates an example of an AP Roaming Recommendation enabled field and a Roaming Reason Code field in a Common Info field.
FIG. 27 illustrates an example of an AP Roaming Recommendation enabled field in a Link Info field.
FIG. 28 illustrates an example of a common info field of a Reconfiguration Multi-ink IE proposed in the present embodiment.
FIG. 29 illustrates an example of a link info field of a Reconfiguration Multi-ink IE proposed in the present embodiment.
FIG. 30 illustrates an example in which a UHR AP MLD ID and an AP MLD ID are included in a common info field of a Reconfiguration Multi-ink IE proposed in the present embodiment.
FIG. 31 illustrates an example in which an AP MLD ID is included in a common info field of a Reconfiguration Multi-ink IE proposed in the present embodiment.
FIG. 32 illustrates an example in which a UHR AP MLD ID and an AP MLD ID are included in a link info field of a Reconfiguration Multi-ink IE proposed in the present embodiment.
FIG. 33 illustrates an example in which an AP MLD ID is included in a link info field of a Reconfiguration Multi-ink IE proposed in the present embodiment.
FIG. 34 illustrates another example in which a UHR AP MLD ID and an AP MLD ID are included in a link info field of a Reconfiguration Multi-ink IE proposed in the present embodiment.
FIG. 35 illustrates another example in which an AP MLD ID is included in a link info field of a Reconfiguration Multi-ink IE proposed in the present embodiment.
FIG. 36 illustrates an example in which a temporary field is included in a common info field of a Reconfiguration Multi-ink IE proposed in the present embodiment.
FIG. 37 illustrates an example in which a temporary field is included in a link info field of a Reconfiguration Multi-ink IE proposed in the present embodiment.
FIG. 38 illustrates another example in which a temporary field is included in a link info field of a Reconfiguration Multi-ink IE proposed in the present embodiment.
FIG. 39 illustrates an example in which an AP Removal Timer field is included in a Common Info field of a Reconfiguration Multi-link IE proposed in the present embodiment.
FIG. 40 illustrates an example of a Common Info field of a Basic Multi-link IE proposed in the present embodiment.
FIG. 41 illustrates an example of a Link Info field of a Basic Multi-link IE proposed in the present embodiment.
FIG. 42 illustrates an example of a group key information field.
FIG. 43 illustrates a procedure for checking whether a N_AP may perform roaming using a collocation enabled field.
FIG. 44 illustrates a procedure for checking whether an N_AP may perform roaming using a collocation ID.
FIG. 45 illustrates an MLD roaming procedure based on a UHR AP MLD ID being included in a reconfiguration element.
FIG. 46 illustrates an MLD roaming procedure based on a UHR AP MLD ID not being included in a reconfiguration element.
FIG. 47 illustrates an example of a collocated AP set.
FIG. 48 illustrates example 1 for an MLD roaming procedure.
FIG. 49 shows an operation process of example 1 for an MLD roaming procedure.
FIG. 50 illustrates example 2 for an MLD roaming procedure.
FIG. 51 shows an operation process of example 2 for an MLD roaming procedure.
FIG. 52 illustrates example 3 for an MLD roaming procedure.
FIG. 53 shows an operation process of example 3 for an MLD roaming procedure.
FIG. 54 illustrates example 4 for an MLD roaming procedure.
FIG. 55 shows an operation process of examples 3 and 4 for an MLD roaming procedure.
FIG. 56 illustrates example 5 for an MLD roaming procedure.
FIG. 57 illustrates example 6 for an MLD roaming procedure.
FIG. 58 shows an example of MLD roaming utilizing a TIM.
FIG. 59 shows an operation process for an MLD roaming procedure utilizing a TIM.
FIG. 60 illustrates a basic procedure of a Roaming Procedure.
FIG. 61 illustrates an example of a Baseline of a Roaming Procedure.
FIG. 62 illustrates another example of a Baseline of a Roaming Procedure.
FIG. 63 illustrates another example of a Baseline of a Roaming Procedure.
FIG. 64 illustrates another example of a Baseline of a Roaming Procedure.
FIG. 65 illustrates an example of a baseline of a Roaming Procedure including Roaming Preparation and Execution phases during an MLD Roaming Request/Response procedure.
FIG. 66 illustrates an example of a baseline of a Roaming Procedure including Roaming Preparation and Execution phases.
FIG. 67 illustrates another example of a baseline of a Roaming Procedure including Roaming Preparation and Execution phases.
FIG. 68 illustrates another example of a baseline of a Roaming Procedure including Roaming Preparation and Execution phases.
FIG. 69 illustrates another example of a baseline of a Roaming Procedure including Roaming Preparation and Execution phases.
FIG. 70 illustrates an example of a Roaming Procedure using context transfer (only Entity exists).
FIG. 71 illustrates an example of a roaming process using context transfer.
FIG. 72 illustrates another example of a roaming process using context transfer.
FIG. 73 is a flowchart illustrating an operation of a transmitting apparatus according to the present embodiment.
FIG. 74 is a flowchart illustrating an operation of a receiving apparatus according to the present embodiment.
FIG. 75 is a flowchart illustrating a procedure in which an AP performs MLD roaming using context transfer according to the present embodiment.
FIG. 76 is a flowchart illustrating a procedure in which an STA performs MLD roaming using context transfer according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

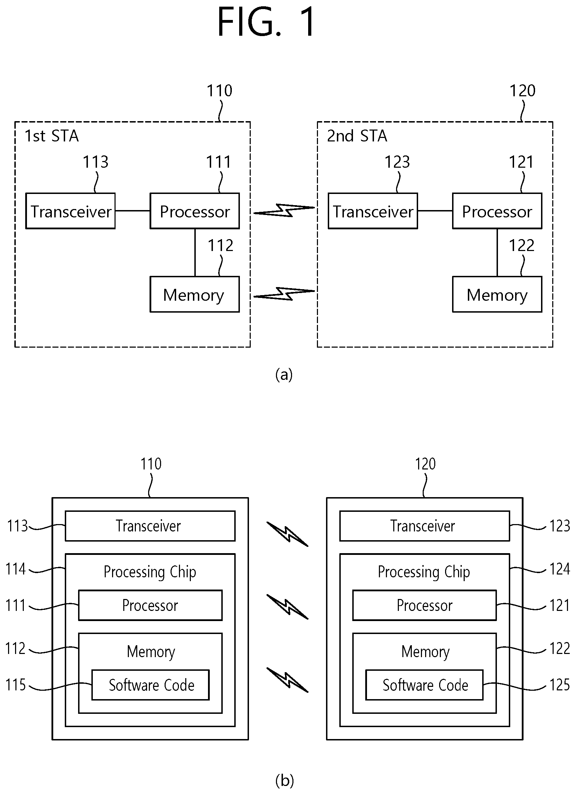

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

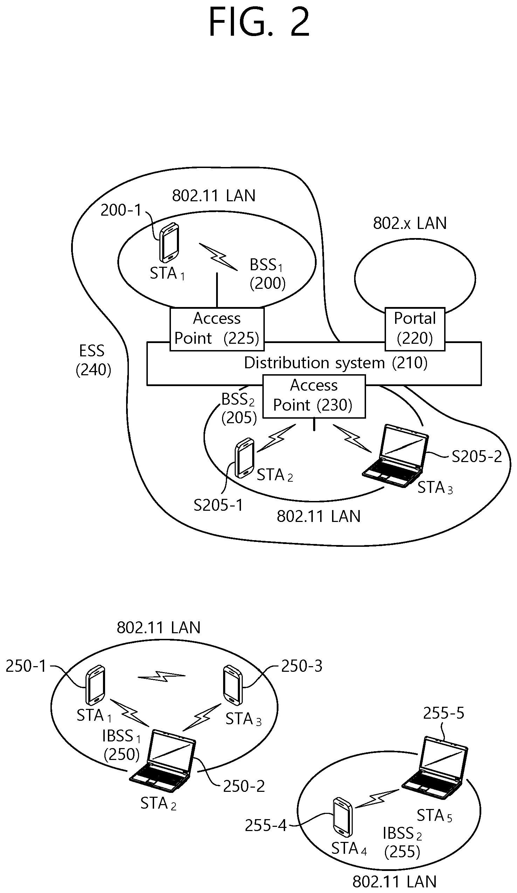

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

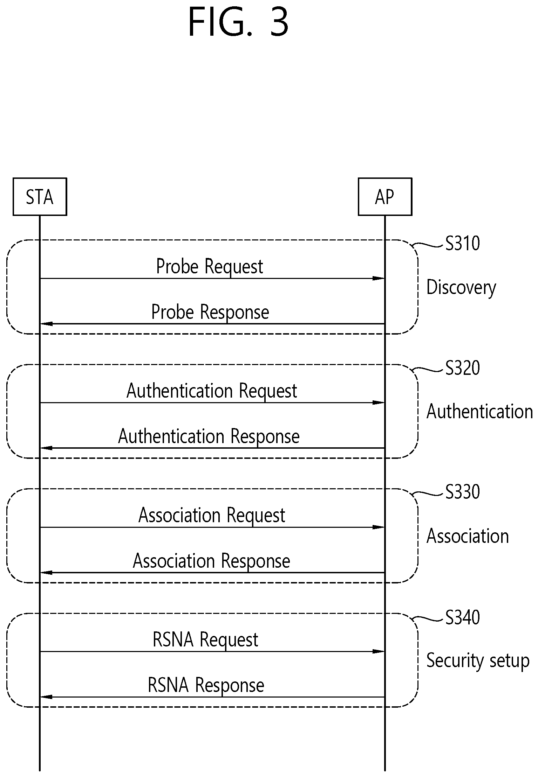

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

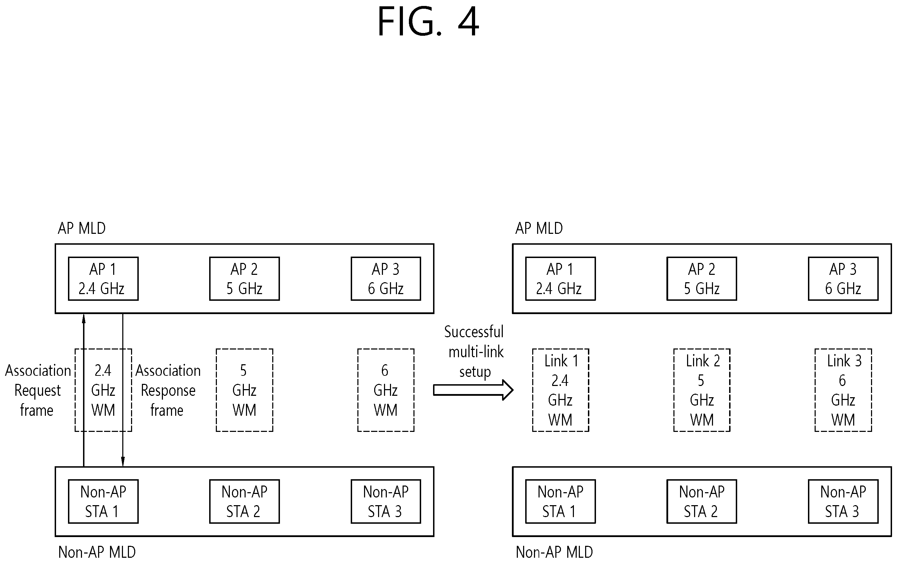

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

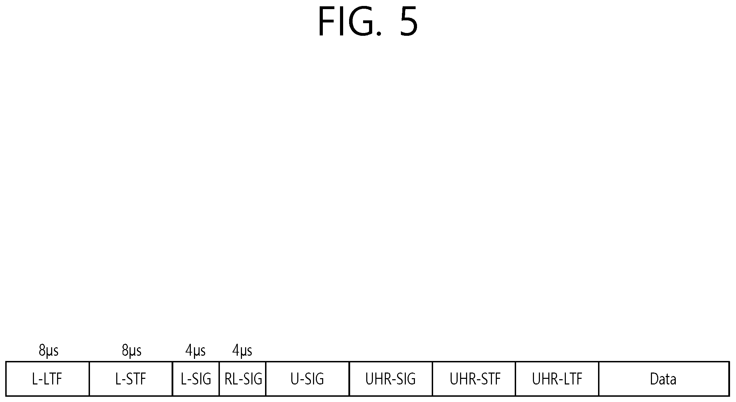

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

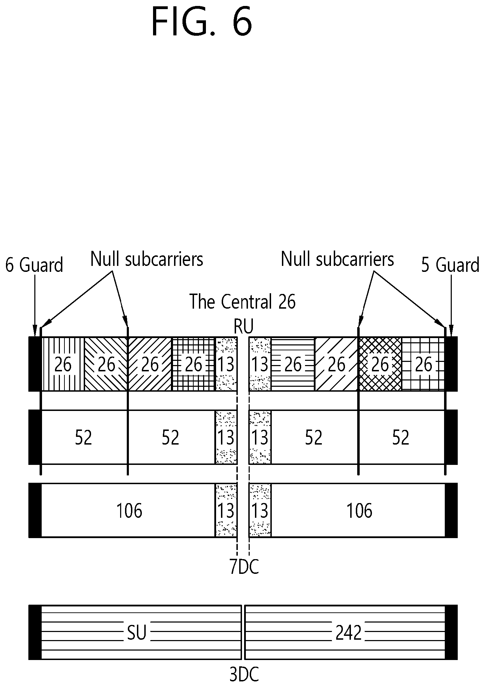

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

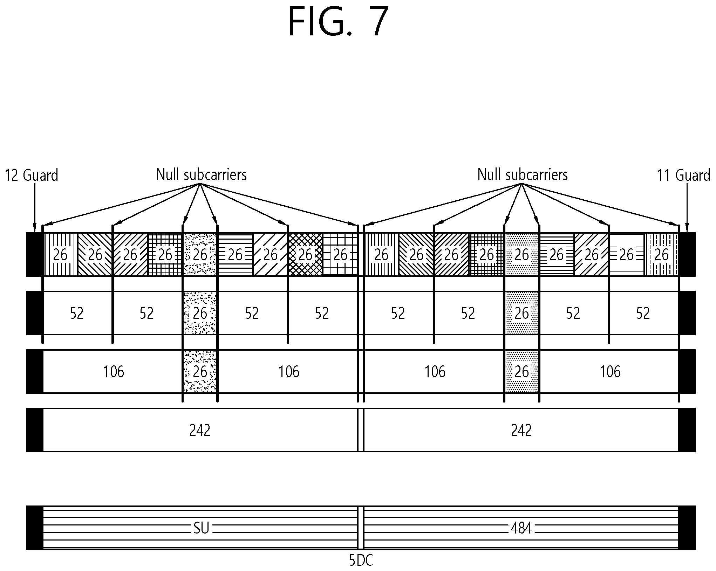

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

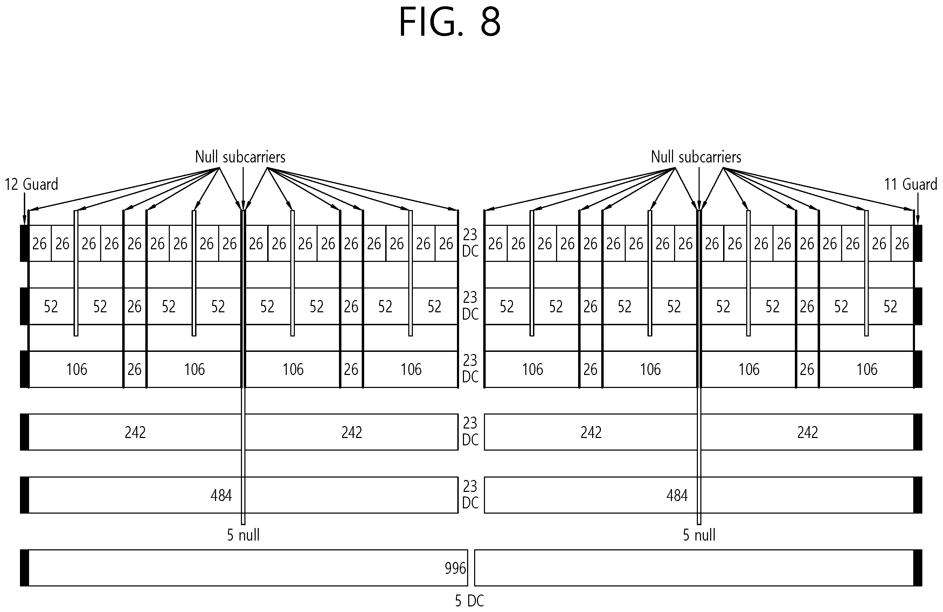

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

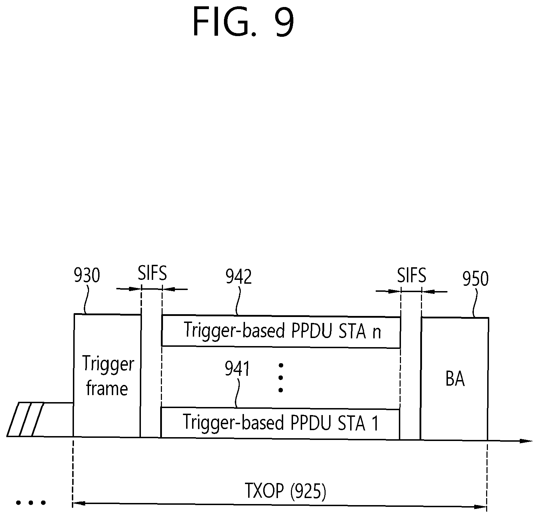

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

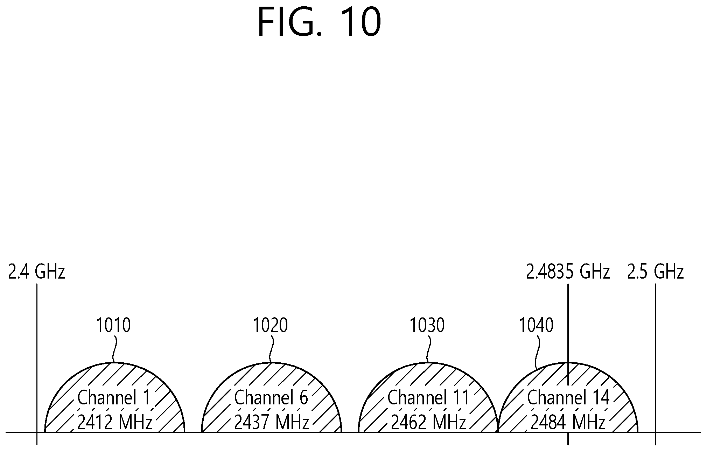

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

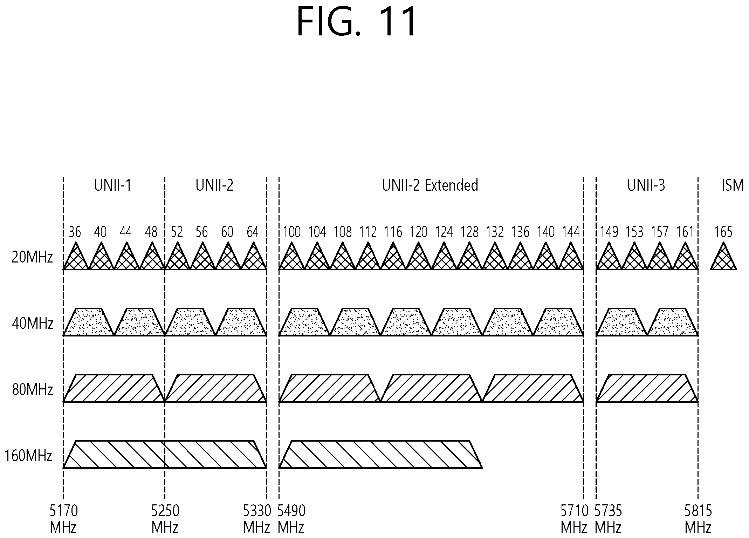

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

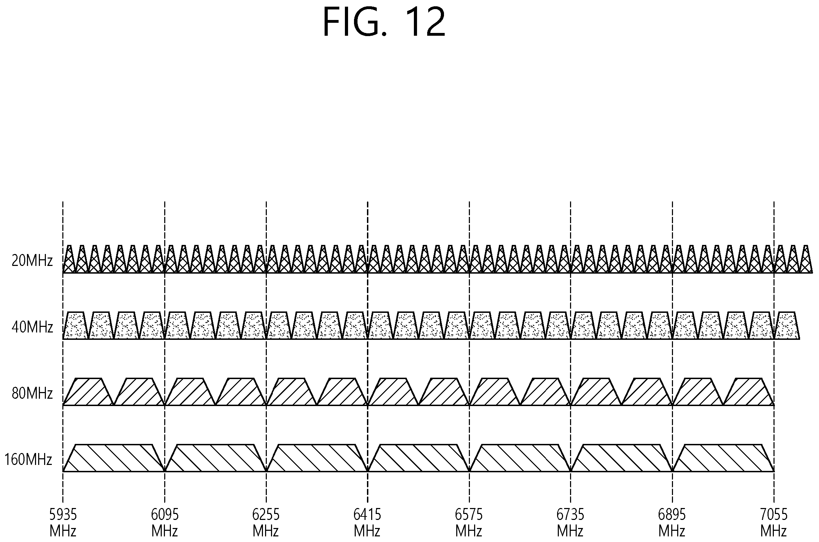

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Hereinafter, the structure and type/subtype of MAC frame are described.

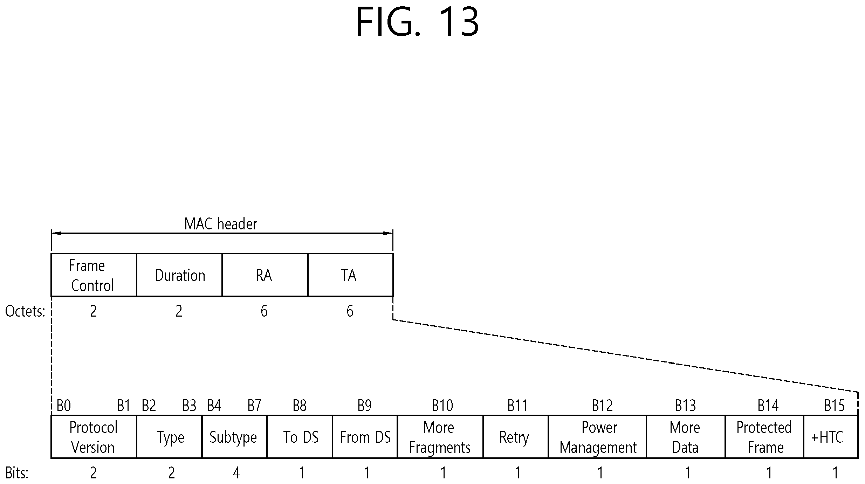

FIG. 13 shows an example of a header of a MAC frame. As shown, the MAC frame can include a frame control field/information of 2 octets in length, a duration field/information of 2 octets in length, an receiver address (RA) field/information of 6 octets in length, and a transmitter address (TA) field/information of 6 octets in length. As shown in FIG. 13, the four fields can be consecutive to each other. The MAC header of FIG. 13 can be modified in various ways, and a new field can be inserted between the four fields shown, or at least one of the fields shown can be omitted.

The MAC header shown in FIG. 13 can be located at the very front of the MAC frame. That is, the MAC frame may include a MAC header as in FIG. 13 and a MAC body field/information that is continuous to the MAC header. The MAC frame including the MAC header of FIG. 13 is inserted/included in the data field of the PPDU (e.g., UHR PPDU) illustrated in FIG. 5.

The MAC frame included in the data field of the PPDU of this disclosure may be classified into various types. For example, the MAC frame of this disclosure may be classified into a control frame, a management frame, and a data frame.

For example, the management frame includes association request, association response, reassociation request, reassociation response, probe request, probe response, beacon, disassociation, authentication, and deauthentication frames/signals defined in the conventional WLAN. For the management frame, the values of the type fields (B3 and B2) of FIG. 8 are set to 00. Also, the values of the subtype fields (B7, B6, B5, B4) of FIG. 8 are as follows: association request (0000), association response (0001), reassociation request (0010), reassociation response (0011), probe request (0100), probe response (0101), beacon (1000), disassociation (1010), authentication (1011), deauthentication (1100).

For example, the control frame includes trigger beamforming report poll, NDP announcement (NDPA), control frame extension, control wrapper, block Ack request (BlockAckReq), Block Ack (BlockAck), PS-Poll, RTS, CTS, Ack, CF-end frames/signals defined in conventional WLAN. For the control frame, the values of the type fields (B3 and B2) of FIG. 8 are set to 01. Also, the values of the subtype fields (B7, B6, B5, B4) of FIG. 8 are as follows: trigger (0010), beamforming report poll (0100), NDP announcement (0101), control frame extension (0110), control wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc. defined in the conventional WLAN. For the management frame, the values of the type fields (B3 and B2) of FIG. 13 are set to 10.

The MAC frame/signal used in this disclosure can be identified through the type field/information and subtype field/information described above. For example, a "trigger frame" in this disclosure may mean a MAC frame in which the type bits B3 and B2 bits in the frame control field of the MAC header are set to 01, and the subtype bits B7, B6, B5, and B4 bits in the frame control field are set to 0010. Various MAC frames described in this disclosure are inserted/included in the data fields of various PPDUs (e.g., HE/VHT/HE/EHT/UHR PPDUs).

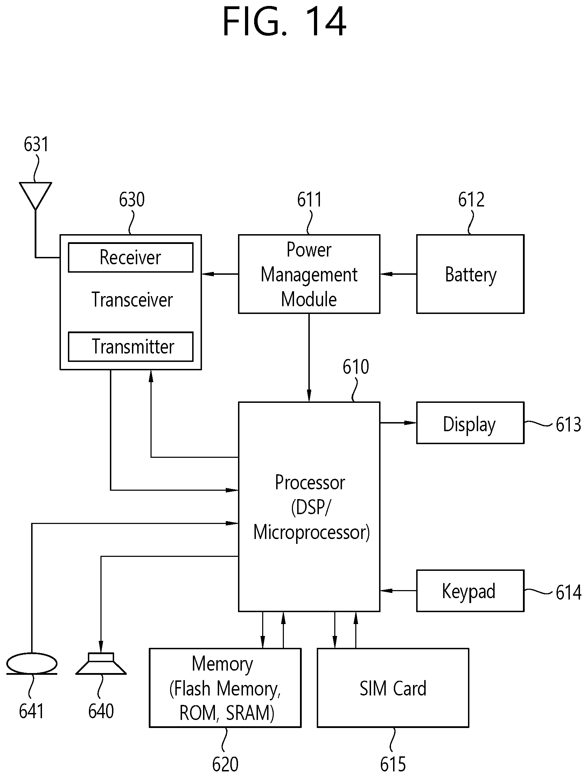

FIG. 14 shows a modified example of a transmitting device and/or a receiving device of the present disclosure.

The devices (e.g., AP STA, non-AP STA) shown in FIGS. 1 to 4 can be modified as shown in FIG. 14. The transceiver 630 of FIG. 14 can be identical to the transceiver 113, 123 of FIG. 1. The transceiver 630 of FIG. 14 can include a receiver and a transmitter.

The processor 610 of FIG. 14 can be identical to the processor 111, 121 of FIG. 1. Alternatively, the processor 610 of FIG. 14 can be identical to the processing chip 114, 124 of FIG. 1.

The memory 150 of FIG. 14 may be the same as the memory 112, 122 of FIG. 1. Alternatively, the memory 150 of FIG. 14 may be a separate external memory different from the memory 112, 122 of FIG. 1.

Referring to FIG. 14, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 14, the speaker (640) may output sound-related results processed by the processor 610. The microphone (641) may receive sound-related input to be used by the processor 610.

### 1. Problems of Conventional Technology (Fast BSS Transition (FT))

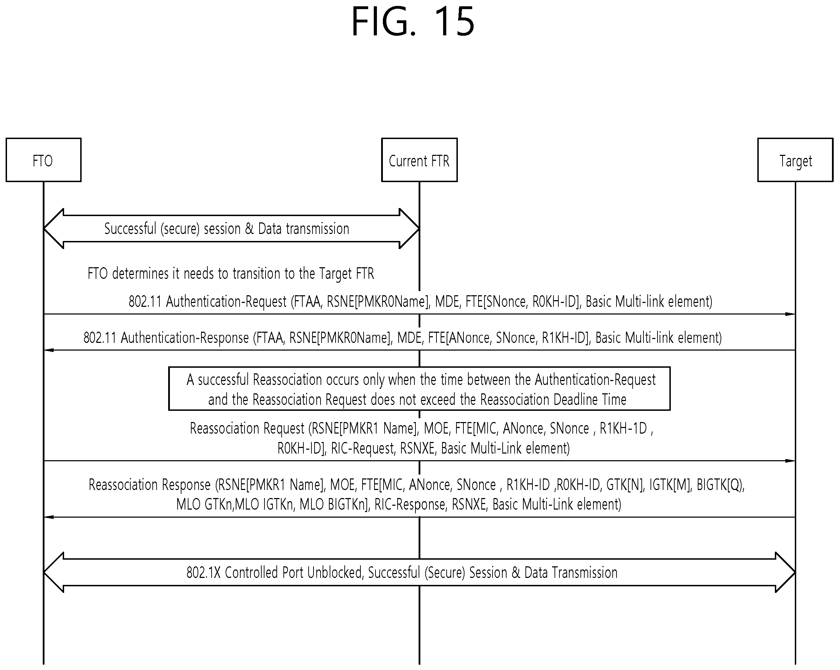

FIG. 15 illustrates an Over-The-Air (OTA) FT protocol in a Robust Security Network (RSN).

Currently, in 802.11, based on a non-AP STA moving (roaming), for example, performing basic service set (BSS) transition from an access point (AP) (Old AP) to another AP (New AP), a reassociation process must be performed in the same mobility domain. A representative example is the fast BSS transition (FT) technology. In FT, as shown in FIG. 15, various processes such as authentication and reassociation are performed with an FT originator (FTO) and a target FT responder (FTR) (for example, a New AP).

After this process, many operational parameters such as agreement, sequence number (SN), enhanced distributed channel access function (EDCAF) parameter, and the like related to block acknowledgment (BA), stream classification service (SCS), and the like are reset. Accordingly, there is an overhead of having to perform agreement/configuration again along with several frame exchanges, and data loss during the FT process may also occur. In addition, seamless roaming, for example, roaming without disconnection from the perspective of a non-AP STA, is not easy. Therefore, the present specification proposes a seamless roaming method utilizing an access point multi-link device (AP MLD) to solve this. Unlike FT, authentication/association processes are not performed again in roaming.

In the present specification, a STA performing BSS transition (for example, roaming) is referred to as an RSTA, and an AP to which the STA is currently associated based on the STA roaming is referred to as an Old AP (O_AP), and an AP to which the STA is to roam is referred to as a New AP (N_AP). In addition, a roaming method proposed in the present specification is referred to as MLD roaming. Designations (names) in the present specification may be changed, and a STA may include an AP STA or a non-AP STA.

### 2. UHR AP MLD Structure for Roaming

### 2.1 General Procedure of Roaming in AP MLD

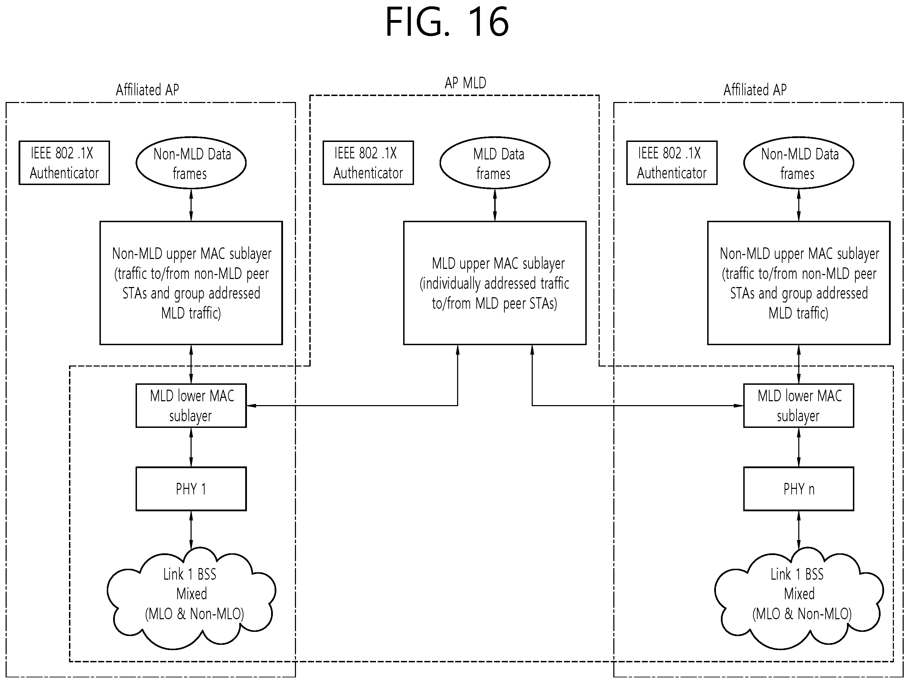

FIG. 16 illustrates a high-level architecture for an AP MLD.

Basically, an access point multi-link device (AP MLD) may include one or more APs, and has a High-level Architecture as shown in FIG. 16. Basically, an MLD may control various procedures/parameters commonly corresponding to multiple APs using an upper medium access control (MAC) sublayer. For example, the corresponding procedures/parameters include authentication, association, sequence number/packet number (SN/PN) assignment, Power save buffering of individually addressed frames and the like.

Therefore, based on using AP MLD functionality, MLD-level parameters may be maintained without being reset based on moving between APs affiliated with the AP MLD (affiliated APs). The present specification proposes an MLD roaming method utilizing the functionality of the AP MLD.

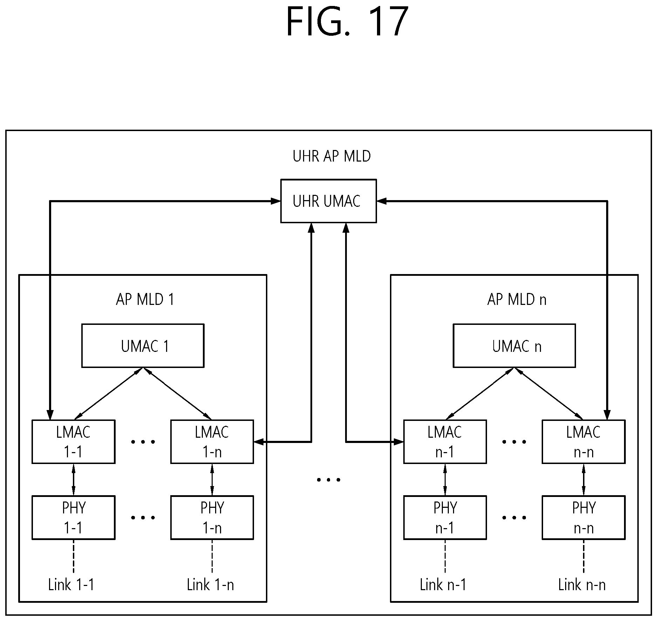

FIG. 17 illustrates an example of a high-level architecture for a UHR AP MLD.

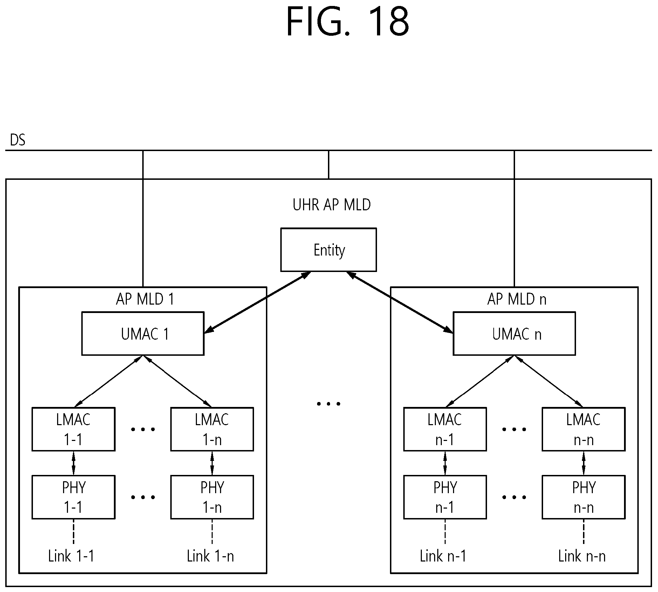

FIG. 17 shows an architecture of APs supporting Seamless Roaming. In order to support Seamless Roaming, compatibility with devices of previous standard versions should be achieved and seamless roaming among many devices should be possible. First, in order to guarantee legacy compatibility with previous devices, non-UHR non-AP STAs should be able to see non-UHR APs. To do so, existing architecture should not be changed without violating a definition of MLD itself. Therefore, as shown in FIG. 17, a UHR AP MLD affiliating MLDs capable of seamless roaming hierarchically while maintaining an architecture of existing MLDs is newly defined. At this time, each LMAC of AP MLDs is interfaced with a UHR UMAC, and functions of a UMAC of an AP MLD performing seamless roaming are managed in the UHR UMAC. A separate entity may manage various functionalities (e.g., multi-link authentication (e.g., PTK), multi-link discovery/setup, multi-link reconfiguration) for roaming between AP MLDs. For example, the present specification does not limit supporting roaming to a UMAC. An example of such a case is shown in FIG. 18. An Entity may manage a control plane context, and may also manage other things based on need. Each of AP MLDs and UHR AP MLDs is individually connected to a Distribution System (DS). Such an architecture may also solve a scalability issue caused by a limitation of a bit size of a Link ID. Basically, a link ID is 4 bits, so only up to 16 Link IDs may be supported. In order to move from one link to another link in roaming, this Link ID is required, and in an existing scheme, the number of APs capable of roaming is limited to 16. To solve this, a Link ID is bound to an AP MLD ID, solving a scalability issue. This is described in more detail in 2.2 described later.

FIG. 18 illustrates another example of a High-level Architecture for a UHR AP MLD.

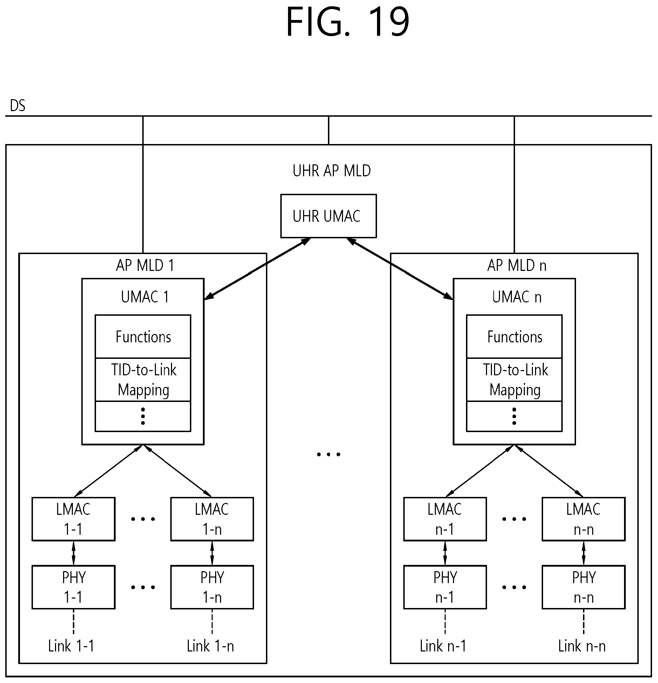

FIG. 19 illustrates another example of a High-level Architecture for a UHR AP MLD.

FIG. 19 shows an example taking an architecture similar to FIG. 17, but having a different interfacing. FIG. 18 is interfaced with TID-to-Link Mapping among functions of a UMAC, rather than an LMAC of an AP MLD and a UHR UMAC being directly connected. Such an architecture may perform TID-to-Link Mapping individually in a UMAC of an AP MLD or may perform it in a UHR UMAC. Each of AP MLDs and UHR AP MLDs is individually connected to a DS. Utilization methods in this architecture and the type and number of functions interfaced with a UHR UMAC are not limited.

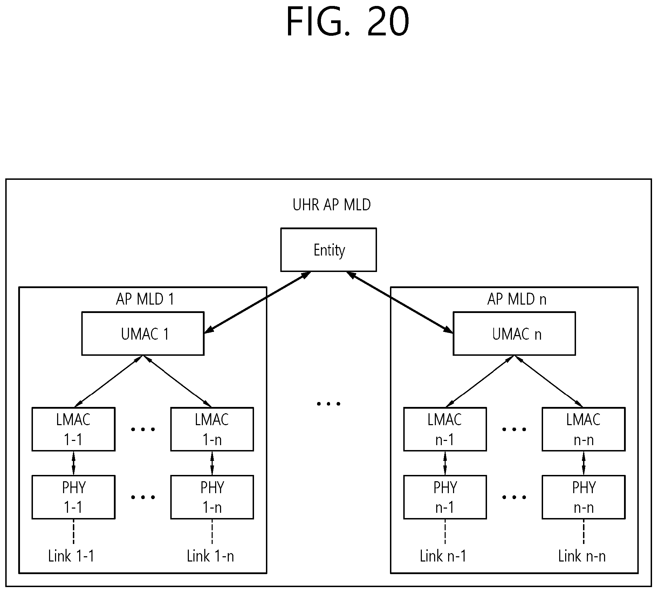

FIG. 20 illustrates an example of a High-level Architecture based on a case where there is only an entity that is not MLD based.

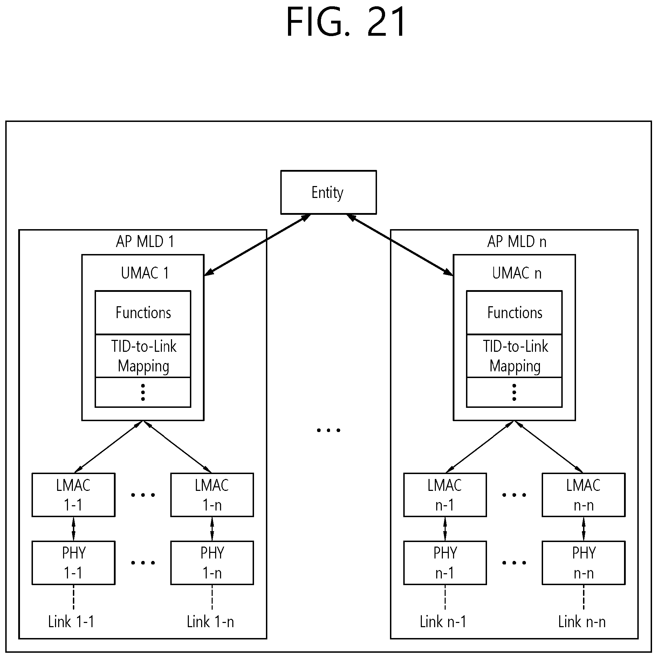

FIG. 21 illustrates another example of a High-level Architecture based on a case where there is only an entity that is not MLD based.

An Entity in FIG. 18, FIG. 20 and FIG. 21 has functionalities for roaming. AP MLDs capable of roaming are connected to one same Entity, and association, authentication, link setup, etc. may be performed with this Entity. The Entity also manages control plane contexts. A group may be formed with AP MLDs capable of roaming in a concept of a domain, and at this time, one or more entities may exist in one domain. Contexts that should be shared between APs in order for a non-AP STA to perform Seamless Roaming are managed.

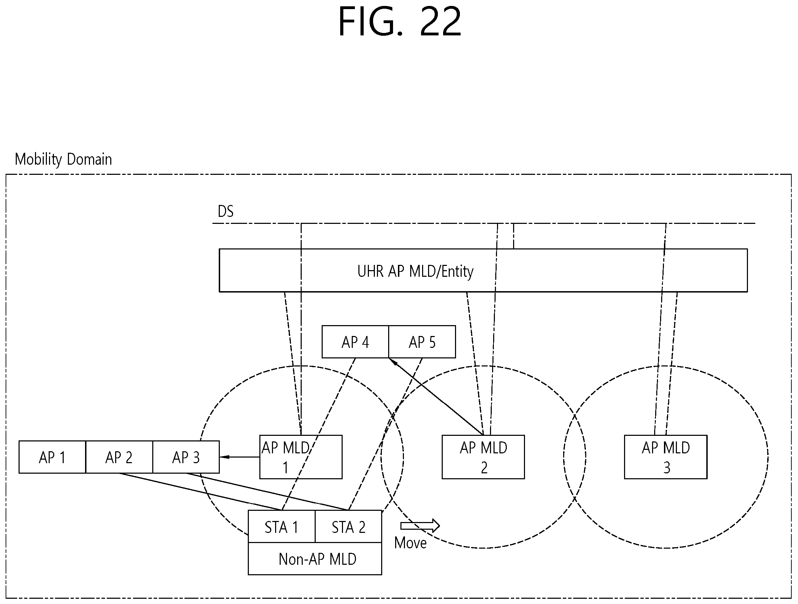

FIG. 22 illustrates an example of a roaming architecture in an AP MLD area.

FIG. 22 shows a structure and a process for basic roaming.

Each AP MLD is located at a different position (for example, non-collocated), and APs belonging to each AP MLD are at the same or similar positions (for example, collocated). This "collocated" may mean that they belong to completely the same physical device, or it may mean that they are at logically similar positions even based on not belonging to a physical device. Basically, since an AP MLD is a logical entity, it may be any one physical device, but it includes affiliated APs regardless of position and may operate as an MLD to which multi-link operation (MLO) may be applied. Eventually, all APs belonging to each AP MLD become affiliated APs of one AP MLD. For example, AP MLD 1 of FIG. 22 includes affiliated AP 1, 2 and 3.

Based on FIG. 22, based on a non-AP MLD moving, it will usually perform roaming from one AP MLD to another AP MLD. For example, based on the non-AP MLD having a multi-link setup with an AP MLD and each STA 1 and STA 2 being connected to AP 2 and AP 3 of AP MLD 1, based on performing roaming to AP MLD 2, STA 1 may be connected to AP 4 and STA 2 may be connected to AP 5. In this case, each STA may temporarily establish an association with AP 4 and AP 5 so that AP 4 and AP 5 may transmit a frame to each STA during a roaming process.

For reference, in FIG. 22, this architecture may be applied to a non-AP MLD having one affiliated STA or a non-AP STA that is not an MLD, rather than a non-AP MLD having multiple affiliated STAs.

However, only movement between different AP MLDs is not necessarily considered as roaming. For example, an AP may be changed through roaming even within one AP MLD.

For example, a UHR AP MLD (or a roaming-capable group) affiliates at least one (extreme high throughput (EHT)) AP MLD, and each AP MLD is non-collocated, and APs belonging to each AP MLD are collocated.

Generally, a non-AP MLD (or STA) performs roaming from one AP MLD to another AP MLD (it is said that an AP may be changed through roaming even within a specific AP MLD).

Based on an AP being changed within an AP MLD, roaming may be considered as a method of changing a link while maintaining a multi-link setup without entirely tearing down a conventional multi-link setup.

Based on an AP being changed within an AP MLD, roaming may be considered as a method of changing a link while maintaining a multi-link setup without entirely tearing down a conventional multi-link setup.

These processes may be configured with a) an announcement process and b) a frame exchange.
a) Announcement process: Each AP of an AP MLD announces information related to roaming APs within the AP MLD to STAs whether MLD roaming proposed in the present specification may be performed.
b) Frame exchange process: This is a process of exchanging a frame that may trigger MLD roaming. Based on the frame exchange being completed, MLD roaming is completed based on negotiated information, and an operation is no longer performed with an O_AP and an operation is performed with a N_AP.

In particular, the present specification proposes using the following method for MLD roaming.
- One or more STAs belonging to one non-AP MLD may each have one radio and setup multiple links. Therefore, it is proposed to use a method in which one STA adds and deletes a link. Accordingly, two or more links may be connected to one STA.
- However, based on a frame exchange being performed on only one link and a frame exchange not being able to be performed on the remaining links, a doze state or a disable state occurs.
- Basically, for this, the non-AP MLD informs whether the capability described above is possible based on transmitting a management frame including a basic multi-link ML IE, for example, in an association request frame during ML setup. This may be included in an MLD capabilities and operations subfield of a common info field if all STAs are capable, or in a link info field if only some STAs are capable. Information to be included is as follows.
   => Single-radio ML setup enabled: Information that STAs in one non-AP MLD may each have one radio and setup multiple links. Therefore, it means that two or more links may be connected to one STA.

### 2.2 Announcement Process for MLD Roaming

Each AP of each AP MLD may announce whether roaming proposed in the present specification is possible (for example, whether the above-described b) frame exchange is possible). Information that may be commonly transmitted for all APs may inform whether an AP belongs to a UHR AP MLD or an Entity, and in detail, may announce which UHR AP MLD/Entity it belongs to and collocation information, etc. Based on an architecture type affiliated with a UHR AP MLD, whether it is affiliated with a UHR AP MLD and UHR AP MLD ID information may be used, and based on an architecture type using an Entity, whether it is connected to an Entity and information identifying an Entity such as an Entity ID may be included. Relevant information is as follows, and at least one or more may be included.

MLD Roaming enabled: An indicator for whether roaming is possible (for example, it may be indicated by 1 bit). Based on a case of being affiliated with the same UHR AP MLD or connected to the same entity, roaming is possible. Based on an AP affiliated with another UHR AP MLD or belonging to another entity, for example, another mobility domain, roaming cannot be performed, and this may be indicated by an MLD Roaming enabled bit.

UHR AP MLD ID/Entity ID: An ID distinguishing a UHR AP MLD or an entity presented above. A configuration for this UHR AP MLD ID/Entity ID is as follows.

### A. ID Configuration for Roaming in AP MLD

Basically, an ID may be assigned to a UHR AP MLD affiliating AP MLDs that are collocated. In the present specification, this is referred to as a UHR AP MLD ID. Such a UHR AP MLD ID may be unique within a UHR AP MLD or a unique ID may be assigned to a UHR AP MLD within an entire network. Defining a UHR AP MLD ID to distinguish a UHR AP MLD may solve a scalability problem occurring based on a limited number of links and help identify more APs.

### A-1) Unique ID Configuration within UHR AP MLD in a Network

The present section proposes a method in which a UHR AP MLD ID is unique within one network. Basically, the UHR AP MLD ID may be assigned values such as 0, 1, 2, .. and the like. For example, based on the UHR AP MLD ID having 4 bits, it may have values of 0 to 15, and based on it having 8 bits, it may have values of 0 to 127, and this size may be changed. The following describes a meaning of each UHR AP MLD ID.
1) Based on the UHR AP MLD ID being 0: In this case, it may be known that APs having this UHR AP MLD ID correspond to APs belonging to an AP MLD belonging to the same UHR AP MLD. For example, based on a non-AP MLD (or STA) recognizing this, it may be recognized that corresponding APs currently belong to the same UHR AP MLD. Therefore, roaming is possible only based on the UHR AP MLD ID being 0. In addition, since other APs (a transmitted BSSID (TxBSSID) or a nontransmitted BSSID (NonTxBSSID)) of a multiple basic service set ID (multiple BSSID) set to which each AP belonging to this UHR AP MLD belongs also use the same physical resource, this UHR AP MLD ID is assigned. However, an AP MLD ID of an AP MLD to which these APs belong (TxBSSID or NonTxBSSID) may be different.

Other UHR AP MLD IDs are mapped to be uniquely recognized for each UHR AP MLD.

### A-2) Unique ID Configuration within AP MLD

The present section proposes a method of assigning a unique ID to APs capable of roaming within an entire UHR AP MLD.
- Temporary link addition/deletion: Indicates whether a link may be temporarily added to or removed from one STA. For example, it means supporting one STA to have two or more links for a certain period of duration (for example, indicated by 1 bit).
- Collocation enabled: Indicates whether AP MLDs are collocated with each other (for example, indicated by 1 bit).
   => Based on Collocation enabled = 1, it means that a corresponding AP and a reporting AP are physically close. Therefore, based on being able to communicate with a conventionally connected AP without moving to an AP set to 1, roaming may not be performed if Collocation enabled is set to 1 among neighboring APs. For example, an MLD roaming request/response is not transmitted to or received from an AP with Collocation enabled = 1.
- Collocation ID: An ID for distinguishing collocated AP MLDs. A configuration for this collocation ID is as follows.

### B. Collocation ID Configuration for Roaming in UHR AP MLD

Basically, an ID may be assigned to collocated AP MLDs. In the present specification, this is referred to as a collocation ID. Such a collocation ID may be unique within one collocated AP MLD set as follows or a unique ID may be assigned to a collocated AP MLD within a UHR AP MLD.

### B-1. Unique Collocation ID Configuration within the Collocation Set in UHR AP MLD

The present section proposes a method in which a collocation ID is unique within one collocated AP MLD set. Basically, the collocation ID may be assigned values such as 0, 1, 2, .. and the like. For example, based on the collocation ID having 4 bits, it may have values of 0 to 15, and based on it having 8 bits, it may have values of 0 to 127, and this size may be changed. The following describes a meaning of each collocation ID.
=> Based on the Collocation ID being 0: In this case, APs having this Collocation ID may be considered as APs belonging to the same collocated AP MLD set. For example, based on an MLD (or STA) recognizing this, it may be recognized that the corresponding APs are currently collocated. In addition, since other APs (TxBSSID or NonTxBSSID) of a multiple BSSID set to which each AP belonging to this set belongs also use the same physical resource, this Collocation ID is assigned. However, an AP MLD ID of an AP MLD (TxBSSID or NonTxBSSID) to which these APs belong may be different.

Multiple AP MLDs may be included in a set of APs having the same Collocation ID.

Other Collocation IDs are mapped to be uniquely recognized for each collocated AP MLD set.

### B-2) Unique Collocation ID Configuration within UHR AP MLD

The present section proposes a method of assigning a unique Collocation ID within a collocated AP MLD set in a UHR AP MLD. Basically, the Collocation ID may be assigned values such as 0, 1, 2, .. and the like. For example, based on the Collocation ID having 4 bits, it may have values of 0 to 15, and based on it having 8 bits, it may have values of 0 to 127, and this size may be changed.

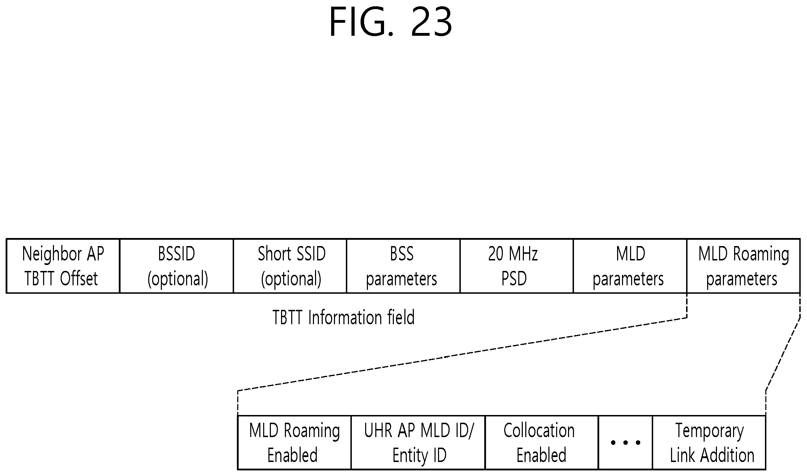

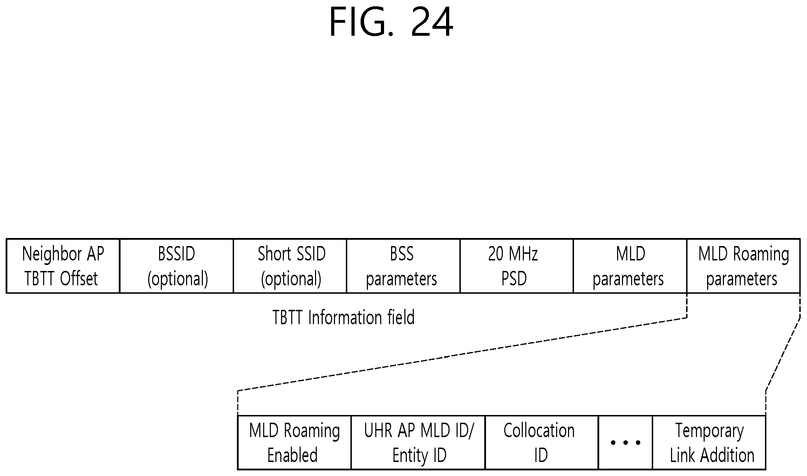

The above information may be included in a Management (MGMT) frame such as a beacon or a probe response, and may be included in an MLD Roaming IE including new MLD roaming information or a conventional Reduced Neighbor Report (RNR) Information Element (IE). The following is an example based on being included in the RNR IE. Basically, for each AP, the corresponding information may be included in a TBTT Information field. In the MLD Roaming parameters, at least one or more fields added in FIG. 23 and FIG. 24 are included, and may be included as shown in FIG. 23 and FIG. 24. In addition to FIG. 23 and FIG. 24, at least one or more of all fields defined in the present specification are included.

FIG. 23 shows an example of an RNR IE.

Non-AP STA transmits and receives an MLD Roaming Request/Response only to APs with Collocation Enabled = 0 through an RNR IE.

FIG. 24 shows another example of an RNR IE.

Non-AP STA transmits and receives an MLD Roaming Request/Response only to APs with Collocation ID ≠0 through an RNR IE.

As shown in FIG. 23 and FIG. 24, based on the size of the conventional MLD Parameters subfield not being sufficient, information may be included by creating a new MLD Roaming Parameters subfield in the RNR IE. The conventional size may be changed, but there is a problem that this may cause a decoding issue for an 802.11be STA. In this case, based on the inclusion of MLD Roaming Parameters itself meaning that MLD roaming is possible, MLD Roaming Enabled may not be included in the MLD Roaming Parameters subfield.

In the RNR IE, as shown in FIG. 23, overhead may be reduced by sending only whether another AP is collocated or non-collocated with an AP currently sending a Beacon or a Probe Response through a Collocation Enabled field. In addition, as shown in FIG. 24, it may be informed which AP is included in which Collocation set by informing a Collocation ID of the AP. The RNR IE may include only one of a Collocation Enabled field or a Collocation ID or may include both.

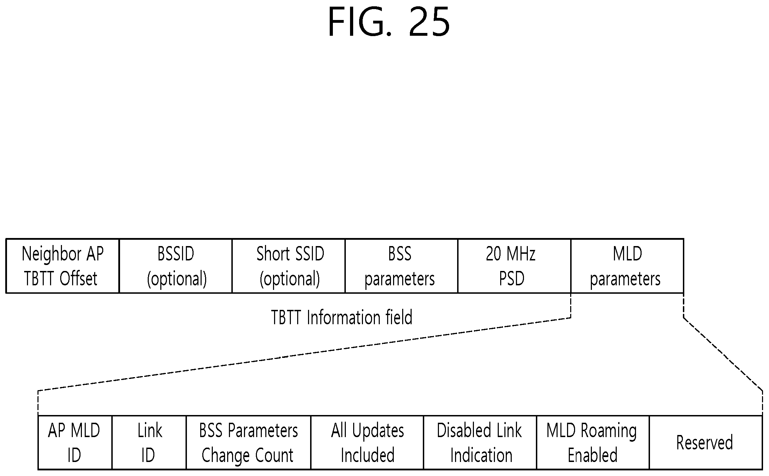

FIG. 25 shows still another example of an RNR IE.

Based on including only whether MLD roaming is possible as shown in FIG. 25, the MLD Roaming Enabled may be indicated using a conventional MLD Parameters subfield. Other information may be included as a separate Parameter as shown in FIG. 23.

### 2.3 Recommendation of Roaming APs

Based on MLD Roaming enabled of RNR IE, a non-AP MLD requests information on APs to which it wants to roam through a Multi-Link Probe Request for the enabled APs, and whether the AP is suitable for roaming may be informed through a Multi-Link Probe Response as a response thereto. Based on sending an ML Probe request frame to roam to a corresponding AP, MLD Roaming enabled may be set to 1.

### 2.3.1 AP Recommendation ML Probe Request frame format

An AP Roaming Recommend enabled field may be added to reduce overhead that may occur based on an AP unnecessarily performing AP Recommendation in a case of a Probe Request not for roaming.

### 1) Case of being included in a Common Info field

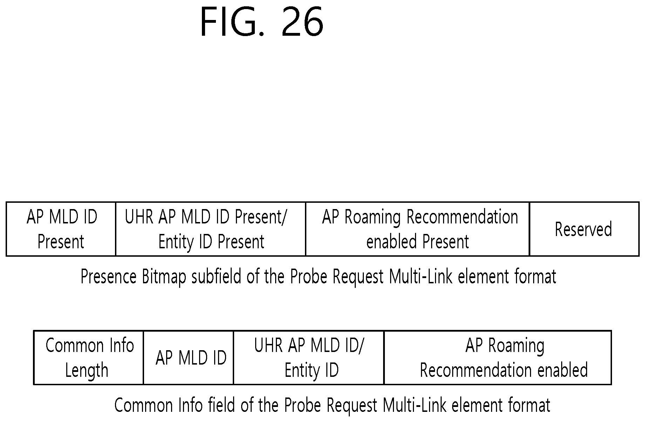

FIG. 26 illustrates an example of an AP Roaming Recommendation enabled field and a Roaming Reason Code field in a Common Info field.

Whether AP Roaming Recommendation enabled is included may be indicated through a Presence Bitmap. Based on including only in a Common Info field, it is a case based on requesting information on all APs transmitting a Probe Request in order to perform Roaming. For example, based on at least one or more APs being included in an ML Probe Request frame in order to perform another operation such as Association instead of Roaming, an AP Roaming Recommendation enabled field is not added to Common Info.

Based on a case where an STA requests recommendation for one or more AP MLDs, an AP MLD ID field is not included, so that recommendation may be requested for APs of one or more AP MLDs affiliated with the same SMD or UHR AP MLD.

Based on sending a list of APs capable of roaming by a non-AP STA prior to performing roaming, a Roaming Reason Code is set, so that a reason why the non-AP STA performs roaming may be informed to an AP. At this time, a Probe Request Multi-Link element is added to a Link Reconfiguration Notify Request frame, so that an AP may refer to this Roaming Reason Code based on determining APs to recommend to the non-AP STA.

Based on a case where a Roaming Reason Code exists in a Link Reconfiguration Notify Request frame, it is not included in a Probe Request Multi-Link element. Based on a case where reasons for requesting roaming for all links are identical, overhead may be reduced by including it in a Common Info field. Setting values of the Roaming Reason Code are described in Table 2.

Additionally, in order to reduce overhead, an AP Roaming Recommendation enabled Present field is omitted in a Presence field, and an AP Roaming Recommendation enabled field may be added only to a Common Info field.

### 2) Case of being included in a Link Info field

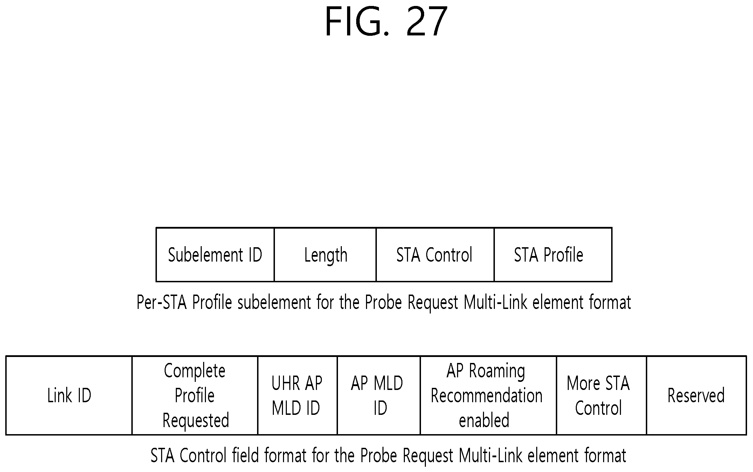

FIG. 27 illustrates an example of an AP Roaming Recommendation enabled field in a Link Info field.

A case of including in a Link Info field is a case of requesting information on APs individually in order to perform roaming. Based on a case where at least one or more APs are included in an ML Probe Request frame in order to perform another operation such as Association rather than Roaming, an AP Roaming Recommendation enabled field may be added to Link Info. Based on recommending individually rather than recommending for all AP MLDs belonging to one UHR AP MLD or Entity, an AP MLD ID of a Common Info field is not used, but a UHR AP MLD and an AP MLD ID of a STA Control field are used, so that AP MLDs recommending for one or more AP MLDs may be informed.

Based on a case of recommending for one or more AP MLDs, recommendation may be performed by repeatedly including a Link Info field. At this time, two methods exist to read a last field of a Per-STA Profile and know a fact that another Per-STA Profile for another AP MLD comes after that. A first method may know how many Per-STA Profiles in total exist through a number stored in a field of Number of Per-STA profile(s) in a Common Info field, for example, how many AP MLDs recommended are recommended, and may know that Per-STA Profiles of that number exist. Therefore, Per-STA Profiles of this number are decoded. A second method may use a More STA Control field of a Per-STA Profile. Based on More STA Control being set to 1, it may be known that another Per-STA Profile exists behind a Per-STA Profile currently being decoded. Based on a case of a Per-STA Profile in which a More STA Control field is 0, it may be known that it is information on a last AP MLD among Recommended AP MLDs.

Based on a case of not including a Link Info field, it may be known that recommendation is requested for all STAs affiliated with a corresponding non-AP MLD.

### 2.3.2 AP Recommendation ML Probe Response frame format

Based on MLD Roaming enabled, a non-AP MLD requests information on APs to which it wants to roam through a Multi-Link Probe Request for the enabled APs, and it may be informed whether the AP is suitable for roaming as a response thereto.

A Recommended AP List of a Probe Response frame is added and includes a list of Link IDs for APs suitable for roaming.

### 2.3.3. AP Recommendation Link Reconfiguration Notify Request frame

A non-AP MLD may transmit a Link Reconfiguration Notify Request frame by individually sending the Link Reconfiguration Notify Request frame to a UHR AP MLD without waiting based on receiving a Link Reconfiguration Notify frame for AP recommendation from the UHR AP MLD. At this time, a reason for requesting roaming may be informed through a Roaming Reason Code. Setting values of the Roaming Reason Code are described in Table 2. Based on a non-AP STA informing the AP of the reason for roaming in this manner, the AP may recommend a more suitable AP. Based on the Roaming Reason Code being included in a Probe Request Multi-Link element, it is not included in the Link Reconfiguration Notify Request frame. In addition, based on the reason for performing roaming being different for each link, it is not included in the Link Reconfiguration Notify Request frame.

**[Table 1]**

| Order | Meaning |
|---|---|
| 1 | Category |
| 2 | Protected UHR Action |
| 3 | Dialog Token |
| 4 | Probe Request element or Reconfiguration Multi-Link element |
| 5 | Roaming Reason Code (Optional) |

**[Table 2]**

| Roaming Reason Value | Description |
|---|---|
| 0 | Unspecified |
| 1 | Excessive frame loss rates and/or poor conditions |
| 2 | Excessive delay for current traffic streams |
| 3 | Insufficient QoS capacity for current traffic streams |
| 4 | Better link found |
| 5 | Better AP found |
| 6 | Received too many replay counter failures |
| 7 | Received too many data MIC failures |
| 8 | Exceeded maximum number of retransmissions |
| 9 | Received too many broadcast disassociations |
| 10 | Received too many broadcast de-authentications |
| 11 | Previous roaming failed |
| 12 | Low RSSI |
| 13 | Transition due to received Roaming Request frame |
| 14 | Preferred Roaming List of Recommendation included |
| 15 - 255 | Reserved |

### 2.3.4. AP Recommendation Link Reconfiguration Notify frame

Based on using a Link Reconfiguration Notify frame instead of an ML Probe Request/Response frame, a UHR AP MLD may inform a non-AP MLD of a link good for performing Roaming. Table 3 below illustrates an example of a format of a Link Reconfiguration Notify frame Action field.

**[Table 3]**

| Order | Meaning |
|---|---|
| 1 | Category |
| 2 | Protected UHR Action |
| 3 | Dialog Token |
| 4 | Probe Request element |
| 5 | Roaming Reason Code (Optional) |

Order 4: For information required based on performing Link Recommendation, a Reconfiguration Multi-link IE defined in existing 802.11be may be utilized. A Reconfiguration ML element may recommend to delete or add for one link as one STA Profile, but based on such a case, since recommendation may not be made regarding a plurality of links, in order to increase efficiency, recommendation may be made for a plurality of links based on including one or more STA Profile subelements. At this time, a UHR AP MLD may inform of an AP preference most suitable to move to among APs to roam. This may be indicated in a STA Profile order or may be informed through an Add/Delete Link ID list field. Based on informing in the order of STA Profile, a link to delete or add first may be positioned first, and then, may be positioned in order of next highest preference. Similarly, based on informing through the Add/Delete Link ID list field, a link to delete or add first may be positioned first in a list of links, and then, may be positioned in order of next highest preference.

Order 5: Based on a non-AP STA transmitting a Reconfiguration Notify Request frame first and not including a Roaming Reason Code, or based on transmitting a Reconfiguration Notify frame without receiving a Reconfiguration Notify Request frame, a Reconfiguration Notify frame may be transmitted based on including a Roaming Reason Code.

### 2.4 Frame exchange process for MLD Roaming

Basically, in order for MLD roaming to be triggered, a frame exchange between a Non-AP MLD (or STA) and an AP MLD is required. Here, a MGMT frame may be utilized as the frame, and in particular, an Action frame, which is a type of MGMT frame, may be utilized. Here, the frame is referred to as follows.
- A frame in which a STA requests MLD roaming from an AP may be called an MLD Roaming Request frame.
- A frame in which an AP requests MLD roaming from a STA may be called an MLD Roaming Response frame.

### 2.4.1 MLD Roaming Request frame format

An MLD Roaming Request frame format may be configured in the following order.

**[Table 4]**

| Order | Information |
|---|---|
| 1 | Category |
| 2 | UHR Action or Protected UHR Action |
| 3 | Dialog Token |
| 4 | Reconfiguration Multi-Link element |
| 5 | Context Transfer Level |

Order 1: Basically, a Category may be included in a new UHR Action or a Protected UHR Action, and is not limited thereto.

Order 4: Based on an MLD Roaming request, a Reconfiguration Multi-link IE defined in conventional 802.11be may be utilized for information required.
- A modified Reconfiguration Multi-link IE is as follows.

Order 5: Based on requesting MLD roaming, a degree to which context transfer is required or possible may be indicated by setting a bit value of a Context Transfer Level.

### 1) Common Info field

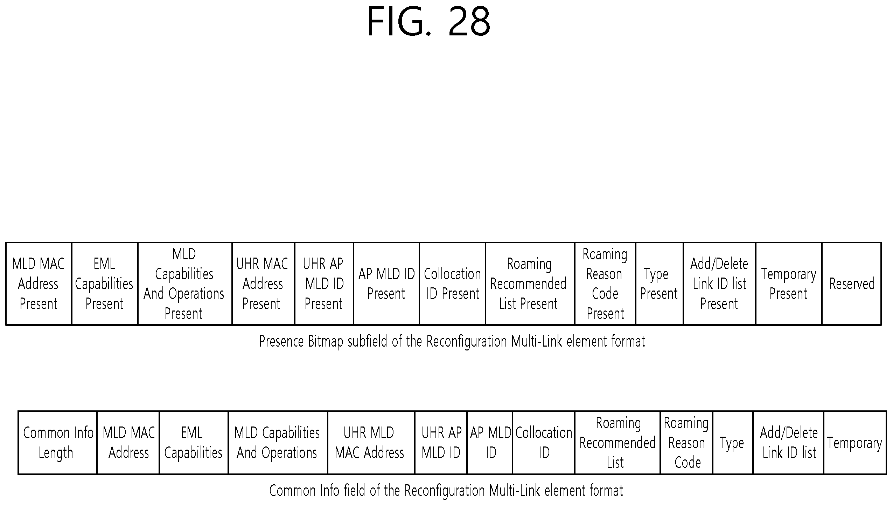

FIG. 28 illustrates an example of a common info field of a Reconfiguration Multi-ink IE proposed in the present embodiment.

Based on moving to a new AP, from a viewpoint of a STA, particularly a non-AP MLD, based on one or more STAs simultaneously performing MLD Roaming, MLD capabilities and operation or EML Capabilities may change, and thus such information may be additionally included in a Common Info field. As in the existing, whether a subfield of the Common Info field is present is determined in a Presence Bitmap.

Based on a Reconfiguration Multi-Link IE being included in a Reconfiguration Notify Request frame or based on delivering a Roaming Reason Code through a Reconfiguration Notify frame, the Roaming Reason Code may be included in the Reconfiguration Multi-Link IE. At this time, based on reasons for requesting Roaming for all links being the same, the Roaming Reason Code is included in the Common Info field and the Roaming Reason Code has a value of Table 2.

### 2) Link Info field

As mentioned in 1), based on one or more STAs simultaneously performing MLD Roaming, one or more Per-STA Profile subelements may be required.

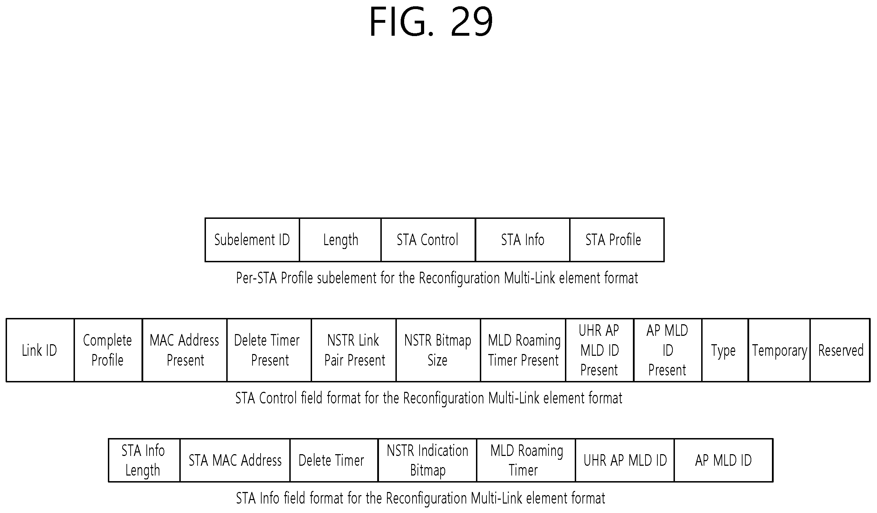

FIG. 29 illustrates an example of a link info field of a Reconfiguration Multi-ink IE proposed in the present embodiment.
- Basically, based on transitioning to another AP, an NSTR indication bitmap may be included in a STA Info field because information on whether each link is simultaneous transmission and receive (STR) or non-STR (NSTR) may be changed from the perspective of a non-AP MLD. Likewise, as in the conventional case, existence of subfields of the STA Info may be determined by Present subfields of a STA Control.
- Here, a Link ID is indicated by a Link ID corresponding to an N_AP.
- A Complete Profile means all information included based on transmitting an Association Request frame, for example, complete information of a STA as in the conventional case. However, since this is a case where a conventional STA moves instead of a new STA, capabilities or operational parameters for the STA may not be changed. Based on an AP MLD already knowing this, it may be used as an indication including only changed information instead of the Complete Profile.
   => For example, as in the conventional case, based on Complete Profile = 0 which is a Partial Profile, only information to be changed (for example, field/IE) based on moving to the N_AP is included in the STA Profile. Alternatively, by referring to the Complete Profile as a Changed Profile, based on this value being 1, only information to be changed (for example, field/IE) based on moving to the N_AP is included in the STA Profile.
- An MLD Roaming Timer means a time at which MLD roaming is completed and operation is no longer performed with an O_AP and operation is performed with an N_AP. For example, it may mean a remaining time until an expected time to switch to an AP to roam. This is related to a TIM field described later in 2.5.
   => Based on applying the MLD Roaming timer commonly to all APs, it may be included in a Common Info field differently from FIG. 23. At this time, existence of the MLD Roaming timer within the Common Info field may be indicated through a Presence Bitmap.

Since this is information transmitted by a STA, it may be interpreted as a reference to an AP MLD.
- A UHR AP MLD ID, an AP MLD ID and a Collocation ID may be additionally included in the above-described information based on FIG. 25 and FIG. 26 as follows. The AP MLD ID is an ID of an AP MLD to which APs to which a non-AP MLD (or STA) is to roam belong, and the UHR AP MLD ID is an ID of a UHR AP MLD to which AP MLDs to which APs to which a non-AP MLD (or STA) is to roam belong. Based on a situation in which an AP MLD checks a UHR AP MLD ID in advance through a beacon or probe request/response process and sends a roaming request only to the same UHR AP MLD, a UHR AP MLD ID field may not exist in a Reconfiguration Multi-link element. Such a case is described in case 2 of being included in a 1-2) Common Info field, case 2 of being included in a 2-2) Link Info field - a case of always existing, and case 2 of being included in a 3-2) Link Info field - a case of not always existing.

For example, a format according to whether to always include a UHR AP MLD ID, an AP MLD ID and a Collocation ID in a Reconfiguration Multi-link IE is described.

### 1-1) Case 1 of being included in a Common Info field

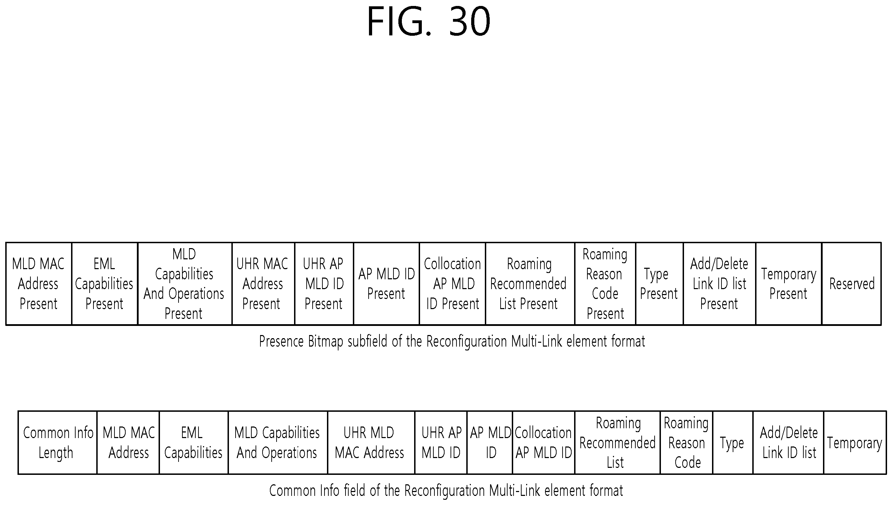

FIG. 30 illustrates an example in which a UHR AP MLD ID and an AP MLD ID are included in a common info field of a Reconfiguration Multi-ink IE proposed in the present embodiment.

This may indicate whether a UHR AP MLD ID, an AP MLD ID and a Collocation ID are included through a Presence Bitmap. Based on including them only in a Common Info field, roaming may be requested only to APs having the same UHR AP MLD ID, AP MLD ID and Collocation ID. For example, even within the same UHR AP MLD, requests cannot be made for multiple AP MLD IDs and multiple Collocation IDs. For example, one or more STAs cannot request reconfiguration to an AP belonging to an AP MLD different from an AP of an AP MLD. However, based on roaming to the same AP MLD being a general case, overhead may be reduced compared to a case of including them in each Link Info field below.

### 1-2) Case 2 of being included in a Common Info field

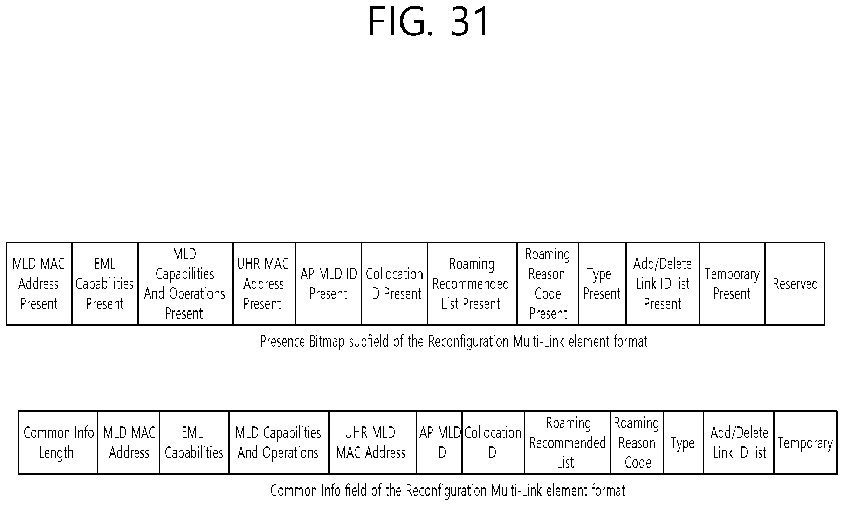

FIG. 31 illustrates an example in which an AP MLD ID is included in a common info field of a Reconfiguration Multi-ink IE proposed in the present embodiment.

Based on a STA and an AP checking and recognizing that a UHR AP MLD with which an N_AP and an O_AP are affiliated is the same through a previous association process, there is no need to transmit a UHR AP MLD ID, and thus overhead may be reduced without separately adding a UHR AP MLD ID field as shown in FIG. 28. A method of including fields is the same as case 1 of being included in a 1-1) Common Info field, with an exception of whether a UHR AP MLD ID field is included.

### 2-1) Case 1 of being included in a Link Info field - a case of always existing

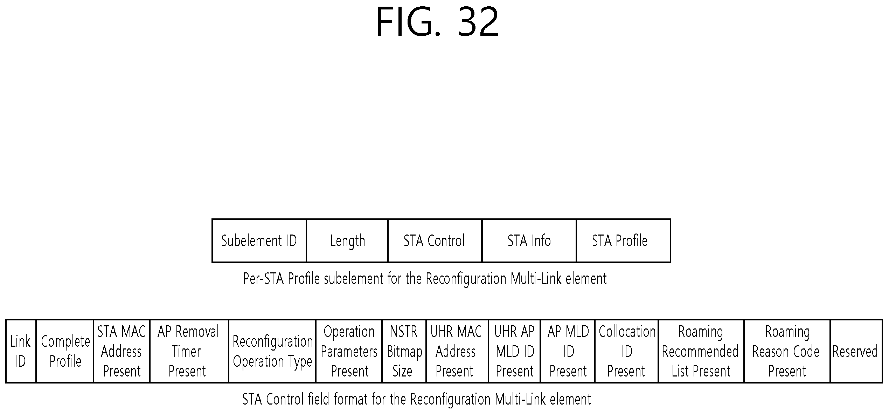

FIG. 32 illustrates an example in which a UHR AP MLD ID and an AP MLD ID are included in a link info field of a Reconfiguration Multi-ink IE proposed in the present embodiment.

A Link Info field may include multiple Per-STA Profile subelements, and each may indicate a roaming request for one AP through a Link ID. An AP to which a STA intends to roam may be distinguished through an AP MLD ID and a UHR AP MLD ID of a STA Control field of the Per-STA Profile subelement. This may request roaming for multiple APs corresponding to multiple AP MLD IDs, but based on requesting for the same AP MLD ID, overhead is larger than a method of indicating in a Common Info field.

### 2-2) Case 2 of being included in a Link Info field - a case of always existing

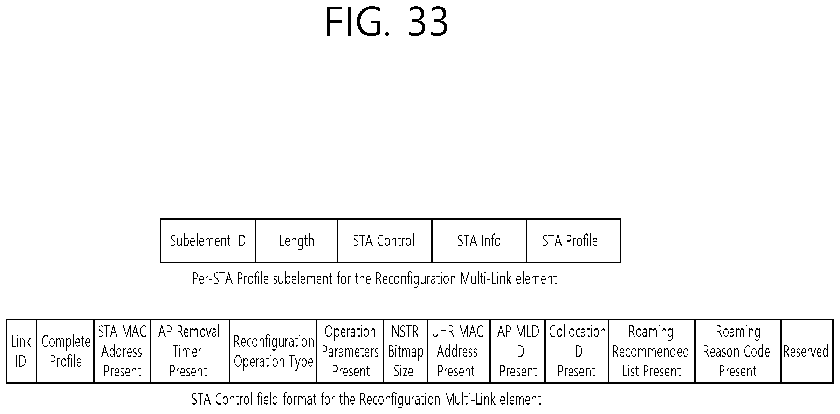

FIG. 33 illustrates an example in which an AP MLD ID is included in a link info field of a Reconfiguration Multi-ink IE proposed in the present embodiment.

Based on a STA and an AP checking and recognizing that a UHR AP MLD with which an N_AP and an O_AP are affiliated is the same through a previous association process, there is no need to transmit a UHR AP MLD ID, and thus overhead may be reduced without separately adding a UHR AP MLD ID field as shown in FIG. 30.

### 3-1) Case 1 of being included in a Link Info field - a case of not always existing

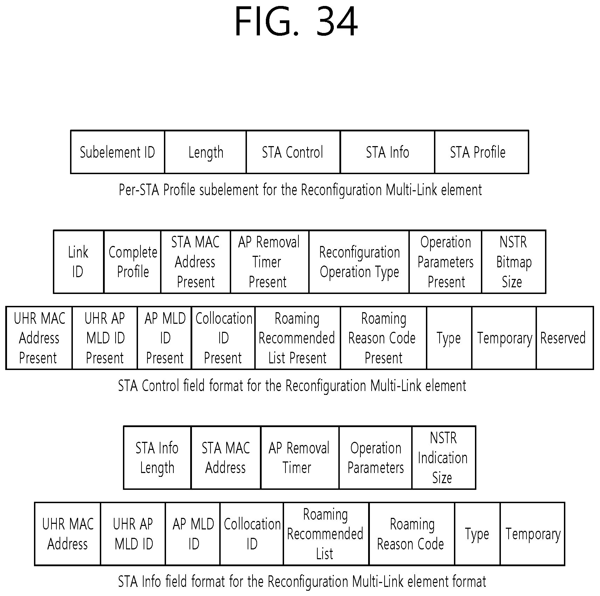

FIG. 34 illustrates another example in which a UHR AP MLD ID and an AP MLD ID are included in a link info field of a Reconfiguration Multi-ink IE proposed in the present embodiment.

Whether a UHR AP MLD ID and an AP MLD ID corresponding to an AP corresponding to a Link ID are included may be indicated through a UHR AP MLD ID Present and an AP MLD ID Present of a STA Control field of a Per-STA Profile subelement. The UHR AP MLD ID and the AP MLD ID may be included in a STA Info field or a STA Profile field. Likewise, this may request information for multiple APs corresponding to multiple AP MLD IDs. In particular, based on combining with the indication method in the Common Info field of the method 1), based on requesting roaming for APs corresponding to the same AP MLD ID, overhead may be reduced compared to the method 2) by not including the UHR AP MLD ID and the AP MLD ID.

Meanwhile, as another method, based on the UHR AP MLD ID and the AP MLD ID being indicated in the Common Info, it may be implicitly recognized that it is a roaming request for APs corresponding to the same UHR AP MLD ID and AP MLD ID, and thus the UHR AP MLD ID and the AP MLD ID may not be included. For example, the UHR AP MLD ID Present field and the AP MLD ID Present field may not be included.

### 3-2) Case 2 of being included in a Link Info field - a case of not always existing

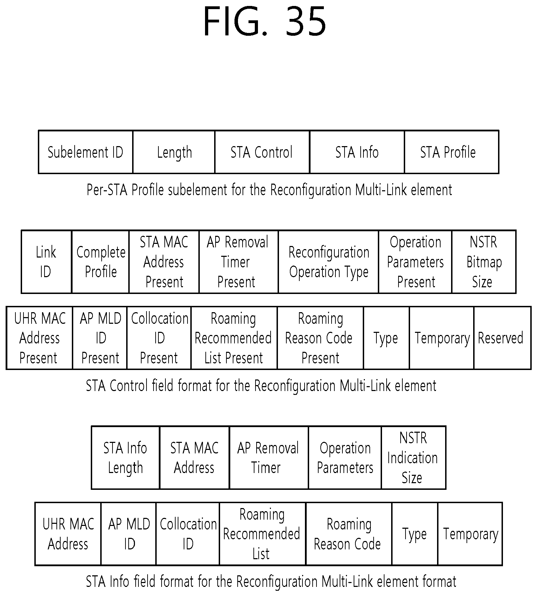

FIG. 35 illustrates another example in which an AP MLD ID is included in a link info field of a Reconfiguration Multi-ink IE proposed in the present embodiment.

Based on a STA and an AP checking and recognizing that a UHR AP MLD with which an N_AP and an O_AP are affiliated is the same through a previous association process, there is no need to transmit a UHR AP MLD ID, and thus overhead may be reduced without separately adding a UHR AP MLD ID field as shown in FIG. 32.

In addition, since the present specification includes a function to temporarily add and delete a link for MLD roaming, a method of indicating this is required, and the following method may be used.

Basically, using 2 bits or more, a Type may be Type 0: Add / Type 1: Delete / Type 2: Temporary Add / Type 3: Temporary Delete. Temporary Delete may be replaced with Type 1. Add means a request for an additional link connection between a STA of a non-AP MLD and an AP of an AP MLD. Delete means disconnecting (removing) a currently connected link. Temporary Add means a request for an additional connection with another AP other than a currently connected AP so that one STA of the non-AP MLD may configure multiple links.
=> Temporary of the Type field above may be configured as a separate field. For example, it is configured with a 1-bit Temporary field and a Type field excluding Temporary add/delete, and Temporary Add may be configured using values of the two fields (for example, Temporary = 1, Type = Add).

Based on simultaneously requesting delete and add when performing MLD roaming, the Type of the Common Info may be set to 4 or 5. For example, it may be defined as Type 4: Add then Delete, Type 5: Delete then Add. Based on Type 4, links corresponding to add are added first and then links corresponding to delete are deleted. Conversely, Type 5 deletes links corresponding to delete first and then adds links corresponding to add.

Type 8 is a case based on performing a Link Switch. Unlike add and delete, Link Switch allows a link to be switched to another link at once.

An Add/Delete Link ID list field is an optional field that may be included based on the Type field being set to 4 and 5. Link IDs corresponding to this Add/Delete Link ID list include a list of Link IDs of links requesting add and delete simultaneously. In a case of Link Info having a Link ID included in this list, based on the Type being add, it may be known that it is a link being added among links simultaneously adding and deleting, and based on it being delete, it may be known that it is a link being deleted.

A value of the Type field of the Link Info requires a value for simultaneously requesting add and delete separately from a value of the Type field required for simply performing only add or only delete. A Type value of the Link Info field may be configured as follows, but the value and setting of the Type field are not limited to the mentioned values.
- Type 0: Add
- Type 1: Delete
- Type 2: Temporary Add
- Type 3: Temporary Delete
- Type 4: Add then Delete (Add)
- Type 5: Add then Delete (Delete)
- Type 6: Delete then Add (Add)
- Type 7: Delete then Add (Delete)
- Type 8: Link Switch

Type 4 is a case of a link being added in an operation of deleting a link after adding, and Type 5 is a case of a link being deleted in an operation of deleting a link after adding.

Type 6 is a case of a link being added in an operation of adding a link after deleting, and Type 7 is a case of a link being deleted in an operation of adding a link after deleting.

The Type field and the Temporary field may be included as follows, and at least one or more fields are included.

### 1) Case of being included in a Common Info field of an MLD Roaming Request frame body or a Reconfiguration IE

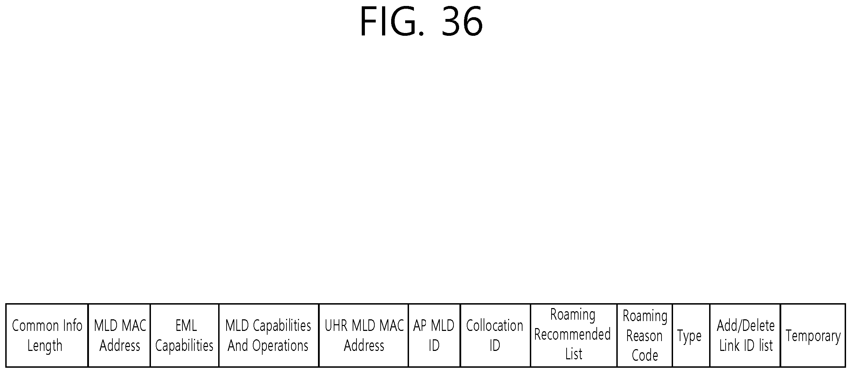

FIG. 36 illustrates an example in which a temporary field is included in a common info field of a Reconfiguration Multi-ink IE proposed in the present embodiment.

Based on this case, only one operation may be performed for all APs. For example, based on Add, only a request to add a link for APs indicated in Link info may be performed. FIG. 36 is an example included in Common Info.

### 2-1) Case of being included in a Link Info field of an MLD Roaming Request frame body or a Reconfiguration IE

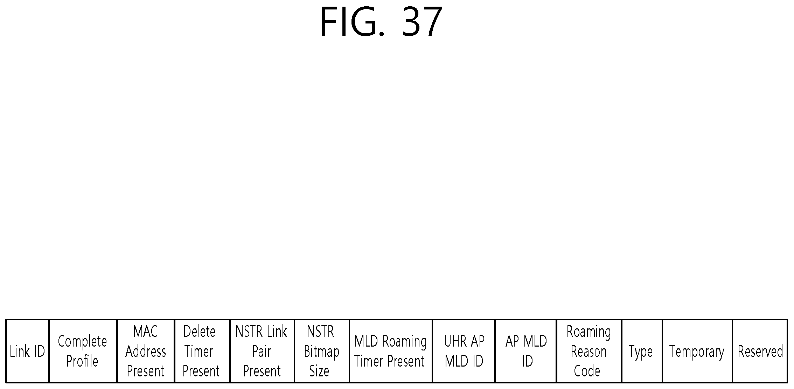

FIG. 37 illustrates an example in which a temporary field is included in a link info field of a Reconfiguration Multi-ink IE proposed in the present embodiment.

Based on this case, different operations may be requested for each AP. For example, Temporary add may be requested for one AP, and delete may be requested for another AP. FIG. 37 is an example included in Link Info.

### 2-2) Case of being included in a Link Info field of an MLD Roaming Request frame body or a Reconfiguration IE

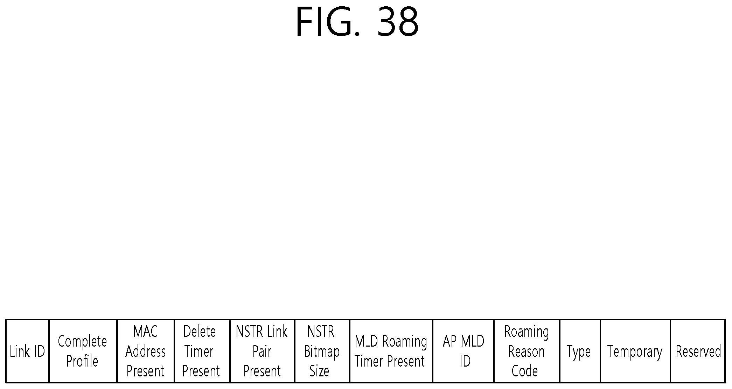

FIG. 38 illustrates another example in which a temporary field is included in a link info field of a Reconfiguration Multi-ink IE proposed in the present embodiment.

FIG. 38 is an example in which a Type field is included in Link Info based on a case of Link Info where a UHR AP MLD ID field is omitted.

### 3-1) Embodiment of a case of simultaneously sending add and delete requests - based on intending to add a new link first and delete a conventional link

- Based on including both a Type field and an Add/Delete Link ID list field in a Common Info field

A Type of the Common Info field is set to 4, and a Link ID of a newly added link and Link IDs of deleted links are added to an Add/Delete Link ID list. At this time, the Link ID of the added link may precede the deleted link in a list order. For example, based on the Link ID of the added link being 5 and the Link ID of the deleted link being 2, the Add/Delete Link ID List may be set as 5, 2. Based on determining the order in this way, it may be known which link is add and which link is delete in the Common Info, but since this may also be known through the Type field of the Link Info field, an operation of setting in order may not be required.

Since it may already be known through the Common Info whether it is a frame requesting add and delete individually or a frame requesting them simultaneously, only Type 0 and 1 may be used for the Type of the Link Info field to inform whether it is an added link or a deleted link. Alternatively, based on ordering Link IDs in the Add/Delete Link ID List of the Common Info, overhead may be reduced by omitting the Type field in the Link Info.
- Based on including only a Type field in a Common Info field

The Type of the Common Info field is set to 4, and it may be informed whether it is an added link or a deleted link using Type 0 and 1 in the Link Info field.
- Based on not including both a Type field and an Add/Delete Link ID list field in a Common Info field

Based on this case, Add then delete may be requested using a Type field value of 4 or 5 of the Link Info field. At this time, an added link is set to Type 4, and Type 5 is set to a deleted link. After adding a link set to Type 4 first, a link set to Type 5 is deleted.

### 3-2) Embodiment of a case of simultaneously sending add and delete requests - based on intending to delete a conventional link first and add a new link

- Based on including both a Type field and an Add/Delete Link ID list field in a Common Info field

The Type of the Common Info field is set to 5, and other operations are the same as the case of including both a Type field and an Add/Delete Link ID list field in the Common Info field in the 3-1) Embodiment of a case of simultaneously sending add and delete requests - based on intending to add a new link first and delete a conventional link.
- Based on including only a Type field in a Common Info field

The Type of the Common Info field is set to 5, and other operations are the same as the case of including only a Type field in the Common Info field in the 3-1) Embodiment of a case of simultaneously sending add and delete requests - based on intending to add a new link first and delete a conventional link.
- Based on not including both a Type field and an Add/Delete Link ID list field in a Common Info field

Based on this case, Add then delete may be requested using a Type field value of 6 or 7 of the Link Info field. At this time, an added link is set to Type 6, and Type 7 is set to a deleted link. After adding a link set to Type 6 first, a link set to Type 7 is deleted.

### 4) Based on performing Link Switch using a Type field

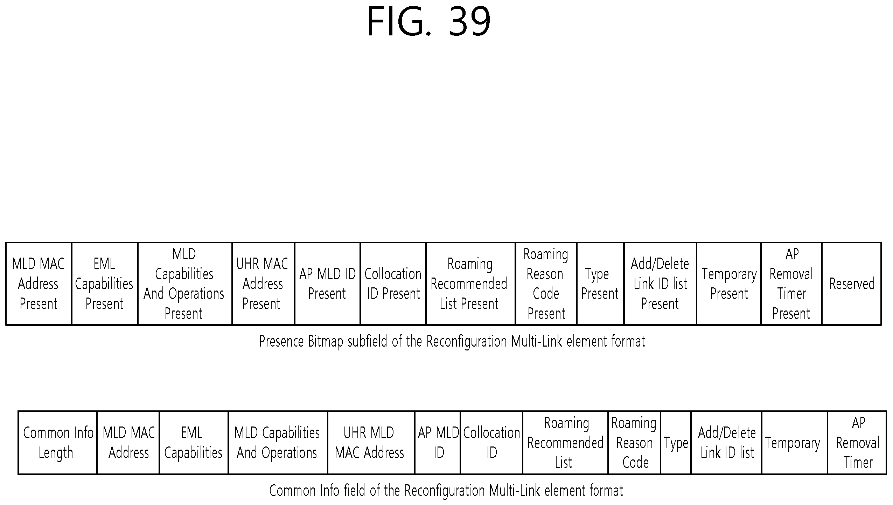

FIG. 39 illustrates an example in which an AP Removal Timer field is included in a Common Info field of a Reconfiguration Multi-link IE proposed in the present embodiment.

Based on link switch using Type 8 of Common Info rather than using add/delete to change a Link, a link sending an MLD Roaming Request frame is removed and switched to a Link ID in a Link Info field. Based on Link switch, overhead may be reduced by omitting a Type field in the Link Info field. Based on performing Link Switch, an AP and a STA should know by when the link switch should be performed. This may be determined by the AP and informed to the STA, or may be determined by the STA and informed to the AP. Based on Link switch, channels of a New AP and an Old AP are different from each other, information on deletion is required in the New AP and information on addition is required in the Old AP.

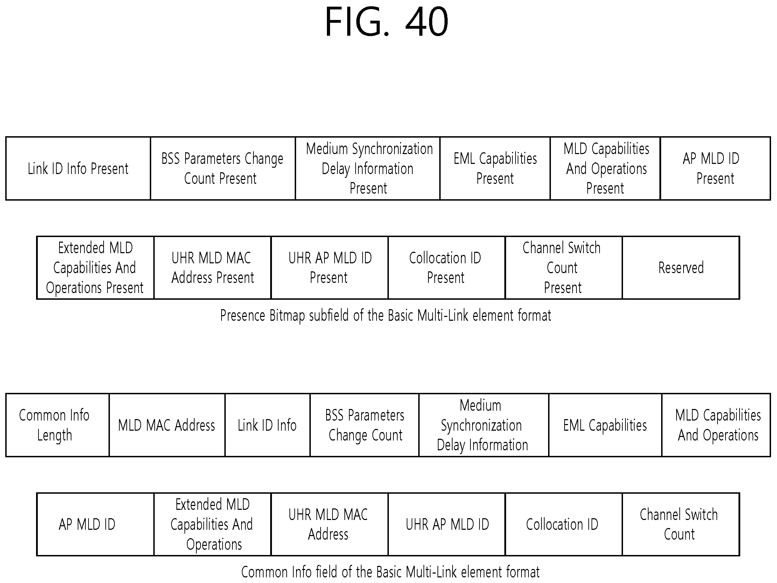

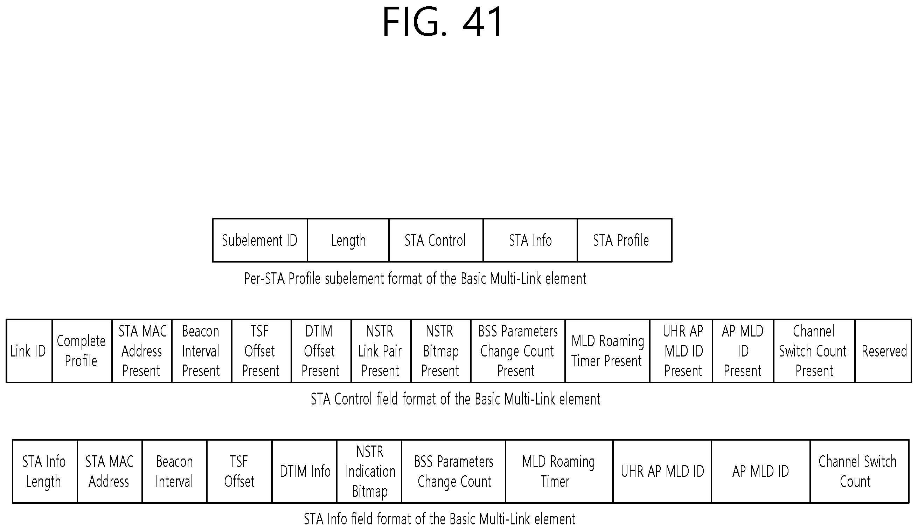

Based on the AP informing the STA, it may be informed in an MLD Roaming Response by adding a Channel Switch Count field as in FIG. 40 or FIG. 41 to be described later. Based on the STA determining and informing the AP, it may be informed in an MLD Roaming Request using a Delete Timer field (or an AP Removal Timer field) in a Reconfiguration element.

Based on informing a link switch completion time using a Delete Timer of a Reconfiguration IE, based on all links requesting link switch through the MLD Roaming Request having the same Delete Timer value, it may be added to Common Info rather than Link Info as in FIG. 36 to reduce overhead. At this time, the Delete Timer field may not be used by using a Delete Timer Present field (or an AP Removal Timer Present field) of the Link Info. Based on Delete Timer values of links requested for link switch being different from each other, a Delete Timer field may be added to Link Info rather than Common Info. Based on a link to perform link switch being one, a Delete Timer field may be added to Common Info and a Delete Timer field may be added to User Info.

### 2.4.2 MLD Roaming Response frame format

In an MLD Roaming Response frame, since a link should be changed while maintaining a Multi-link Setup, it is necessary to consider link-level parameters to be essentially provided.

**[Table 5]**

| Order | Information |
|---|---|
| 1 | Category |
| 2 | UHR Action or Protected UHR Action |
| 3 | Dialog Token |
| 4 | Status Code |
| 5 | Basic Multi-Link element |
| 6 | Context Transfer Level |

Order 1: Basically, a Category may be included in a new UHR Action or a Protected UHR Action, and is not limited thereto.

Order 4: A Status Code may utilize a conventional Status code field.
- Based on a response to an MLD Roaming request, a Basic Multi-link IE defined in conventional 802.11be may be utilized for required information on an AP MLD and an N_AP.

Order 5: A modified Basic Multi-link IE is as follows.

Order 6: Based on transmitting an MLD Roaming Response, a degree to which context transfer is required may be indicated by setting a bit value of a Context Transfer Level.

### 1) Common Info field

FIG. 40 illustrates an example of a Common Info field of a Basic Multi-link IE proposed in the present embodiment.
- An existing Common Info field may be utilized. Common Info information here is Common Info information corresponding to N_APs for which one or more STAs perform MLD Roaming.
- Based on including a Basic Multi-link element when sending a Beacon or a Multi-Link Probe Response frame, a Channel Switch Count field may not be included by using a Channel Switch Count Present field.

Based on a Type field of Common Info in a Reconfiguration IE of an MLD Roaming Request frame being set to Type 8 or a Type field of User Info being set to Type 8, a Channel Switch Count field may be included in the Common Info of the Basic ML IE. Based on being included in the Common Info, based on a time when one or more link(s) simultaneously requesting Link Switch through one MLD Roaming Request should finish switching to new link(s) being the same, an AP may be informed by when to perform Link switch by using the Channel Switch Count field of the Common Info. Link Switch Count indicates the number of TBTTs to be received from an AP connected through an existing link before a link switches to a new link. Through the Channel Switch Count field, the AP may inform the STA by when to perform link switch to a new link.

### 2) Link Info field

As mentioned in 1), based on one or more STAs simultaneously performing MLD Roaming, one or more Per-STA Profile subelements may be required for corresponding APs.

Information changed for a STA Control field, a STA Info field and a STA Profile field of a conventional Basic Multi-link IE is as follows.

FIG. 41 illustrates an example of a Link Info field of a Basic Multi-link IE proposed in the present embodiment.
- Basically, a Link ID of the STA Info field is indicated by a Link ID corresponding to the N_AP.
- A Complete Profile means all information included based on transmitting an Association Response frame, for example, complete information of an AP as in the conventional case. However, since a STA performs MLD Roaming, capability or operational parameters of an AP may not be changed. Therefore, in this case, the Complete Profile is indicated as 0.
- Additionally, information on an MLD Roaming Timer is included. For this, an MLD Roaming Timer Present field is included in the STA Control field and an MLD Roaming Timer field is included in the STA Info field. This means a time at which MLD roaming is completed and operation is no longer performed with an O_AP and operation is performed with an N_AP. This may utilize MLD Roaming Timer information transmitted by a STA, and based on a STA having transmitted this and a Status Code of a Response being SUCCESS, it may not be included.

Based on including a Basic Multi-Link IE based on being included in an Association Request/Response, because information related to Roaming is not required, a Basic ML element may be configured without adding UHR MLD MAC Address, UHR AP MLD ID, Collocation ID, Channel Switch Count and UHR Roaming Timer included in FIG. 37 and MLD Roaming Timer, UHR AP MLD ID, AP MLD ID and Channel Switch Count fields included in FIG. 38 by using a presence field.

Based on times when each link should complete link switch being different from each other, a Channel Switch Count field may be added to Link Info to inform by when to complete link switch individually for each link. Based on requesting link switch for only one link in an MLD Roaming Request, a Channel Switch Count field may be included in Common Info or included in Link Info.
- A UHR AP MLD ID and an AP MLD ID may be additionally included in the above information as follows. The AP MLD ID is an ID of an AP MLD to which APs to which a Non-AP MLD (or STA) is to roam belong, and the UHR AP MLD ID is an ID of a UHR AP MLD to which AP MLDs to which APs to which a non-AP MLD (or STA) is to roam belong. Based on a UHR AP MLD ID not being included in an MLD Roaming Request frame, it may be known that they are affiliated with the same UHR AP MLD, and thus a UHR AP MLD ID field may not be included. Such a case is described in case 2 of being included in a 1-2) Common Info field, case 2 of being included in a 2-2) Link Info field - a case of always existing, and case 2 of being included in a 3-2) Link Info field - a case of not always existing.

### 1-1) Case 1 of being included in a Common Info field

This is applicable based on requesting by a method of being included in a 1-1) Common Info field case 1 in the Reconfiguration ML IE described above.

Likewise, whether a UHR AP MLD ID and an AP MLD ID are included is indicated through a Presence Bitmap, and accordingly, the UHR AP MLD ID and the AP MLD ID are included in the Common Info field. This may provide only information of APs of an AP MLD where UHR AP MLD ID = 0 and Collocation ID≠0.

### 1-2) Case 2 of being included in a Common Info field

This is applicable based on requesting by a method of being included in a 1-2) Common Info field case 2 in the Reconfiguration ML IE described above.

Likewise, whether an AP MLD ID is included is indicated through a Presence Bitmap, and accordingly, the AP MLD ID is included in the Common Info field.

### 2-1) Case 1 of being included in a Link Info field - a case of always existing

This is applicable based on requesting by a method of being included in a 2-1) Link Info field - a case of always existing in the Reconfiguration ML IE described above.

A UHR AP MLD ID and an AP MLD ID corresponding to an AP corresponding to a Link ID of each Per-STA Profile subelement are included in a STA Control field. This may provide information for multiple APs corresponding to multiple AP MLD IDs, but based on providing for the same AP MLD ID, overhead is larger than a method of indicating in a Common Info field.

### 2-2) Case 2 of being included in a Link Info field - a case of always existing

This is applicable based on requesting by a method of being included in a 2-2) Link Info field - a case of always existing in the Reconfiguration ML IE described above.

An AP MLD ID corresponding to an AP corresponding to a Link ID of each Per-STA Profile subelement is included in a STA Control field. This may provide information for multiple APs corresponding to multiple AP MLD IDs, but based on providing for the same AP MLD ID, overhead is larger than a method of indicating in a Common Info field.

### 3-1) Case 1 of being included in a Link Info field - a case of not always existing

This is applicable based on requesting by a method of being included in a 3-1) Link Info field - a case of not always existing in the Reconfiguration ML IE described above.

Whether an AP MLD ID corresponding to an AP corresponding to a Link ID is included may be indicated through a UHR AP MLD ID Present and an AP MLD ID Present of a STA Control field of a Per-STA Profile subelement. A UHR AP MLD ID and an AP MLD ID may be included in a STA Info field or a STA Profile field. Likewise, this may provide information for multiple APs corresponding to multiple AP MLD IDs. In particular, based on combining with the indication method in the Common Info field of the method 1), based on providing only information of APs corresponding to the same AP MLD ID, overhead may be reduced compared to the method 2) by not including a UHR AP MLD ID and an AP MLD ID.
=> Meanwhile, in a case of Unique ID Configuration within the Collocation Set in AP MLD related to the AP MLD ID setting described above, based on a Collocation ID being 0, a UHR AP MLD ID, an AP MLD ID and a Collocation ID may be omitted. For example, based on a Collocation ID not existing, an AP receiving a request may implicitly recognize that it is an information request for other APs for an AP MLD to which it belongs.
=> Meanwhile, as another method, based on a Collocation ID being indicated in Common Info, it may be implicitly recognized that it is information of APs corresponding to the same Collocation Set, and thus a UHR AP MLD ID, an AP MLD ID and a Collocation ID may not be included. For example, a UHR AP MLD ID Present and an AP MLD ID Present field may not be included.

### 3-2) Case 2 of being included in a Link Info field - a case of not always existing

This is applicable based on requesting by a method of being included in a 3-2) Link Info field - a case of not always existing in the Reconfiguration ML IE described above.

Whether an AP MLD ID corresponding to an AP corresponding to a Link ID is included may be indicated through an AP MLD ID Present of a STA Control field of a Per-STA Profile subelement. An AP MLD ID may be included in a STA Info field or a STA Profile field. Likewise, this may provide information for multiple APs corresponding to multiple AP MLD IDs. In particular, based on combining with the indication method in the Common Info field of the method 1), based on providing only information of APs corresponding to the same AP MLD ID, overhead may be reduced compared to the method 2) by not including an AP MLD ID.
=> Meanwhile, in a case of Unique ID Configuration within the Collocation Set in AP MLD related to the AP MLD ID setting described above, based on a Collocation ID being 0, an AP MLD ID and a Collocation ID may be omitted. For example, based on a Collocation ID not existing, an AP receiving a request may implicitly recognize that it is an information request for other APs for an AP MLD to which it belongs.
=> Meanwhile, as another method, based on a Collocation ID being indicated in Common Info, it may be implicitly recognized that it is information of APs corresponding to the same Collocation Set, and thus an AP MLD ID and a Collocation ID may not be included. For example, a UHR AP MLD ID Present and an AP MLD ID Present field may not be included.

### Order 6: Group key Information

Basically, since a Group key is different for each link, it is necessary to provide Group key information for N_APs.

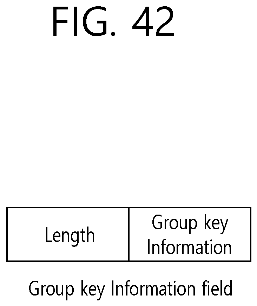

FIG. 42 illustrates an example of a group key information field.

Referring to FIG. 42, Length indicates a length for Group key Information. Group key Information for each N_AP includes an MLO GTK KDE format, an MLO IGTK KDE and an MLO BIGTK KDE including a Link ID of each N_AP defined in 802.11be.

Order 7: Based on a total AID (Association Identifier) space being limited, an AID may be managed in each AP MLD. For example, an AID may be assigned based on roaming to another AP MLD. However, in the following cases, an AID may not be included.
- Based on roaming to another AP MLD and assigning the same AID
- Based on a UHR AP MLD managing a total AID space as in the conventional case

Order 8, 9: Based on being included in this way, it may be considered that a channel of each AP to perform roaming is the same but different from channels of previously connected APs. However, the following cases may be included for Order 8, 9 differently.
- Based on assuming that all APs enabling MLD roaming are always on the same channel, these IEs are not included.
- A channel of one AP to roam may be the same as or different from a channel of an AP to be previously connected. In this case, a Channel Switching Announcement IE or an Extended Channel Switching Announcement IE may be included in Link Info of a Basic Multi-link IE existing in Order 5, respectively. For example, this is for performing a channel switch for each AP to roam.

Order 10: This may be utilized to map a TID through a TID-to-link mapping in advance for a link to be newly connected. Based on not separately performing TID-to-link mapping, a default mapping may be applied.

In addition, an MLD Roaming Timer may be added to both an MLD Roaming Request/Response frame.

Additionally, an AP MLD may include an MLD Roaming Timer of the above Reconfiguration ML IE. Likewise, based on the AP MLD being able to control roaming currently, a predetermined MLD Roaming Timer may be indicated. For example, based on a STA not including an MLD Roaming Timer or it being inappropriate, an AP MLD may set and inform it. In addition, based on a STA not transmitting an MLD Roaming Timer, an AP MLD may set and inform it. A meaning of the MLD Roaming Timer is the same. For example, it means a time at which MLD roaming is completed and operation is no longer performed with an O_AP and operation is performed with an N_AP.
=> Based on receiving a Temporary Add request, after the MLD Roaming Timer expires, a STA completely disconnects a connection with an O_AP (for example, Temporary Delete or Delete) and may be connected with an N_AP.
=> Based on applying an MLD Roaming timer commonly to all APs, it may be included in a Common Info field. At this time, existence of the Common Info field may be indicated through a Presence Bitmap.
   - Additionally, information on an MLD Roaming Timer may be included in an MLD Roaming Response frame. For this, an MLD Roaming Timer Present field is included in a STA Control field and an MLD Roaming Timer field is included in a STA Info field. This may mean a remaining time until a time at which a STA may receive data from an AP to roam. This may also utilize MLD Roaming Timer information transmitted by a STA. This is basically related to a TIM field presented in 2.5.
=> Based on applying an MLD Roaming timer commonly to all APs, it may be included in a Common Info field. At this time, existence of the Common Info field may be indicated through a Presence Bitmap. Alternatively, it may be included in an MLD Roaming Probe Response frame body.

### 2.5 MLD Roaming Example

Operation processes of an AP and a STA performing MLD Roaming are as follows.

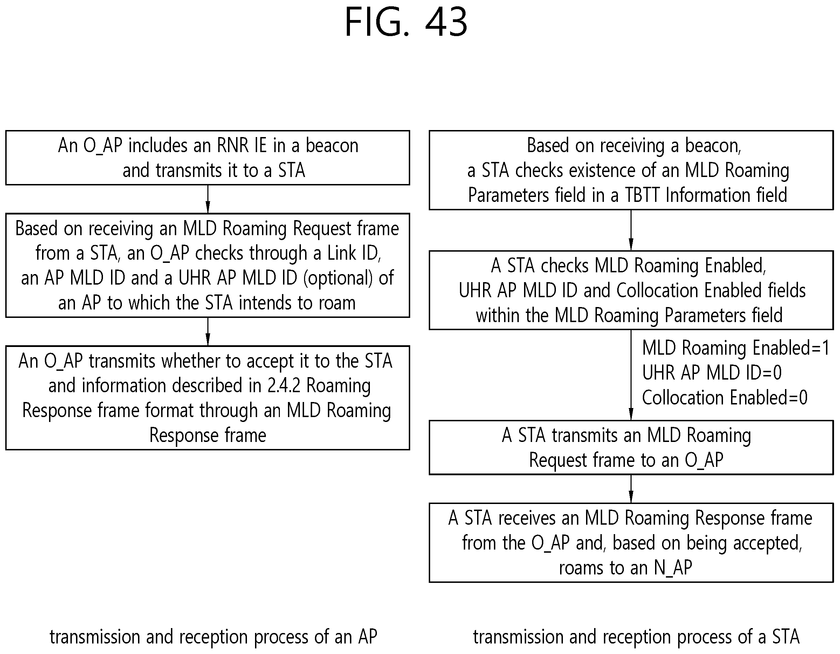

FIG. 43 illustrates a procedure for checking whether a N_AP may perform roaming using a collocation enabled field.

Referring to FIG. 43, a transmission and reception process of an AP is as follows.

An O_AP includes an RNR IE in a beacon and transmits it to a STA. Based on receiving an MLD Roaming Request frame from a STA, an O_AP checks through a Link ID, an AP MLD ID and a UHR AP MLD ID (optional) of an AP to which the STA intends to roam. An O_AP transmits whether to accept it to the STA and information described in a Roaming Response frame format through an MLD Roaming Response frame.

Referring to FIG. 43, a transmission and reception process of a STA is as follows.

Based on receiving a beacon, a STA checks existence of an MLD Roaming Parameters field in a TBTT Information field. A STA checks MLD Roaming Enabled, UHR AP MLD ID and Collocation Enabled fields within the MLD Roaming Parameters field. At this time, MLD Roaming Enabled=1, UHR AP MLD ID=0 and Collocation Enabled=0 are set. A STA transmits an MLD Roaming Request frame to an O_AP. A STA receives an MLD Roaming Response frame from the O_AP and, based on being accepted, roams to an N_AP.

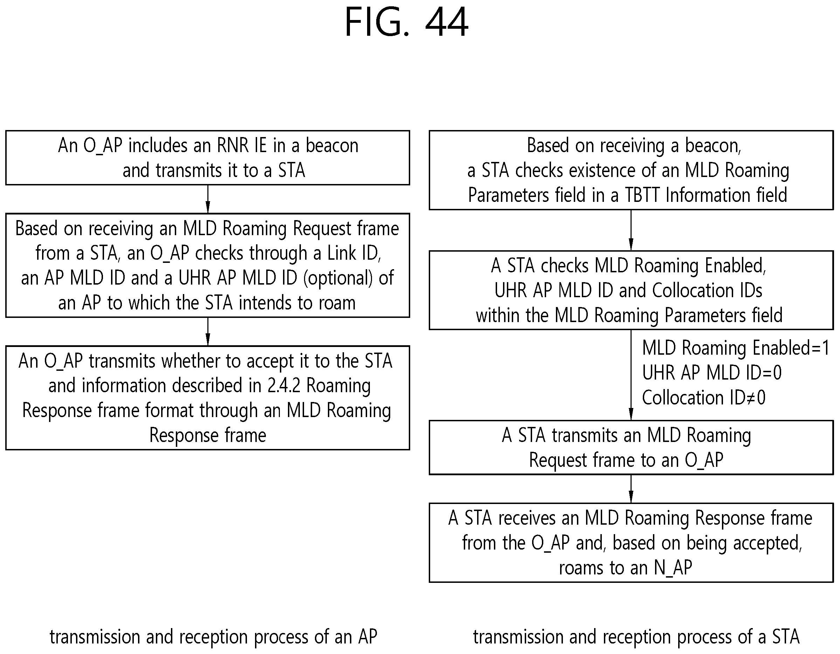

FIG. 44 illustrates a procedure for checking whether an N_AP may perform roaming using a collocation ID.

Referring to FIG. 44, a transmission and reception process of an AP is as follows.

An O_AP includes an RNR IE in a beacon and transmits it to a STA. Based on receiving an MLD Roaming Request frame from a STA, an O_AP checks through a Link ID, an AP MLD ID and a UHR AP MLD ID (optional) of an AP to which the STA intends to roam. An O_AP transmits whether to accept it to the STA and information described in a Roaming Response frame format through an MLD Roaming Response frame.

Referring to FIG. 44, a transmission and reception process of a STA is as follows.

Based on receiving a beacon, a STA checks existence of an MLD Roaming Parameters field in a TBTT Information field. A STA checks MLD Roaming Enabled, UHR AP MLD ID and Collocation IDs within the MLD Roaming Parameters field. At this time, MLD Roaming Enabled=1, UHR AP MLD ID=0 and Collocation ID≠0 are set. A STA transmits an MLD Roaming Request frame to an O_AP. A STA receives an MLD Roaming Response frame from the O_AP and, based on being accepted, roams to an N_AP.

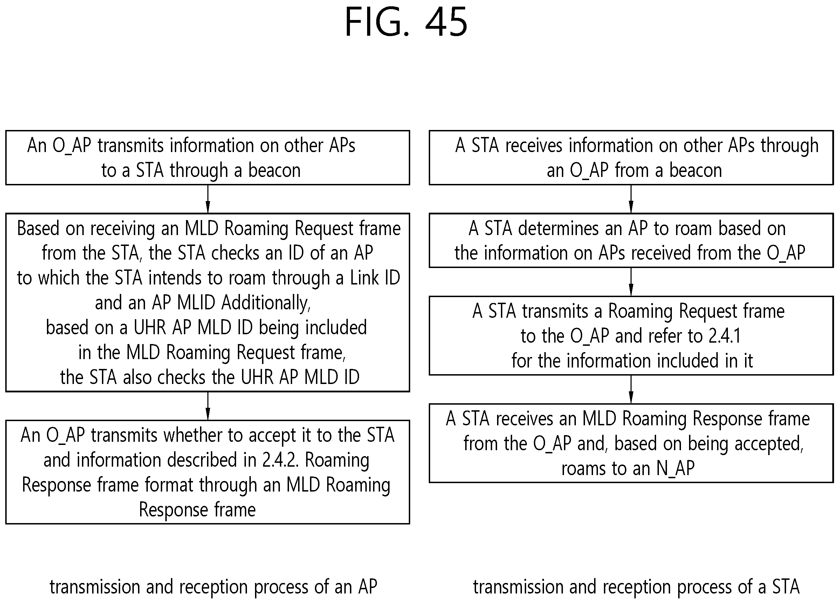

FIG. 45 illustrates an MLD roaming procedure based on a UHR AP MLD ID being included in a reconfiguration element.

Referring to FIG. 45, a transmission and reception process of an AP is as follows.

An O_AP transmits information on other APs to a STA through a beacon. Based on receiving an MLD Roaming Request frame from the STA, the STA checks an ID of an AP to which the STA intends to roam through a Link ID and an AP MLID. Additionally, based on a UHR AP MLD ID being included in the MLD Roaming Request frame, the STA also checks the UHR AP MLD ID. An O_AP transmits whether to accept it to the STA and information described in 2.4.2. Roaming Response frame format through an MLD Roaming Response frame.

Referring to FIG. 45, a transmission and reception process of a STA is as follows.

A STA receives information on other APs through an O_AP from a beacon. A STA determines an AP to roam based on the information on APs received from the O_AP. A STA transmits a Roaming Request frame to the O_AP. A STA receives an MLD Roaming Response frame from the O_AP and, based on being accepted, roams to an N_AP.

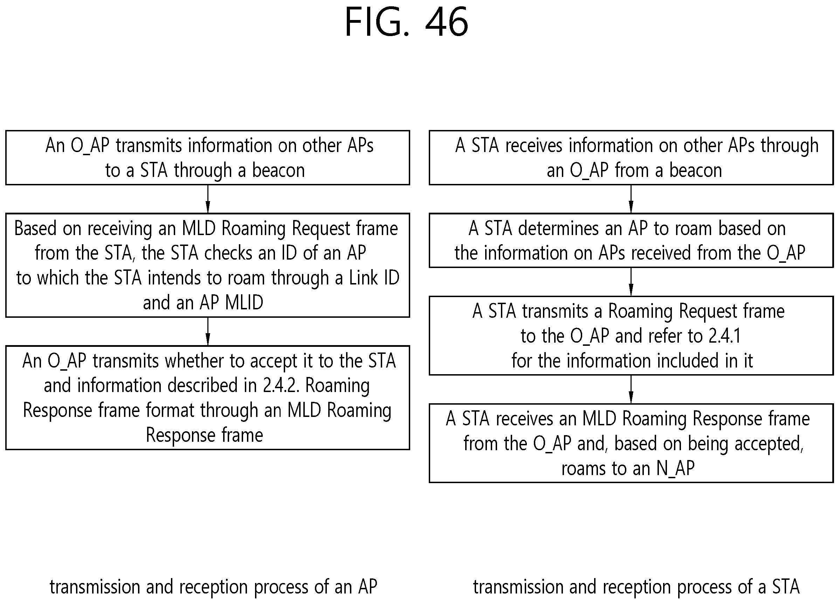

FIG. 46 illustrates an MLD roaming procedure based on a UHR AP MLD ID not being included in a reconfiguration element.

Referring to FIG. 46, a transmission and reception process of an AP is as follows.

An O_AP transmits information on other APs to a STA through a beacon. Based on receiving an MLD Roaming Request frame from the STA, the STA checks an ID of an AP to which the STA intends to roam through a Link ID and an AP MLID. An O_AP transmits whether to accept it to the STA and information described in 2.4.2. Roaming Response frame format through an MLD Roaming Response frame.

Referring to FIG. 46, a transmission and reception process of a STA is as follows.

A STA receives information on other APs through an O_AP from a beacon. A STA determines an AP to roam based on the information on APs received from the O_AP. A STA transmits a Roaming Request frame to the O_AP. A STA receives an MLD Roaming Response frame from the O_AP and, based on being accepted, roams to an N_AP.

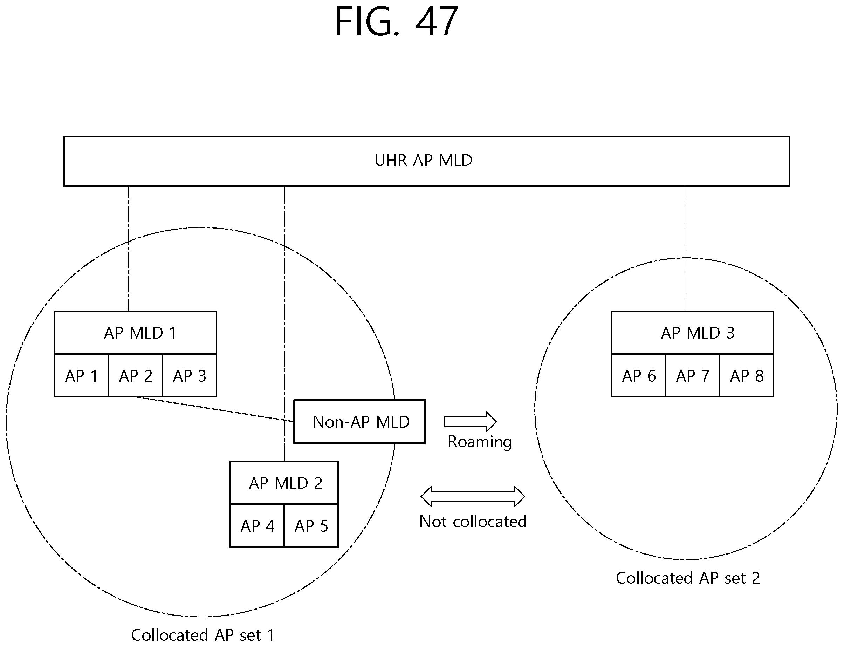

FIG. 47 illustrates an example of a collocated AP set.

FIG. 47 shows an example of determining whether to roam based on collocation information based on a non-AP MLD moving in a situation where it is conventionally connected to AP 2. The collocation information may be known through a Collocation Enabled field or a Collocation ID field of an RNR IE. Although AP 4 and AP 5 affiliated with AP MLD 2 also exist around the non-AP MLD, since these are included in the same Collocated AP set as the currently connected AP 2, the non-AP MLD does not make a roaming request for AP 4 and AP 5. On the other hand, a roaming request is possible for AP 6, AP 7 and AP 8 included in a Collocated AP set different from AP 2 for the non-AP MLD. By defining the Collocated AP set in this way and informing information on APs that are physically close and do not need to roam, unnecessary roaming may be prevented.

### 1) Example #1 - Based on only some STAs first roaming to an AP

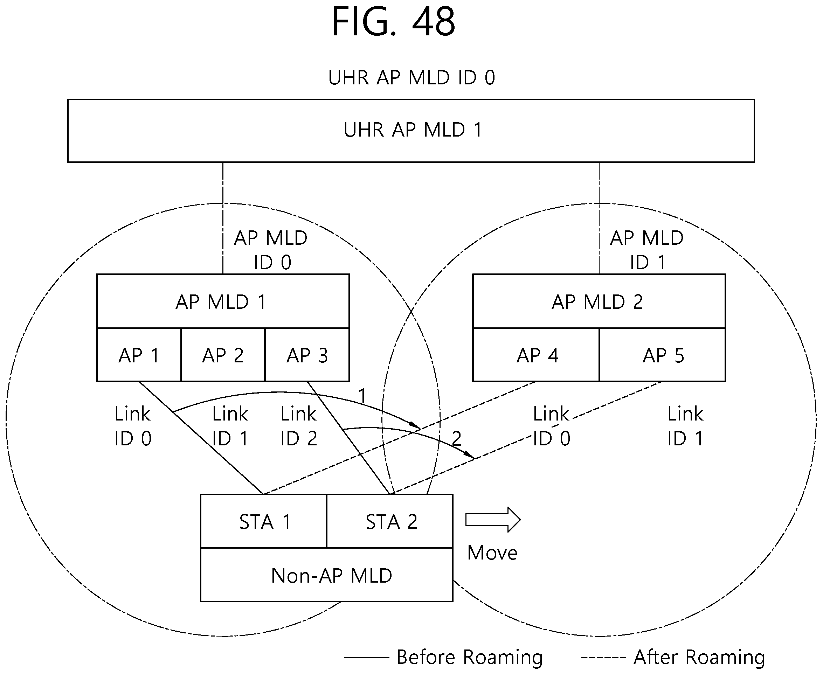

FIG. 48 illustrates example 1 for an MLD roaming procedure.

FIG. 48 is a case where only some STAs first roam to an AP rather than all STAs moving to APs of another AP MLD at once. For example, STA 1 first roams from AP 1 to AP 3, and next, STA 2 roams from AP 3 to AP 5. In the present embodiment, there are two STAs in a non-AP MLD, but even based on three STAs existing, only two STAs may roam first and the remaining STA may roam next.

In the present embodiment, STA 1 and AP 1 presented above may first exchange an MLD Roaming Request/Response. STA 1 will indicate an (Optional)UHR AP MLD ID, an AP MLD ID and a Link ID for AP 4 in the MLD Roaming Request, and AP 1 will provide information on AP 4 by including it in a Basic Multi-link IE along with whether to accept it. Next, STA 2 and AP 3 also undergo the same procedure for AP 5. At this time, STA 1 may perform the corresponding procedure with the connected AP 4 instead of STA 2.

Based on utilizing this example, it may be effective in receiving data. While AP 1 and STA 1 undergo a roaming procedure, AP 2 and STA 3 may exchange data, and while AP 3 and STA 2 undergo a roaming procedure, AP 4 and STA 1 may exchange data. At this time, all TIDs need to be mapped to each of the links exchanging data. However, the present embodiment is difficult to apply based on a case where there is a STA that is not an MLD or there is one STA in an MLD, and frame exchange overhead may relatively occur.

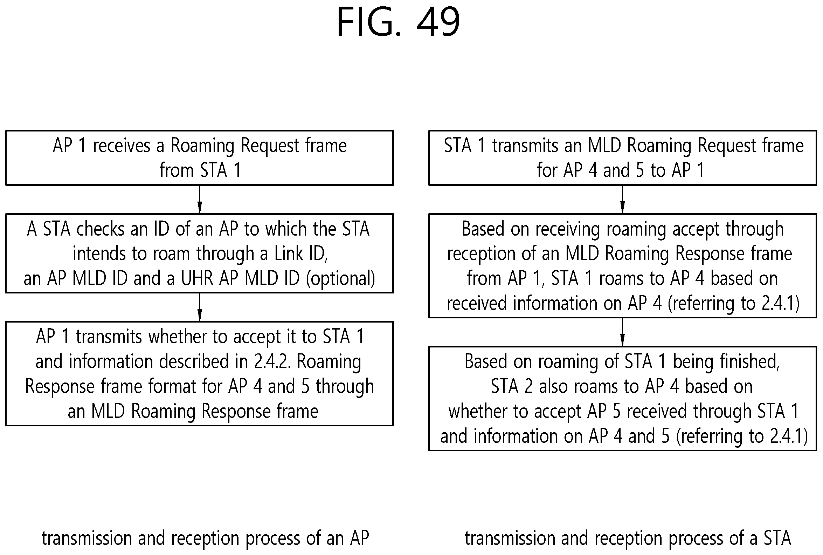

FIG. 49 shows an operation process of example 1 for an MLD roaming procedure.

Referring to FIG. 49, a transmission and reception process of an AP is as follows.

AP 1 receives a Roaming Request frame from STA 1. A STA checks an ID of an AP to which the STA intends to roam through a Link ID, an AP MLD ID and a UHR AP MLD ID (optional). AP 1 transmits whether to accept it to STA 1 and information described in 2.4.2. Roaming Response frame format for AP 4 and 5 through an MLD Roaming Response frame.

Referring to FIG. 49, a transmission and reception process of a STA is as follows.

STA 1 transmits an MLD Roaming Request frame for AP 4 and 5 to AP 1. Based on receiving roaming accept through reception of an MLD Roaming Response frame from AP 1, STA 1 roams to AP 4 based on received information on AP 4. Based on roaming of STA 1 being finished, STA 2 also roams to AP 4 based on whether to accept AP 5 received through STA 1 and information on AP 4 and 5.

### 2) Example #2 - Based on all STAs moving to APs of another group at once

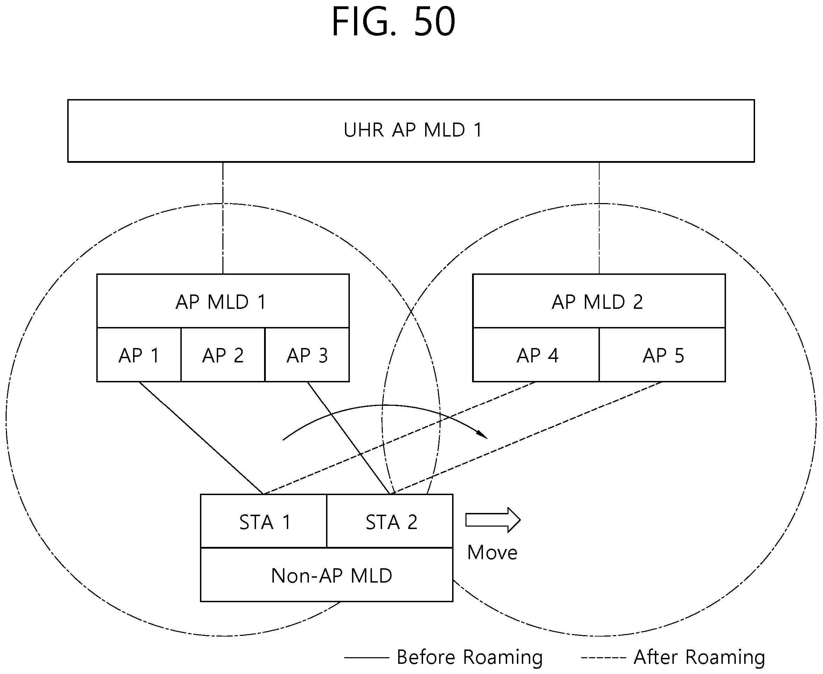

FIG. 50 illustrates example 2 for an MLD roaming procedure.

FIG. 50 is a case where all STAs move to APs of another Group at once. For example, STA 1 roams from AP 1 to AP 3 and STA 2 roams from AP 3 to AP 5 at once.

In the present embodiment, STA 1 and AP 1 or STA 2 and AP 3 presented above may exchange an MLD Roaming Request/Response. At this time, a UHR AP MLD ID (Optional), an AP MLD ID and a Link ID for AP 4 and AP 5 will be indicated in the MLD Roaming Request, and AP 1 or AP 3 will provide information on AP 4 and AP 5 by including it in a Basic Multi-link IE along with whether to accept it.

Based on utilizing this example, frame overhead may be reduced compared to Example 1, and a data delay phenomenon may be decreased according to an AP MLD Roaming domain structure. For example, based on an Anchor AP managing data reception from a DS and MLD Roaming existing in an AP MLD, based on this Anchor AP accepting the MLD Roaming Request, a data path may be set for roaming in advance.

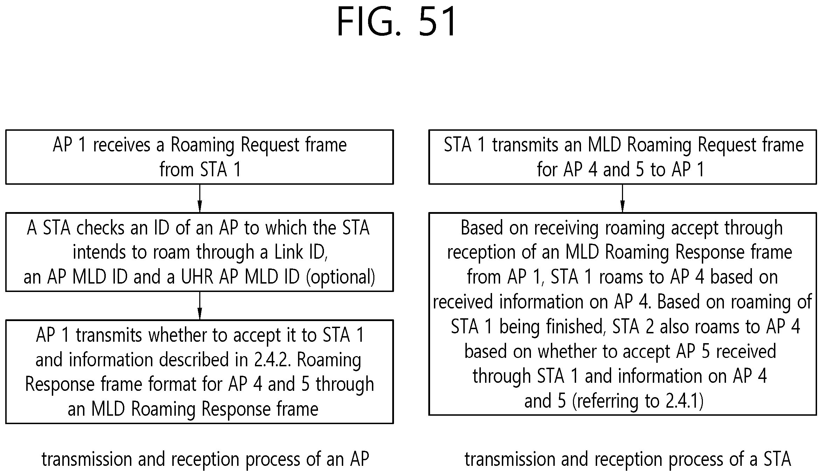

FIG. 51 shows an operation process of example 2 for an MLD roaming procedure.

Referring to FIG. 51, a transmission and reception process of an AP is as follows.

AP 1 receives a Roaming Request frame from STA 1. A STA checks an ID of an AP to which the STA intends to roam through a Link ID, an AP MLD ID and a UHR AP MLD ID (optional). AP 1 transmits whether to accept it to STA 1 and information described in 2.4.2. Roaming Response frame format for AP 4 and 5 through an MLD Roaming Response frame.

Referring to FIG. 51, a transmission and reception process of a STA is as follows.

STA 1 transmits an MLD Roaming Request frame for AP 4 and 5 to AP 1. Based on receiving roaming accept through reception of an MLD Roaming Response frame from AP 1, STA 1 roams to AP 4 based on received information on AP 4. Based on roaming of STA 1 being finished, STA 2 also roams to AP 4 based on whether to accept AP 5 received through STA 1 and information on AP 4 and 5.

### 3) Example #3 - A procedure for performing temporary add and delete respectively (this procedure may be performed simultaneously based on utilizing a Timer)

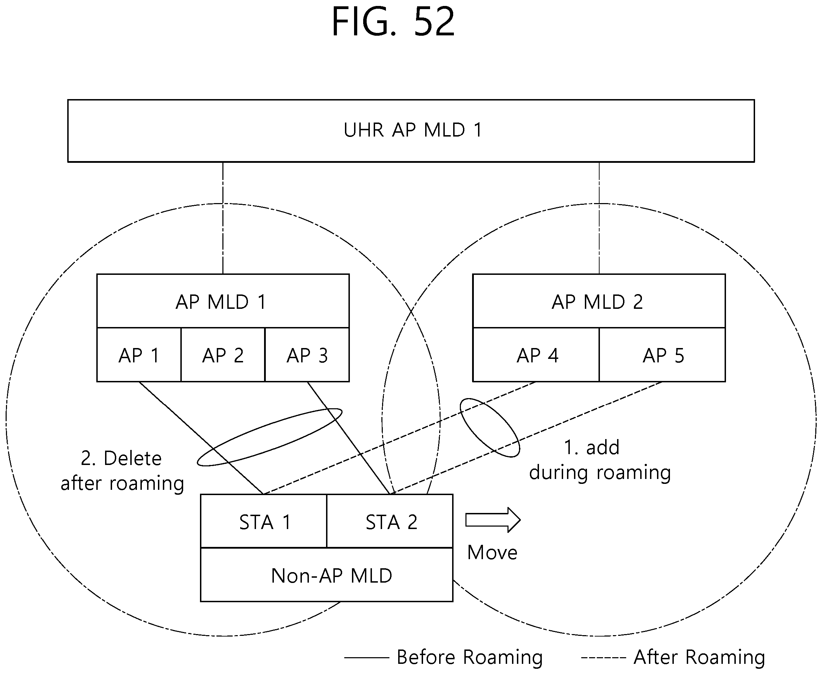

FIG. 52 illustrates example 3 for an MLD roaming procedure.

FIG. 52 is an example in which STA 1 first performs Temporary add for AP 4 and STA 2 performs Temporary add for AP 5, and next, AP 1 and AP 3 are deleted respectively.

In the present embodiment, for the Temporary add presented above, STA 1 and AP 1 or STA 2 and AP 3 may first exchange an MLD Roaming Request/Response. At this time, a UHR AP MLD ID (Optional), an AP MLD ID and a Link ID for AP 4 and AP 5 will be indicated in the MLD Roaming Request, and AP 1 or AP 3 will provide information on AP 4 and AP 5 by including it in a Basic Multi-link IE along with whether to accept it. Based on this process being completed, STA 1 will be temporarily connected with AP 1 and AP 4, and STA 2 will be temporarily connected with AP 3 and AP 5. STA 1 may transmit or receive data from AP 1 and AP 4. For example, based on performing frame exchange with AP 1, frame exchange with AP 4 may not be performed. Next, STA 1 performs a Temporary delete (or delete) operation for AP 1, and STA 2 performs it for AP 3. Through this procedure, roaming of STA 1 to AP 4 and STA 2 to AP 5 is completed.

The above example is a procedure for performing temporary add and delete respectively. Here, based on utilizing a Timer, this procedure may be performed simultaneously. For example, STA 1 and AP 1 or STA 2 and AP 3 may exchange an MLD Roaming Request/Response. At this time, Delete (or Temporary Delete) for AP 1 and AP 3 and Temporary add for AP 4 and AP 5 are simultaneously requested in the MLD Roaming Request. At this time, the MLD Roaming Timer presented above is set. This may be set by a non-AP MLD or an AP MLD through an MLD Roaming Response as mentioned above. After the MLD Roaming Response is successfully transmitted, the Timer operates, and based on the Timer expiring, an AP 1 link is deleted from STA 1 and completely connected with AP 4, and AP 3 is deleted from STA 2 and completely connected with AP 5.

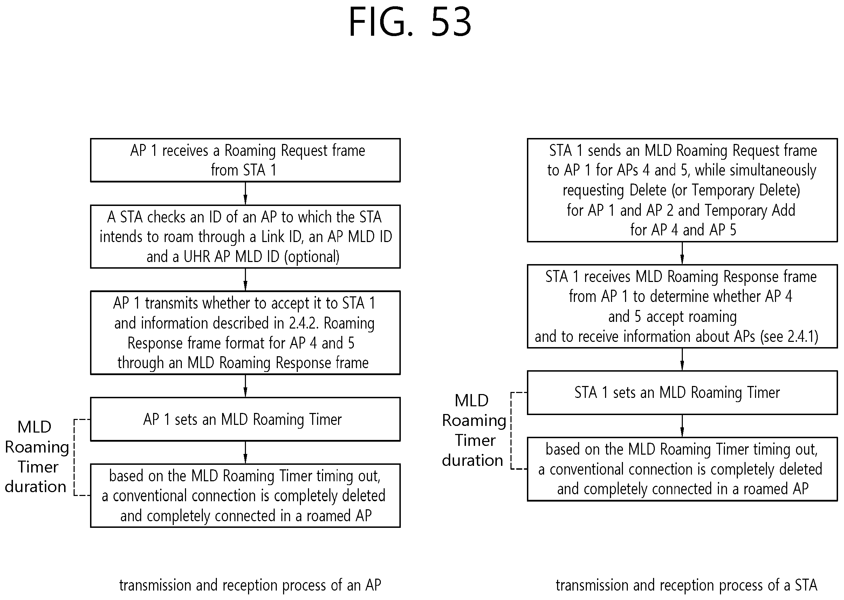

FIG. 53 shows an operation process of example 3 for an MLD roaming procedure.

Referring to FIG. 53, a transmission and reception process of an AP is as follows.

AP 1 receives a Roaming Request frame from STA 1. A STA checks an ID of an AP to which the STA intends to roam through a Link ID, an AP MLD ID and a UHR AP MLD ID (optional). AP 1 transmits whether to accept it to STA 1 and information described in 2.4.2. Roaming Response frame format for AP 4 and 5 through an MLD Roaming Response frame. AP 1 sets an MLD Roaming Timer. At this time, based on the MLD Roaming Timer timing out, a conventional connection is completely deleted and completely connected in a roamed AP.

Referring to FIG. 53, a transmission and reception process of a STA is as follows.

STA 1 transmits an MLD Roaming Request frame for AP 4 and 5 to AP 1. Based on receiving roaming accept through reception of an MLD Roaming Response frame from AP 1, STA 1 roams to AP 4 based on received information on AP 4. Based on roaming of STA 1 being finished, STA 2 also roams to AP 4 based on whether to accept AP 5 received through STA 1 and information on AP 4 and 5. STA 1 sets an MLD Roaming Timer. At this time, based on the MLD Roaming Timer timing out, a conventional connection is completely deleted and completely connected in a roamed AP.

### 4) Examples #4 to #6 - A procedure of add after delete or delete after add

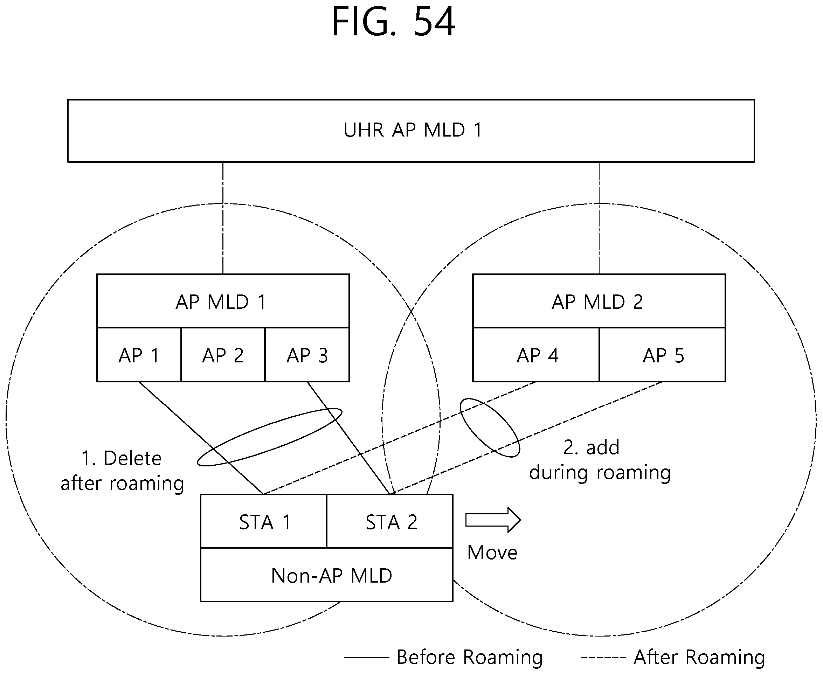

FIG. 54 illustrates example 4 for an MLD roaming procedure.

FIG. 54 is an example in which STA 1 first deletes (or temporary deletes) AP 1 and STA 2 deletes (or temporary deletes) AP 3, and next, AP 4 and AP 5 are added (or temporary added) respectively.

In the present embodiment, for the delete presented above, STA 1 and AP 1 or STA 2 and AP 3 may first exchange an MLD Roaming Request/Response. At this time, an (Optional) UHR AP MLD, an AP MLD ID and a Link ID for AP 4 and AP 5 will be indicated in the MLD Roaming Request, and AP 1 or AP 3 will provide information on AP 4 and AP 5 by including it in a Basic Multi-link IE along with whether to accept it. Based on this process being completed, STA 1 or STA 2 may disconnect a connection with AP 1 and AP 3. Based on data coming from an AP that has performed link delete even in a situation where one link is deleted, a STA that has not yet deleted may receive it instead, or a UHR AP MLD may send it to an AP to roam and transmit it after roaming. Next, STA 1 performs an add operation for AP 4, and STA 2 performs an add operation for AP 5. Through this procedure, roaming of STA 1 to AP 4 and STA 2 to AP 5 is completed.

The above example is a procedure for performing temporary add and delete respectively. Here, based on utilizing a Timer, this procedure may be performed simultaneously. For example, STA 1 and AP 1 or STA 2 and AP 3 may exchange an MLD Roaming Request/Response. At this time, Delete (or Temporary Delete) for AP 1 and AP 3 and add (or Temporary add) for AP 4 and AP 5 may be simultaneously requested in the MLD Roaming Request or may be separately transmitted. At this time, the MLD Roaming Timer presented above is set. This may be set by a non-AP MLD or an AP MLD through an MLD Roaming Response as mentioned above. After the MLD Roaming Response is successfully transmitted, the Timer operates, and based on the Timer expiring, an AP 1 link is deleted from STA 1 and completely connected with AP 4, and AP 3 is deleted from STA 2 and completely connected with AP 5.

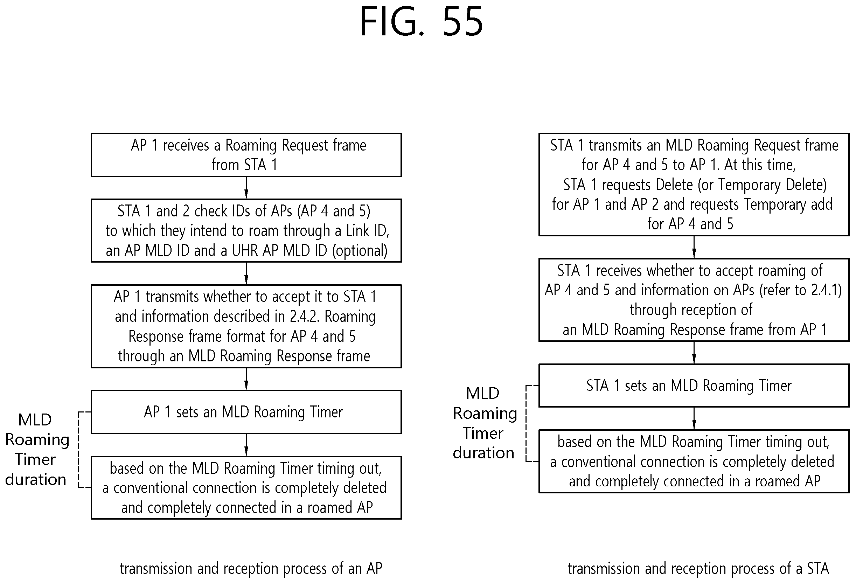

FIG. 55 shows an operation process of examples 3 and 4 for an MLD roaming procedure.

Referring to FIG. 55, a transmission and reception process of an AP is as follows.

AP 1 receives a Roaming Request frame from STA 1. STA 1 and 2 check IDs of APs (AP 4 and 5) to which they intend to roam through a Link ID, an AP MLD ID and a UHR AP MLD ID (optional). AP 1 transmits whether to accept it to STA 1 and information described in 2.4.2. Roaming Response frame format for AP 4 and 5 through an MLD Roaming Response frame. AP 1 sets an MLD Roaming Timer. At this time, based on the MLD Roaming Timer timing out, a conventional connection is completely deleted and completely connected in a roamed AP.

Referring to FIG. 55, a transmission and reception process of a STA is as follows.

STA 1 transmits an MLD Roaming Request frame for AP 4 and 5 to AP 1. At this time, STA 1 requests Delete (or Temporary Delete) for AP 1 and AP 2 and requests Temporary add for AP 4 and 5. STA 1 receives whether to accept roaming of AP 4 and 5 and information on APs (refer to 2.4.1) through reception of an MLD Roaming Response frame from AP 1. STA 1 sets an MLD Roaming Timer. At this time, based on the MLD Roaming Timer timing out, a conventional connection is completely deleted and completely connected in a roamed AP.

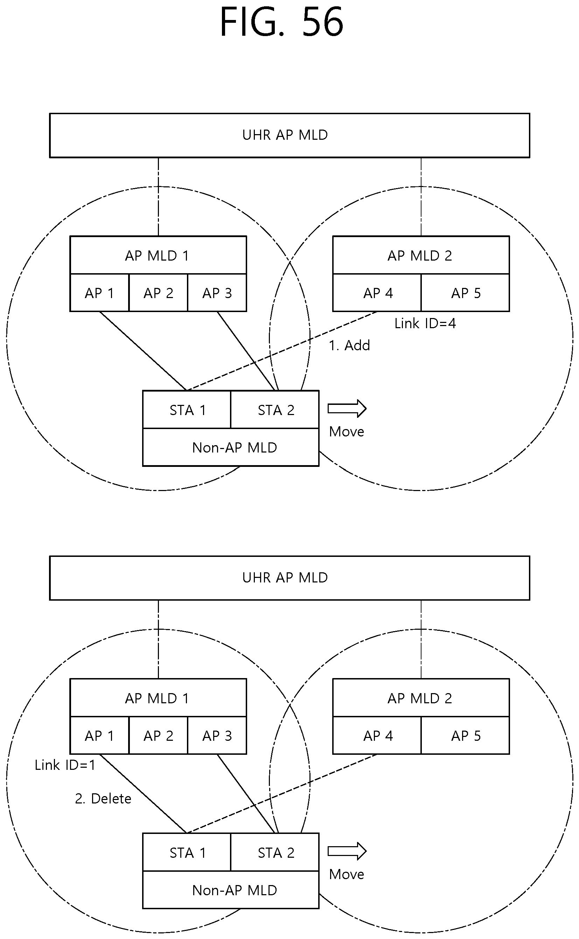

FIG. 56 illustrates example 5 for an MLD roaming procedure.

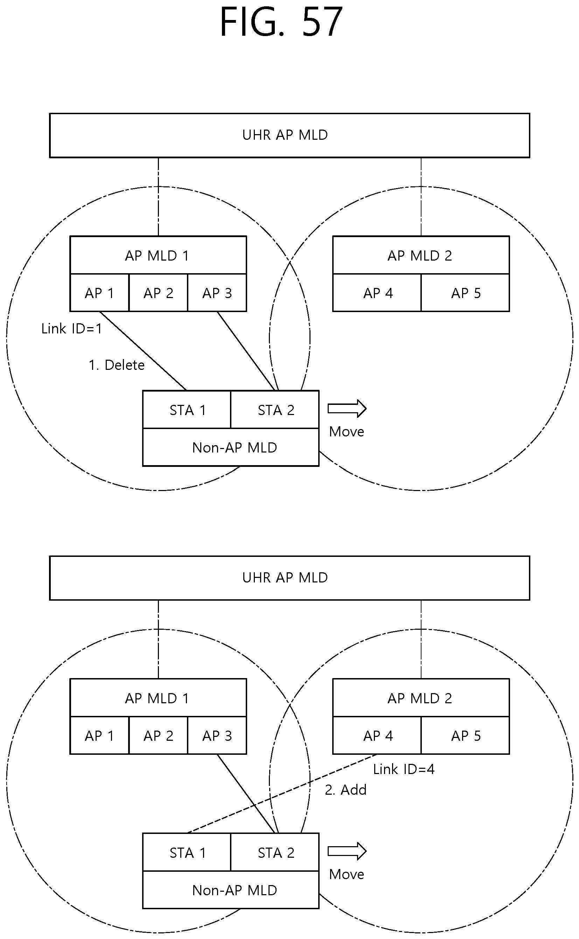

FIG. 57 illustrates example 6 for an MLD roaming procedure.

FIG. 56 and FIG. 57 are embodiments of a method of setting a Type field of an MLD Request frame based on simultaneously sending link add and delete requests. FIG. 56 is a case where a non-AP MLD first requests link add to roam to a new AP MLD (AP MLD 2), and based on a connection between STA 1 and AP 4 being created, requests delete for a connection with AP 1 that was conventionally connected with STA 1. Based on requesting Add and Delete, it may be requested to an AP to which the request is sent using a Link ID and an AP MLD ID. Based on sending a Delete request and the connection between STA 1 and AP 1 being completely deleted, STA 1 cannot transmit or receive data with AP MLD 1, but since STA 2 of the non-AP MLD is connected with AP 3 of AP MLD 1, the non-AP MLD and AP MLD 1 may transmit and receive data. Therefore, data discontinuity may be reduced in a roaming process. Based on a link change of STA 1 being completed, STA 2 may also similarly request link add to AP 5 and then disconnect a connection with AP 3 to completely roam to the new AP MLD 2. At this time, since AP MLD 1 and AP MLD 2 are affiliated with the same AP MLD for a seamless roaming, data accumulated in a queue of AP MLD 1 may be handed over to AP MLD 2. FIG. 57 has the same overall roaming procedure as FIG. 56, but adds a link with AP MLD 2 after deleting a link first.

Based on adding and deleting a link, two requests may be made by requesting one by one in an MLD Roaming Request frame, or two operations may be simultaneously requested in one frame. Based on requesting simultaneously, an MLD Roaming Request frame may be configured in a method of the 3-1) Embodiment of a case of simultaneously sending add and delete requests - based on intending to add a new link first and delete a conventional link of 2.4.1 MLD Roaming Request frame format based on a case of FIG. 56, and an MLD Roaming Request frame may be configured in a method of the 3-2) Embodiment of a case of simultaneously sending add and delete requests - based on intending to delete a conventional link first and add a new link of 2.4.1 MLD Roaming Request frame format based on a case of FIG. 57. For example, a Link Info field may be configured with two Per-STA Profiles (one Per-STA Profile for add and another Per-STA Profile for delete). Based on requesting Add and Delete individually, a configuration of an MLD Roaming Request frame sending an add/delete request first may be configured as in a case of being included in 1) MLD Roaming Request frame body or a Common Info field of a Reconfiguration IE of 2.4.1 MLD Roaming Request frame format, a case of being included in a Link Info field of 2-1) MLD Roaming Request frame body or a Reconfiguration IE, or a case of being included in a Link Info field of 2-2) MLD Roaming Request frame body or a Reconfiguration IE. Thereafter, a Response to the request is received as an MLD Roaming Response frame, and whether to accept/reject the MLD Roaming Request frame may be known through a Status Code.

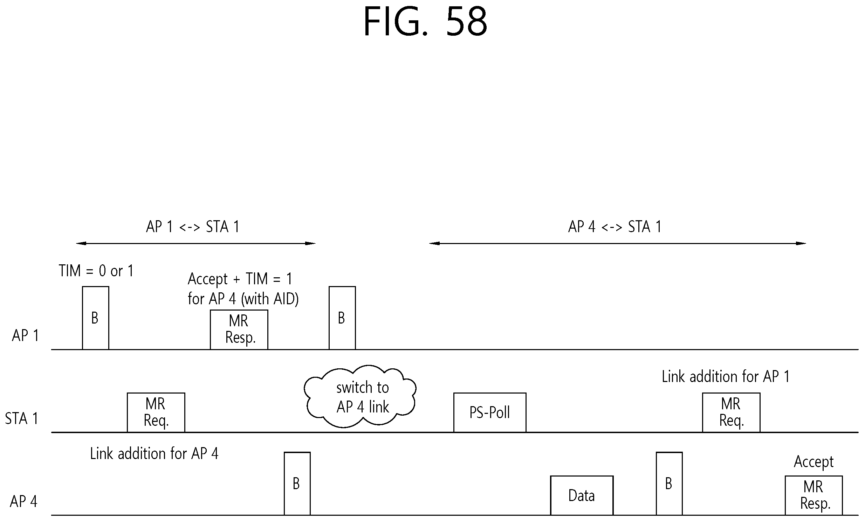

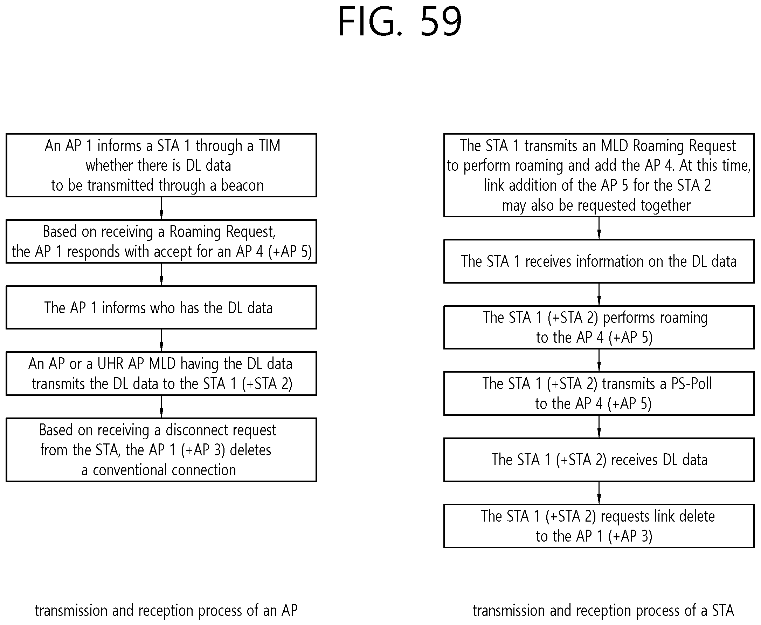

In addition, in order for STA 1 to completely transition from AP 1 to AP 4, processes such as FIG. 58 and FIG. 59 are required.

FIG. 58 shows an example of MLD roaming utilizing a TIM.

An AP 1 informs a STA 1 through a TIM whether there is DL data to be transmitted to the STA 1 through a beacon. At this time, in order for the STA 1 to add an AP 4 to perform roaming, the STA 1 transmits an MLD Roaming Request. For reference, although this example includes only STA 1, link addition of AP 5 for STA 2 may also be requested together as in FIG. 44. The AP 1 checks this and responds with accept for the AP 4. However, the STA 1 may have received information from a recent beacon of the AP 1 that DL data is not being buffered, or may not have received it yet even based on being buffered. Therefore, the AP 1 may inform the STA 1 that the AP 4 or a UHR AP MLD has the corresponding DL data. For example, based on switching to the AP 4, the STA 1 may receive DL data by transmitting a PS-poll to the AP 4 immediately without waiting until receiving a beacon. For this, additional information needs to be indicated in an MLD Roaming Response frame, and the corresponding information is as follows.
-> Traffic Indication Map (TIM) field (for example, 1 bit): This indicates that the corresponding AP or AP MLD is currently buffering DL data for the requested STA.

From an MLD-level perspective, based on a UHR AP MLD informing that DL data for a requested STA is being buffered, the TIM field may be included in an MLD Roaming Response frame body or a Common Info field.

From the perspective of the corresponding AP, for example, based on informing that the AP 4 has DL data before switching to the AP 4, the TIM field may be included in a Link Info field.

Meanwhile, additionally, a STA (for example, STA 1) may determine a time to switch by utilizing an MLD Roaming Timer of the MLD Roaming Response frame. For example, based on much time remaining until receiving data from an AP to roam (e.g., AP 4) before switching, the STA 1 may first receive DL data through PS-Poll (if necessary) to a currently connected AP (e.g., AP 1) and then switch. Alternatively, based on being a time at which data may be received from the AP 4 even based on switching immediately, the STA 1 may switch immediately.

FIG. 59 shows an operation process for an MLD roaming procedure utilizing a TIM.

Referring to FIG. 59, a transmission and reception process of an AP is as follows.

An AP 1 informs a STA 1 through a TIM whether there is DL data to be transmitted through a beacon. Based on receiving a Roaming Request, the AP 1 responds with accept for an AP 4 (+AP 5). The AP 1 informs who has the DL data. An AP or a UHR AP MLD having the DL data transmits the DL data to the STA 1 (+STA 2). Based on receiving a disconnect request from the STA, the AP 1 (+AP 3) deletes a conventional connection.

Referring to FIG. 59, a transmission and reception process of a STA is as follows.

The STA 1 transmits an MLD Roaming Request to perform roaming and add the AP 4. At this time, link addition of the AP 5 for the STA 2 may also be requested together. The STA 1 receives information on the DL data. The STA 1 (+STA 2) performs roaming to the AP 4 (+AP 5). The STA 1 (+STA 2) transmits a PS-Poll to the AP 4 (+AP 5) and receives DL data accordingly. The STA 1 (+STA 2) requests link delete to the AP 1 (+AP 3).

### 2.6 Roaming Procedure using Context transfer

### <Baseline of Roaming Procedure>

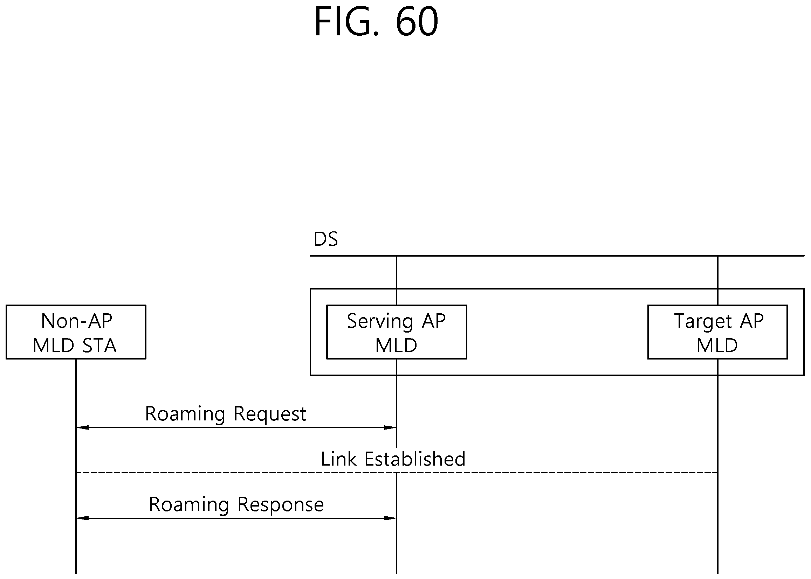

FIG. 60 illustrates a basic procedure of a Roaming Procedure.

Referring to FIG. 60, based on a non-AP MLD or an AP MLD transmitting a Roaming Request and a link being formed between a Target AP MLD and a Non-AP MLD, an AP MLD or a non-AP MLD may inform information on success/fail regarding link establishment through a roaming response through a Roaming Response. A Roaming Request and a Roaming Response may be transmitted by a non-AP MLD or an AP MLD, and based on a Serving AP MLD and a Target AP MLD being connected by backhaul, contents regarding a Roaming Request/Response are shared with each other.

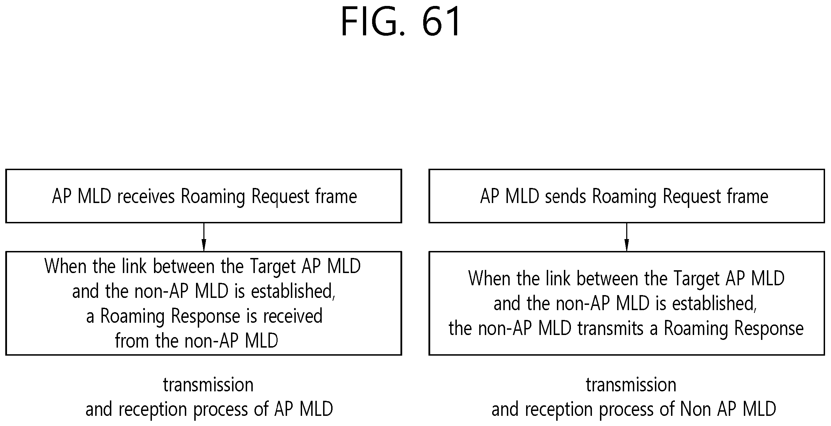

FIG. 61 illustrates an example of a Baseline of a Roaming Procedure.

FIG. 61 illustrates operation procedures based on a case where a Non-AP MLD transmits a Roaming Request and a case where a Non-AP MLD transmits a Roaming Response.

Referring to FIG. 61, an AP MLD transmission and reception process is as follows.

An AP MLD receives a Roaming Request frame from a non-AP MLD. Based on a link being formed between a Target AP MLD and a non-AP MLD, the AP MLD receives a Roaming Response frame from the non-AP MLD.

Referring to FIG. 61, a Non-AP MLD transmission and reception process is as follows.

A Non-AP MLD transmits a Roaming Request frame to an AP MLD. Based on a link being formed between a Target AP MLD and a non-AP MLD, the non-AP MLD transmits a Roaming Response frame to the AP MLD.

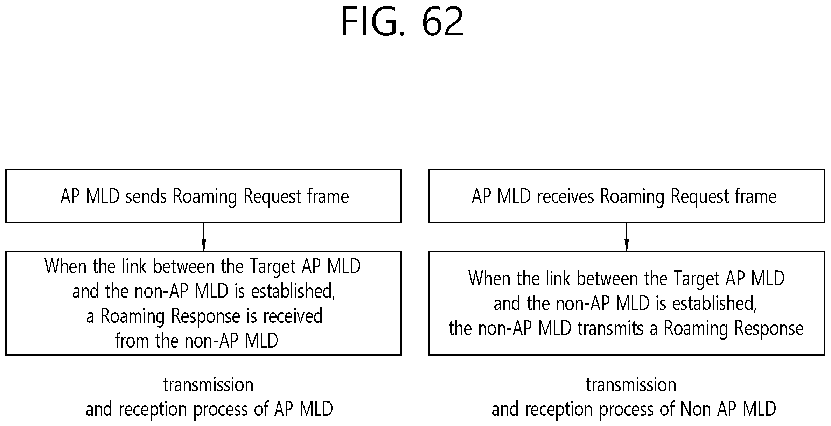

FIG. 62 illustrates another example of a Baseline of a Roaming Procedure.

FIG. 62 illustrates operation procedures based on a case where an AP MLD transmits a Roaming Request and a case where a Non-AP MLD transmits a Roaming Response.

Referring to FIG. 62, an AP MLD transmission and reception process is as follows.

An AP MLD transmits a Roaming Request frame to a non-AP MLD. Based on a link being formed between a Target AP MLD and a non-AP MLD, the AP MLD receives a Roaming Response frame from the non-AP MLD.

Referring to FIG. 62, a Non-AP MLD transmission and reception process is as follows.

A Non-AP MLD receives a Roaming Request frame from an AP MLD. Based on a link being formed between a Target AP MLD and a non-AP MLD, the non-AP MLD transmits a Roaming Response frame to the AP MLD.

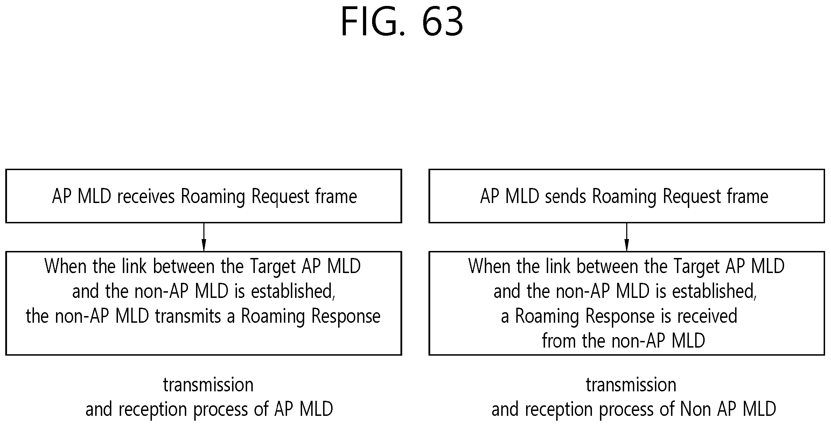

FIG. 63 illustrates another example of a Baseline of a Roaming Procedure.

FIG. 63 illustrates operation procedures based on a case where a Non-AP MLD transmits a Roaming Request and a case where an AP MLD transmits a Roaming Response.

Referring to FIG. 63, an AP MLD transmission and reception process is as follows.

An AP MLD receives a Roaming Request frame from a non-AP MLD. Based on a link being formed between a Target AP MLD and a non-AP MLD, the AP MLD transmits a Roaming Response frame to the non-AP MLD.

Referring to FIG. 63, a Non-AP MLD transmission and reception process is as follows.

A Non-AP MLD transmits a Roaming Request frame to an AP MLD. Based on a link being formed between a Target AP MLD and a non-AP MLD, the non-AP MLD receives a Roaming Response frame from the AP MLD.

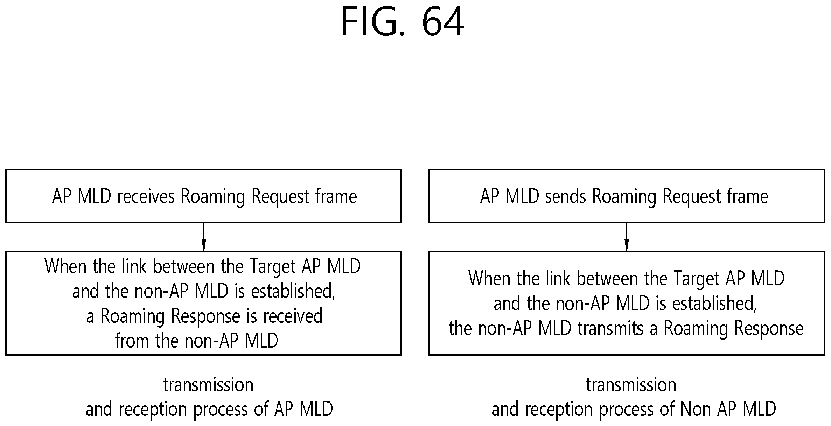

FIG. 64 illustrates another example of a Baseline of a Roaming Procedure.

FIG. 64 illustrates operation procedures based on a case where an AP MLD transmits a Roaming Request and a case where an AP MLD transmits a Roaming Response.

Referring to FIG. 64, an AP MLD transmission and reception process is as follows.

An AP MLD transmits a Roaming Request frame to a non-AP MLD. Based on a link being formed between a Target AP MLD and a non-AP MLD, the AP MLD transmits a Roaming Response frame to the non-AP MLD.

Referring to FIG. 64, a Non-AP MLD transmission and reception process is as follows.

A Non-AP MLD receives a Roaming Request frame from an AP MLD. Based on a link being formed between a Target AP MLD and a non-AP MLD, the non-AP MLD receives a Roaming Response frame from the AP MLD.

### 2.6. Context Transfer Level

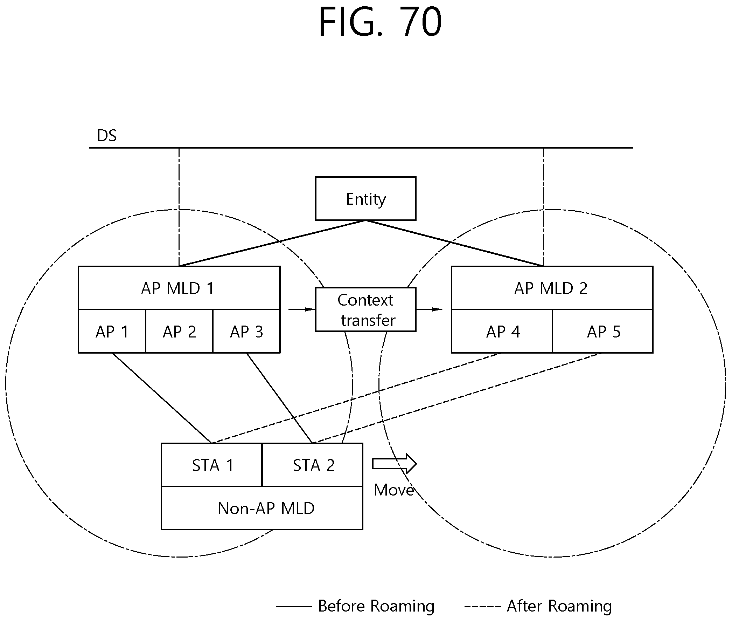

Based on a non-AP STA roaming to a new AP MLD, to prevent a data discontinuity phenomenon due to a phenomenon such as packet loss, necessary information from a previously connected AP MLD may be proactively transmitted to the new AP MLD before the non-AP STA performs roaming using context transfer as in an example shown in FIG. 70 to be described later. In this case, the non-AP STA waits for a time during which context transfer is performed after requesting roaming and performs roaming, and as an amount of information for context transfer increases, a delay caused by the context transfer increases. Here, a concept of a Context Transfer Level in which only necessary information may be transferred to avoid a delay phenomenon caused by unnecessary context transfer based on a situation in which context transfer is not required is defined. For the Context Transfer Level, based on performing a Roaming Request, the non-AP STA may specify the Context Transfer Level, or a Serving AP MLD may specify it and inform the non-AP STA of it. Based on a case in which the non-AP MLD STA does not need to know the Context Transfer Level, the Context Transfer Level may not be informed to the non-AP MLD STA.

The Context Transfer Level may be set by at least one or more of following methods.

### 1) Accumulation method

Context Transfer Level = 0: transfer a Context A
Context Transfer Level = 1: transfer Contexts A + B

...

As described above, it is a method including contexts transferred at a previous Context Transfer Level and a new context.

Examples of contexts such as A and B to be transferred may be as follows.
A = Sequence Number (SN)
B = Packet Number (PN)
C = BA agreement
D = BA parameters

...

The above example is merely an example, and is not limited to the corresponding example. In addition, more types of contexts than the mentioned examples may be defined.

### 2) Independent method

Context Transfer Level = 0: Context A
Context Transfer Level = 1: Context B

...

In the Independent method, based on selecting only one Context Transfer Level, only one Context may be sent, or based on selecting a plurality of Context Transfer Levels, a plurality of Contexts may be transferred.

Based on selecting Context Transfer Level 1, only Context B is transferred, and based on selecting Context Transfer Levels 0 and 1, both Contexts A and B are transferred.

Examples of Contexts A and B may be the same as the examples given in 1) Accumulation method.

### 3) Bitmap

As an alternative to the methods 1) and 2), a level for Context Transfer may be set by a bitmap.

For example, based on the Bitmap being X bits, B0 may be set as Context A, and B1 may be set as Context B.

In addition, as in 2) Independent method, a configuration may be made to transfer not only one type of context but a plurality of types of contexts by combining a plurality of bits.

As another example, information on Context based on a value of a bit may also be set as follows.

**[Table 6]**

| **Context Transfer Level** | **Context Transferred** |
|---|---|
| 0 | No Context transfer |
| 1 | SN/PN |
| 2 | BA Agreement |
| 3 | Packet Reordering |
| 4-15 | Reserved |

For example, based on roaming being possible with only an entity or a UHR MLD without context transfer, a Context Transfer Level is set to 0. Based on needing to transmit only SN/PN information through Context Transfer, the Context Transfer Level is set to 1. Contexts included in a value of the Context Transfer Level may use an accumulation method. Based on the Context Transfer Level being set to 3, Context Transferred items having values of 1 and 2 are included. The accumulation method is one of several methods and is not limited to the above method.

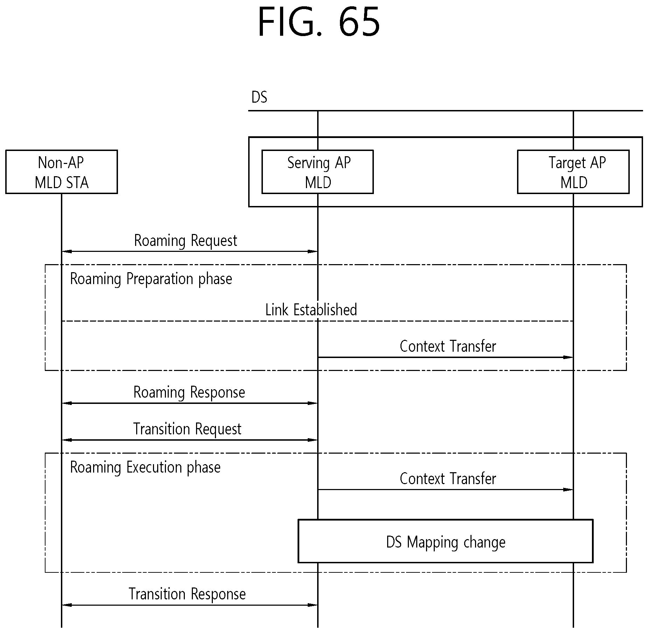

FIG. 65 illustrates an example of a baseline of a Roaming Procedure including Roaming Preparation and Execution phases during an MLD Roaming Request/Response procedure.

A Roaming Procedure may be divided into a Roaming Preparation phase and a Roaming Execution phase. In the Roaming Preparation phase, link setup between a non-AP MLD and a Target AP MLD is performed, and a first context transfer occurs. In the Roaming Execution phase, a second context transfer occurs, and DS Mapping is changed from a Serving AP MLD to a Target AP MLD. In this case, an update on the DS Mapping change occurs.

In the first context transfer, static information (e.g., SCS) may be transferred, and in the second context transfer, dynamic contexts may be transmitted.

Items to be context-transferred may be requested by the non-AP MLD, and may be requested through a Roaming Request frame. They may be requested only in the Preparation phase, or may be additionally requested in the Roaming Execution phase. The non-AP MLD may separately indicate an item that it does not want to context-transfer.

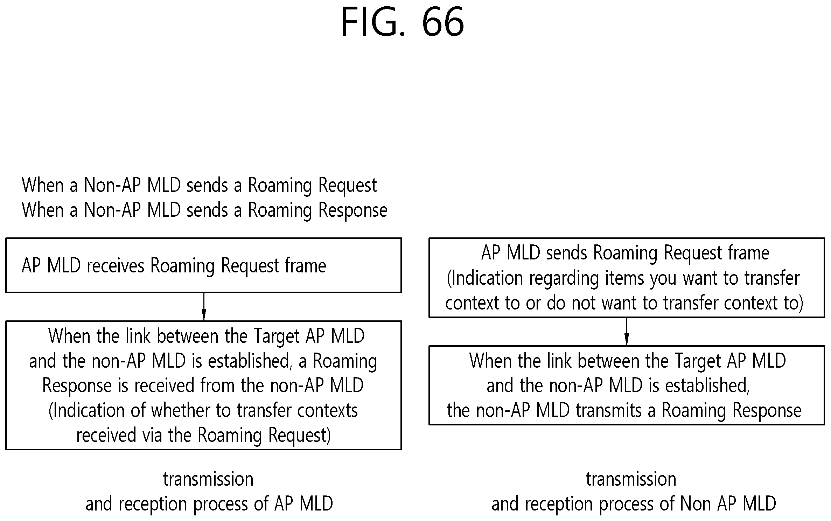

FIG. 66 illustrates an example of a baseline of a Roaming Procedure including Roaming Preparation and Execution phases.

FIG. 66 includes a case based on a non-AP MLD transmitting a Roaming Request and a case based on a non-AP MLD transmitting a Roaming Response.

Referring to FIG. 66, an AP MLD transmission and reception process is as follows.

An AP MLD receives a Roaming Request frame from a non-AP MLD. Based on a link between a Target AP MLD and the non-AP MLD being established, the AP MLD receives a Roaming Response frame from the non-AP MLD. In this case, whether to transfer contexts received through the Roaming Request may be indicated through the Roaming Response frame.

Referring to FIG. 66, a non-AP MLD transmission and reception process is as follows.

A non-AP MLD transmits a Roaming Request frame to an AP MLD. In this case, an item desired for context transfer or an item not desired for context transfer may be indicated through the Roaming Request frame. Based on a link between a Target AP MLD and the non-AP MLD being established, the non-AP MLD transmits a Roaming Response frame to the AP MLD.

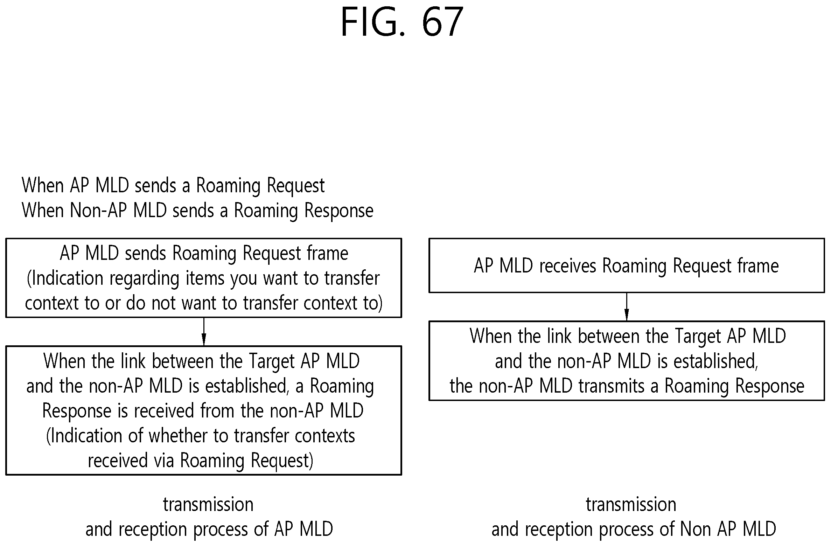

FIG. 67 illustrates another example of a baseline of a Roaming Procedure including Roaming Preparation and Execution phases.

FIG. 67 includes a case based on an AP MLD transmitting a Roaming Request and a case based on a non-AP MLD transmitting a Roaming Response.

Referring to FIG. 67, an AP MLD transmission and reception process is as follows.

An AP MLD transmits a Roaming Request frame to a non-AP MLD. In this case, an item desired for context transfer or an item not desired for context transfer may be indicated through the Roaming Request frame. Based on a link between a Target AP MLD and the non-AP MLD being established, the AP MLD receives a Roaming Response frame from the non-AP MLD. In this case, whether to transfer contexts received through the Roaming Request may be indicated through the Roaming Response frame.

Referring to FIG. 67, a non-AP MLD transmission and reception process is as follows.

A non-AP MLD transmits a Roaming Request frame to an AP MLD. Based on a link between a Target AP MLD and the non-AP MLD being established, the non-AP MLD transmits a Roaming Response frame to the AP MLD.

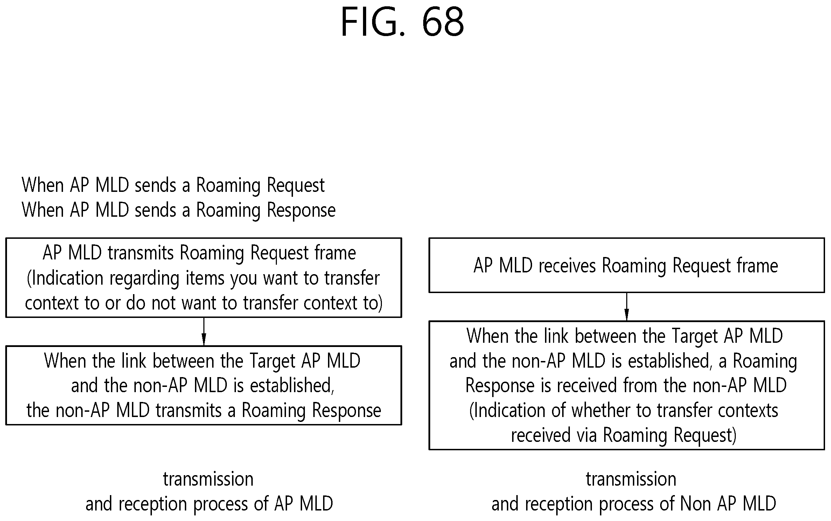

FIG. 68 illustrates another example of a baseline of a Roaming Procedure including Roaming Preparation and Execution phases.

FIG. 68 includes a case based on an AP MLD transmitting a Roaming Request and a case based on an AP MLD transmitting a Roaming Response.

Referring to FIG. 68, an AP MLD transmission and reception process is as follows.

An AP MLD transmits a Roaming Request frame to a non-AP MLD. In this case, an item desired for context transfer or an item not desired for context transfer may be indicated through the Roaming Request frame. Based on a link between a Target AP MLD and a non-AP MLD being established, the AP MLD transmits a Roaming Response frame to the non-AP MLD.

Referring to FIG. 68, a non-AP MLD transmission and reception process is as follows.

A non-AP MLD receives a Roaming Request frame from an AP MLD. Based on a link between a Target AP MLD and the non-AP MLD being established, the non-AP MLD receives a Roaming Response frame from the AP MLD. In this case, whether to transfer contexts received through the Roaming Request may be indicated through the Roaming Response frame.

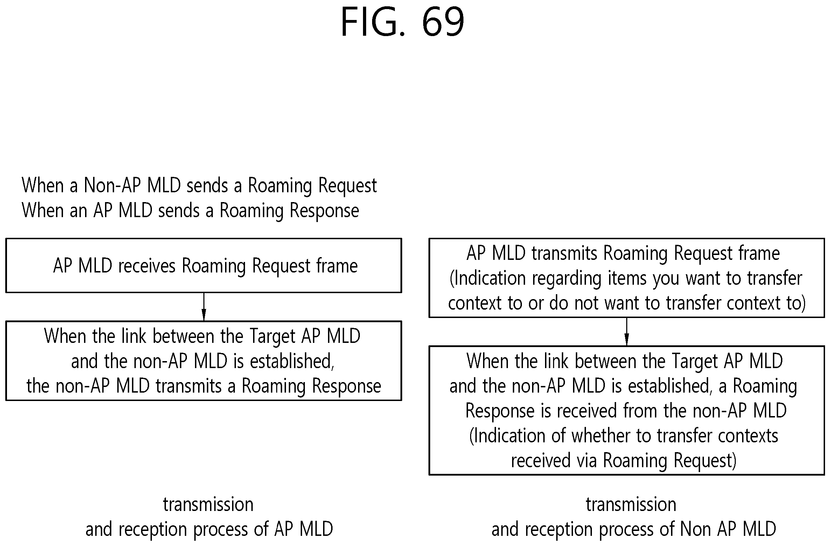

FIG. 69 illustrates another example of a baseline of a Roaming Procedure including Roaming Preparation and Execution phases.

FIG. 69 includes a case based on a non-AP MLD transmitting a Roaming Request and a case based on an AP MLD transmitting a Roaming Response.

Referring to FIG. 69, an AP MLD transmission and reception process is as follows.

An AP MLD receives a Roaming Request frame from a non-AP MLD. Based on a link between a Target AP MLD and a non-AP MLD being established, the AP MLD transmits a Roaming Response frame to the non-AP MLD.

Referring to FIG. 69, a non-AP MLD transmission and reception process is as follows.

A non-AP MLD transmits a Roaming Request frame to an AP MLD. In this case, an item desired for context transfer or an item not desired for context transfer may be indicated through the Roaming Request frame. Based on a link between a Target AP MLD and the non-AP MLD being established, the non-AP MLD receives a Roaming Response frame from the AP MLD. In this case, whether to transfer contexts received through the Roaming Request may be indicated through the Roaming Response frame.

### <Roaming Procedure Using Context Transfer>

FIG. 70 illustrates an example of a Roaming Procedure using context transfer (only Entity exists).

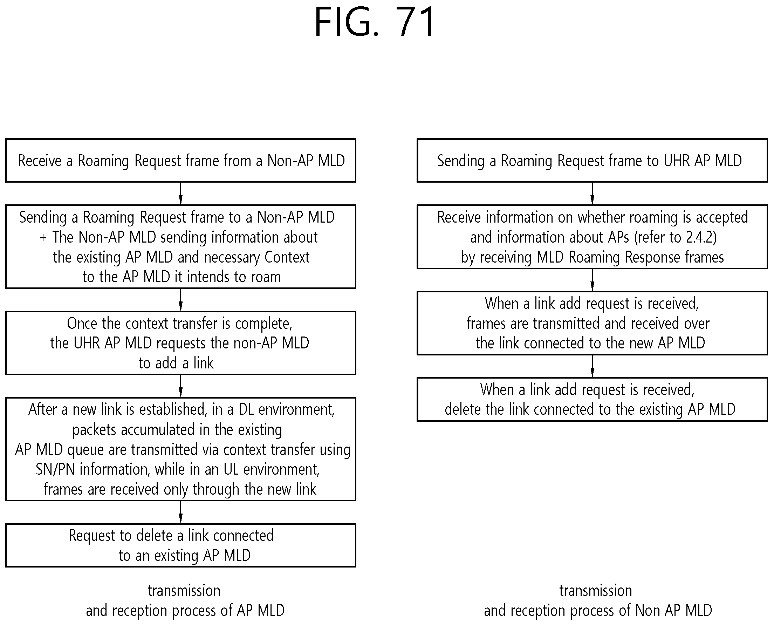

FIG. 70 is an example of a Roaming process based on a case where context transfer is present. Based on a non-AP MLD transmitting a Roaming Request, a process as shown in FIG. 71 is included. First, to perform roaming, a non-AP STA transmits ID information of an AP to perform roaming to a UHR AP MLD or an AP MLD through a Roaming Request frame. In addition, contexts to be transferred may be determined using a Context Transfer Level field of the Roaming Request frame. The UHR AP MLD or AP MLD receiving the Roaming Request frame informs whether roaming to the requested AP is possible and the Context Transfer Level through transmission of a Roaming Response frame. Based on receiving the Roaming Request frame from the non-AP MLD, the UHR AP MLD or AP MLD transmits control contexts to be transferred set in the Context Transfer Level to an AP MLD to roam through a DS. Based on the Context Transfer Level being set to 0, context transfer is not performed. Based on context transfer being completed, the AP MLD requests link add from the non-AP MLD, and based on a link being formed between the AP MLD to roam and the non-AP MLD, in a case of downlink (DL), an AP MLD after roaming transmits packets that were queued in an AP MLD prior to roaming based on Sequence Number (SN)/Packet Number (PN) information received through context transfer but not transmitted due to roaming to the non-AP STA. Thereafter, new packets received from the DS are received through the AP MLD after roaming. In a case of uplink (UL), the non-AP STA transmits a packet to the AP MLD after roaming. The AP MLD requests link delete for all links connected to the AP MLD prior to roaming and the non-AP STA, and based on deletion of all links being completed, the roaming process ends.

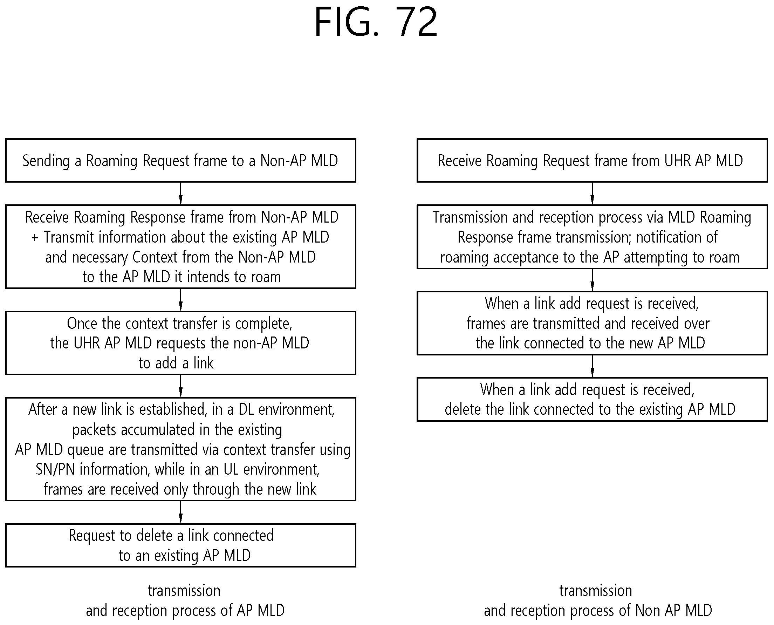

FIG. 72 is a process example based on a case where an AP MLD transmits a Roaming Request. Based on a case where the AP MLD transmits a Roaming Request, capability information on a degree to which the AP MLD may perform context transfer may be informed through the Context Transfer Level. In such a case, based on the non-AP STA transmitting a Roaming Response, a Context Transfer Level value is set to a value less than or equal to a Context Transfer Level value of the Roaming Request.

FIG. 71 illustrates an example of a roaming process using context transfer.

FIG. 71 is a process example based on a case where a non-AP MLD transmits a Roaming Request.

Referring to FIG. 71, an AP MLD transmission and reception process is as follows.

An AP MLD receives a Roaming Request frame from a non-AP MLD. The AP MLD transfers information on an existing AP MLD (Serving AP MLD) and necessary contexts to a Target AP MLD to which the non-AP MLD intends to roam. Based on context transfer being completed, a UHR AP MLD (or entity) requests link add from the non-AP MLD. After a new link is formed, in a DL environment, the Target AP MLD transmits packets queued in an existing AP MLD queue based on Sequence Number (SN)/Packet Number (PN) information received through context transfer. In a UL environment, the Target AP MLD receives a frame only through the new link. The Target AP MLD requests link delete for a link connected to the existing AP MLD.

Referring to FIG. 71, a non-AP MLD transmission and reception process is as follows.

A non-AP MLD transmits a Roaming Request frame to a UHR AP MLD (or Serving AP MLD). The non-AP MLD receives information on APs and whether roaming is accepted through reception of a Roaming Response frame. Based on receiving a link add request, the non-AP MLD transmits and receives frames through a link connected to a new AP MLD (Target AP MLD). Based on receiving a link delete request, the non-AP MLD deletes a link connected to the existing AP MLD (Serving AP MLD).

FIG. 72 illustrates another example of a roaming process using context transfer.

FIG. 72 is a process example based on a case where an AP MLD transmits a Roaming Request.

Referring to FIG. 72, an AP MLD transmission and reception process is as follows.

An AP MLD transmits a Roaming Request frame to a non-AP MLD. The AP MLD transfers information on an existing AP MLD (Serving AP MLD) and necessary contexts to a Target AP MLD to which the non-AP MLD intends to roam. Based on context transfer being completed, a UHR AP MLD (or entity) requests link add from the non-AP MLD. After a new link is formed, in a DL environment, the Target AP MLD transmits packets queued in an existing AP MLD queue based on Sequence Number (SN)/Packet Number (PN) information received through context transfer. In a UL environment, the Target AP MLD receives a frame only through the new link. The Target AP MLD requests link delete for a link connected to the existing AP MLD.

Referring to FIG. 72, a non-AP MLD transmission and reception process is as follows.

A non-AP MLD receives a Roaming Request frame from a UHR AP MLD (or Serving AP MLD). The non-AP MLD receives information on APs and whether roaming is accepted through reception of a Roaming Response frame. Based on receiving a link add request, the non-AP MLD transmits and receives frames through a link connected to a new AP MLD (Target AP MLD). Based on receiving a link delete request, the non-AP MLD deletes a link connected to the existing AP MLD (Serving AP MLD).

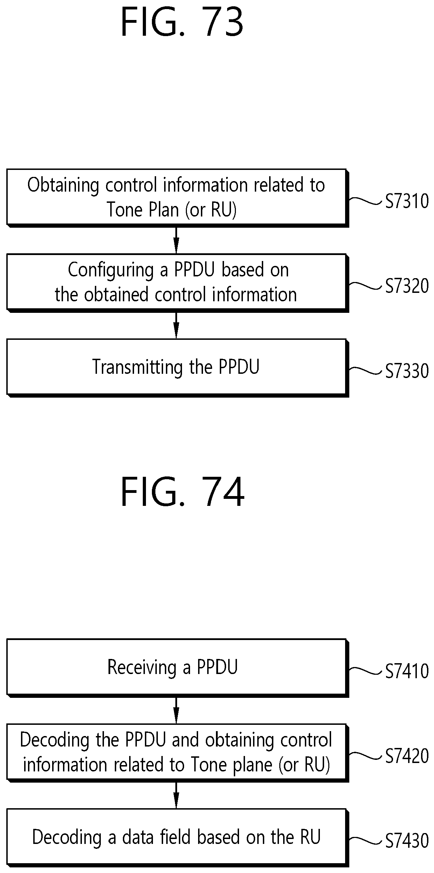

FIG. 73 is a flowchart illustrating an operation of a transmitting apparatus according to the present embodiment.

The example of FIG. 73 may be performed by a transmitting device (AP and/or non-AP STA).

Some of each step (or detailed sub-step to be described later) of the example of FIG. 73 may be skipped/omitted.

Through step S7310, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S7320, the transmitting device may construct/generate a PPDU based on the acquired control information. Configuring/generating the PPDU may include configuring/generating each field of the PPDU. That is, step S7320 includes configuring the EHT-SIG field including control information about the tone plan. That is, step S7320 includes configuring a field including control information (e.g., N bitmap) indicating the size/position of the RU; and/or configuring a field including an identifier of an STA receiving the RU (e.g., AID).

Also, step S7320 may include generating an STF/LTF sequence transmitted through a specific RU. The STF/LTF sequence may be generated based on a preset STF generation sequence/LTF generation sequence.

Also, step S7320 may include generating a data field (i.e., MPDU) transmitted through a specific RU.

The transmitting device may transmit the PPDU constructed through step S7320 to the receiving device based on step S7330.

While performing step S7330, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 74 is a flowchart illustrating an operation of a receiving apparatus according to the present embodiment.

The aforementioned PPDU may be received according to the example of FIG. 74.

The example of FIG. 74 may be performed by a receiving apparatus/device (AP and/or non-AP STA).

Some of each step (or detailed sub-step to be described later) of the example of FIG. 74 may be skipped/omitted.

The receiving device (receiving STA) may receive all or part of the PPDU through step S7410. The received signal may be in the form of FIG. 5.

A sub-step of step S7410 may be determined based on step S7330 of FIG. 73. That is, in step S7410, an operation of restoring the result of the CSD, Spatial Mapping, IDFT/IFFT operation, and GI insertion operation applied in step S7330 may be performed.

In step S7420, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S7430, the receiving device may decode the remaining part of the PPDU based on information about the tone plan (i.e., RU) acquired through step S7420. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S7430 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 74.

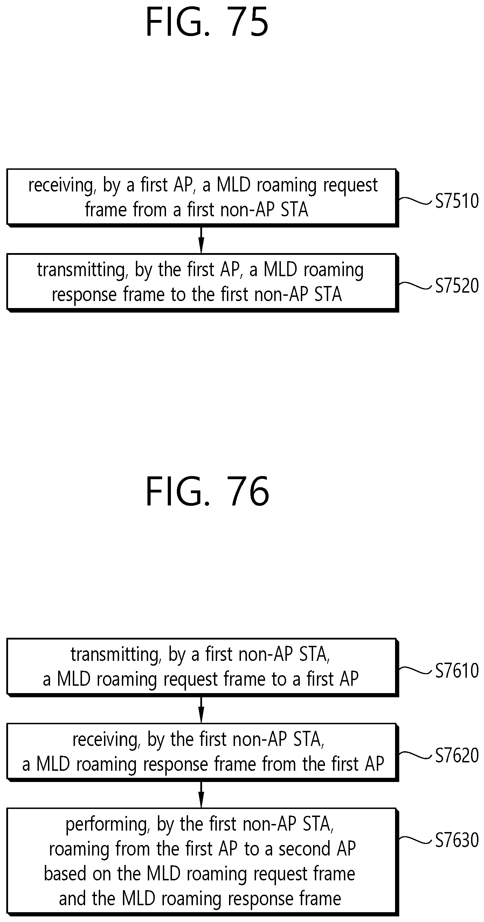

FIG. 75 is a flowchart illustrating a procedure in which an AP performs MLD roaming using context transfer according to the present embodiment.

The example of FIG. 75 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The present embodiment proposes a method of selecting a context to be transferred from a Serving AP MLD to a Target AP MLD based on information on a context transfer level in an exchange procedure of a Roaming Request frame and a Roaming Response frame for MLD roaming. Specifically, the present embodiment has an effect that a delay due to unnecessary context transfer may be prevented by selectively transferring contexts based on whether re-negotiation between a non-AP STA and a Target AP MLD is performed.

In step S7510, a first access point (AP) receives a multi-link device (MLD) Roaming Request frame from a first non-access point station (non-AP STA).

In step S7520, the first AP transmits an MLD Roaming Response frame to the first non-AP STA.

Roaming from the first AP to a second AP is performed based on the MLD Roaming Request frame and the MLD Roaming Response frame.

The first AP is affiliated with a first AP multi-link device (MLD), and the second AP is affiliated with a second AP MLD. The first and second AP MLDs are included in a group capable of roaming.

The first AP may be called an Old AP (O_AP), a Serving AP or a Current AP. The second AP may be called a New AP (N_AP) or a Target AP. The first AP MLD including the first AP may be called a Serving AP MLD. The second AP MLD including the second AP may be called a Target AP MLD. MLD roaming from a Serving AP MLD to a Target AP MLD is defined as an operation of seamlessly moving from an AP to another AP without disconnection between an AP and an STA in an MLD.

The group capable of roaming may be called a UHR AP MLD. Although the first and second AP MLDs are non-collocated, they are included in the same group capable of roaming, so roaming (or movement) from an AP of the first AP MLD to an AP of the second AP MLD may be possible. APs in the first AP MLD are collocated. APs in the second AP MLD are also collocated.

The MLD Roaming Request frame includes information on a context transfer level.

A context transferred from the first AP MLD to the second AP MLD is selected based on the information on the context transfer level.

The present embodiment proposes a method of selecting a context for proactively transferring information required before a non-AP STA performs roaming to a Target AP MLD. Particularly, the present embodiment defines a context transfer level for the context, and proposes a method of selecting a context required for roaming based on the context transfer level. Thereby, a delay caused by transfer of unnecessary contexts may be avoided and only necessary information may be transferred, having an effect that more improved seamless roaming may be implemented.

A context may be transferred from the first AP MLD to the second AP MLD based on the MLD Roaming Request frame. Specifically, the first AP MLD, the second AP MLD and the group capable of roaming may be connected to a Distribution System (DS). After the MLD Roaming Request frame is transmitted, the context may be transferred to the second AP MLD through the DS.

The context may be called a parameter set negotiated between an AP and an STA (or between a non-AP MLD STA and a Serving AP MLD). The DS may be a backbone network for wireless LAN extending a wireless network by providing connection between different Basic Service Sets (BSSs).

Information on the context transfer level may be set in various ways.

As an example, the information on the context transfer level may be set in an Independent method.

For example, based on the information on the context transfer level being set to 0, the context transferred from the first AP MLD to the second AP MLD may not exist. Based on a case in which the information on the context transfer level is set to 0, since there is no context information required for roaming, proactive context transfer may not be required.

Based on the information on the context transfer level being set to 1, the context transferred from the first AP MLD to the second AP MLD may be a Sequence Number (SN) or a Packet Number (PN).

Based on the information on the context transfer level being set to 2, the context transferred from the first AP MLD to the second AP MLD may be a Block Ack (BA) Agreement.

Based on the information on the context transfer level being set to 3, the context transferred from the first AP MLD to the second AP MLD may be Packet Reordering.

Based on the information on the context transfer level being set to 4 to 15, the context transferred from the first AP MLD to the second AP MLD may be reserved.

As another example, the information on the context transfer level may be set in an Accumulation method.

Based on the information on the context transfer level being set to 1, the context transferred from the first AP MLD to the second AP MLD may be an SN or a PN.

Based on the information on the context transfer level being set to 2, the context transferred from the first AP MLD to the second AP MLD may be an SN or PN and a BA Agreement.

Based on the information on the context transfer level being set to 3, the context transferred from the first AP MLD to the second AP MLD may be an SN or PN, a BA Agreement and Packet Reordering.

As another example, the information on the context transfer level may be set in a bitmap method.

For example, based on the bitmap being 3 bits, based on B0 being 1, the context transferred from the first AP MLD to the second AP MLD may be an SN or PN, based on B1 being 1, the context transferred from the first AP MLD to the second AP MLD may be a BA Agreement, and based on B2 being 1, the context transferred from the first AP MLD to the second AP MLD may be Packet Reordering.

The context transferred from the first AP MLD to the second AP MLD may include first and second contexts.

After the MLD Roaming Request frame is transmitted, a link may be established between the first non-AP STA and the second AP. After the link is established between the first non-AP STA and the second AP, the first context may be transferred from the first AP MLD to the second AP MLD. After the first context is transferred, the MLD Roaming Response frame may be received.

In this case, the first context includes static information for negotiation, and the second context may include dynamic information for negotiation. Similarly, the first and second contexts may be determined based on the information on the context transfer level.

The first AP may perform a roaming preparation phase and a roaming execution phase with the first non-AP STA (the first non-AP STA may perform a roaming preparation phase and a roaming execution phase with the first AP).

In the roaming preparation phase, a link is established between the first non-AP STA and the second AP, and the first context may be transferred.

In the roaming execution phase, the second context is transferred, and after a Distribution System (DS) mapping is updated from the first AP MLD to the second AP MLD, the roaming from the first AP to the second AP may be performed.

The first AP may receive a Transition Request frame from the first non-AP STA (the first non-AP STA may transmit a Transition Request frame to the first AP). The first AP may transmit a Transition Response frame to the first non-AP STA (the first non-AP STA may receive a Transition Response frame from the first AP).

After the Transition Request frame is transmitted, the roaming execution phase may be performed. After the roaming execution phase is completed, the Transition Response frame may be received.

In addition, the MLD Roaming Request frame may further include information on a context that the first non-AP STA desires to transfer or information on a context that the first non-AP STA does not desire to transfer. The MLD Roaming Response frame may further include information on whether contexts requested to be transferred through the MLD Roaming Request frame have actually been transferred.

Based on packets remaining in a queue of the first AP MLD until the context is transferred, after all packets in the queue of the first AP MLD are transmitted to the first non-AP STA, Distribution System (DS) mapping is updated from the first AP MLD to the second AP MLD and the roaming from the first AP to the second AP may be performed. From after the context is transferred, packets may be accumulated in a queue of the second AP MLD.

After transfer of the context is completed (or even before transfer of the context), the second AP MLD may transmit a request frame for link addition to the first non-AP STA (the first non-AP STA may receive a request frame for link addition from the second AP MLD). Based on an added link being established between the first non-AP STA and the second AP MLD, the second AP MLD may transmit a frame including packets in the queue of the second AP MLD to the first non-AP STA through the added link (the first non-AP STA may receive a frame including packets in the queue of the second AP MLD from the second AP MLD through the added link). The first AP MLD may receive a message requesting deletion for a link connected to the first AP MLD from the first non-AP STA (the first non-AP STA may request deletion for a link connected to the first AP MLD).

The frame including packets in the queue of the second AP MLD may be received (or transmitted) based on a Sequence Number (SN) or a Packet Number (PN) included in the context.

Based on all links connected between the first non-AP STA and the first AP MLD being deleted, the roaming from the first AP to the second AP may be completed.

The MLD Roaming Request frame may be defined based on a Reconfiguration Multi-link information element (IE). The MLD Roaming Response frame may be defined based on a Basic Multi-link IE.

The MLD Roaming Request frame may include a first common information field and a first link information field.

The first common information field may include first information indicating whether a roaming reason code exists. Based on the first information indicating whether the roaming reason code exists, the roaming reason code may be included in the first common information field. The first link information field may include second information indicating whether the roaming reason code exists. Based on the second information indicating whether the roaming reason code exists, the roaming reason code may be included in the first link information field.

The MLD Roaming Response frame may include a second common information field and a second link information field. The second common information field may include first information indicating whether a roaming reason code exists. Based on the first information indicating whether the roaming reason code exists, the roaming reason code may be included in the second common information field. The second link information field may include second information indicating whether the roaming reason code exists. Based on the second information indicating whether the roaming reason code exists, the roaming reason code may be included in the second link information field.

Information on a reason for roaming based on a value of the roaming reason code may be set as follows.

Based on the roaming reason code being set to 0, a reason for recommending roaming to the AP may not be specified. Based on the roaming reason code being set to 1, the reason for recommending roaming to the AP may be an excessive frame loss rate or a poor condition. Based on the roaming reason code being set to 2, the reason for recommending roaming to the AP may be an excessive delay for a current traffic stream. Based on the roaming reason code being set to 3, the reason for recommending roaming to the AP may be insufficient quality of service (QoS) capacity for the current traffic stream. Based on the roaming reason code being set to 4, the reason for recommending roaming to the AP may be discovery of a better link.

Based on the roaming reason code being set to 5, the reason for recommending roaming to the AP may be discovery of a better AP. Based on the roaming reason code being set to 6, the reason for recommending roaming to the AP may be that too many replay counter failures are received. Based on the roaming reason code being set to 7, the reason for recommending roaming to the AP may be that too many data message integrity code (MIC) failures are received. Based on the roaming reason code being set to 8, the reason for recommending roaming to the AP may be exceeding a maximum number of retransmissions. Based on the roaming reason code being set to 9, the reason for recommending roaming to the AP may be that too many broadcast disassociations are received. Based on the roaming reason code being set to 10, the reason for recommending roaming to the AP may be that too many broadcast de-authentications are received.

Based on the roaming reason code being set to 11, the reason for recommending roaming to the AP may be failure of a previous roaming. Based on the roaming reason code being set to 12, the reason for recommending roaming to the AP may be a low received signal strength indication (RSSI). Based on the roaming reason code being set to 13, the reason for recommending roaming to the AP may be transition based on a received roaming request frame. Based on the roaming reason code being set to 14, the reason for recommending roaming to the AP may be inclusion of a recommended roaming list. Based on the roaming reason code being set to 15 to 255, the reason for recommending roaming to the AP may be reserved.

Based on the roaming from the first AP to the second AP being completed, the first non-AP STA may receive downlink (DL) data from the second AP.

FIG. 76 is a flowchart illustrating a procedure in which an STA performs MLD roaming using context transfer according to the present embodiment.

The example of FIG. 76 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The present embodiment proposes a method of selecting a context to be transferred from a Serving AP MLD to a Target AP MLD based on information on a context transfer level in an exchange procedure of a Roaming Request frame and a Roaming Response frame for MLD roaming. Specifically, the present embodiment has an effect that a delay due to unnecessary context transfer may be prevented by selectively transferring contexts based on whether re-negotiation between a non-AP STA and a Target AP MLD is performed.

In step S7610, a first non-access point station (non-AP STA) transmits a multi-link device (MLD) Roaming Request frame to a first AP.

In step S7620, the first non-AP STA receives an MLD Roaming Response frame from the first AP.

In step S7630, the first non-AP STA performs roaming from the first AP to a second AP based on the MLD Roaming Request frame and the MLD Roaming Response frame.

The first AP is affiliated with a first AP multi-link device (MLD), and the second AP is affiliated with a second AP MLD. The first and second AP MLDs are included in a group capable of roaming.

The first AP may be called an Old AP (O_AP), a Serving AP or a Current AP. The second AP may be called a New AP (N_AP) or a Target AP. The first AP MLD including the first AP may be called a Serving AP MLD. The second AP MLD including the second AP may be called a Target AP MLD. MLD roaming from a Serving AP MLD to a Target AP MLD is defined as an operation of seamlessly moving from an AP to another AP without disconnection between an AP and an STA in an MLD.

The group capable of roaming may be called a UHR AP MLD. Although the first and second AP MLDs are non-collocated, they are included in the same group capable of roaming, so roaming (or movement) from an AP of the first AP MLD to an AP of the second AP MLD may be possible. APs in the first AP MLD are collocated. APs in the second AP MLD are also collocated.

The MLD Roaming Request frame includes information on a context transfer level.

A context transferred from the first AP MLD to the second AP MLD is selected based on the information on the context transfer level.

The present embodiment proposes a method of selecting a context for proactively transferring information required before a non-AP STA performs roaming to a Target AP MLD. Particularly, the present embodiment defines a context transfer level for the context, and proposes a method of selecting a context required for roaming based on the context transfer level. Thereby, a delay caused by transfer of unnecessary contexts may be avoided and only necessary information may be transferred, having an effect that more improved seamless roaming may be implemented.

A context may be transferred from the first AP MLD to the second AP MLD based on the MLD Roaming Request frame. Specifically, the first AP MLD, the second AP MLD and the group capable of roaming may be connected to a Distribution System (DS). After the MLD Roaming Request frame is transmitted, the context may be transferred to the second AP MLD through the DS.

The context may be called a parameter set negotiated between an AP and an STA (or between a non-AP MLD STA and a Serving AP MLD). The DS may be a backbone network for wireless LAN extending a wireless network by providing connection between different Basic Service Sets (BSSs).

Information on the context transfer level may be set in various ways.

As an example, the information on the context transfer level may be set in an Independent method.

For example, based on the information on the context transfer level being set to 0, the context transferred from the first AP MLD to the second AP MLD may not exist. Based on a case in which the information on the context transfer level is set to 0, since there is no context information required for roaming, proactive context transfer may not be required.

Based on the information on the context transfer level being set to 1, the context transferred from the first AP MLD to the second AP MLD may be a Sequence Number (SN) or a Packet Number (PN).

Based on the information on the context transfer level being set to 2, the context transferred from the first AP MLD to the second AP MLD may be a Block Ack (BA) Agreement.

Based on the information on the context transfer level being set to 3, the context transferred from the first AP MLD to the second AP MLD may be Packet Reordering.

Based on the information on the context transfer level being set to 4 to 15, the context transferred from the first AP MLD to the second AP MLD may be reserved.

As another example, the information on the context transfer level may be set in an Accumulation method.

Based on the information on the context transfer level being set to 1, the context transferred from the first AP MLD to the second AP MLD may be an SN or a PN.

Based on the information on the context transfer level being set to 2, the context transferred from the first AP MLD to the second AP MLD may be an SN or PN and a BA Agreement.

Based on the information on the context transfer level being set to 3, the context transferred from the first AP MLD to the second AP MLD may be an SN or PN, a BA Agreement and Packet Reordering.

As another example, the information on the context transfer level may be set in a bitmap method.

For example, based on the bitmap being 3 bits, based on B0 being 1, the context transferred from the first AP MLD to the second AP MLD may be an SN or PN, based on B1 being 1, the context transferred from the first AP MLD to the second AP MLD may be a BA Agreement, and based on B2 being 1, the context transferred from the first AP MLD to the second AP MLD may be Packet Reordering.

The context transferred from the first AP MLD to the second AP MLD may include first and second contexts.

After the MLD Roaming Request frame is transmitted, a link may be established between the first non-AP STA and the second AP. After the link is established between the first non-AP STA and the second AP, the first context may be transferred from the first AP MLD to the second AP MLD. After the first context is transferred, the MLD Roaming Response frame may be received.

In this case, the first context includes static information for negotiation, and the second context may include dynamic information for negotiation. Similarly, the first and second contexts may be determined based on the information on the context transfer level.

The first AP may perform a roaming preparation phase and a roaming execution phase with the first non-AP STA (the first non-AP STA may perform a roaming preparation phase and a roaming execution phase with the first AP).

In the roaming preparation phase, a link is established between the first non-AP STA and the second AP, and the first context may be transferred.

In the roaming execution phase, the second context is transferred, and after a Distribution System (DS) mapping is updated from the first AP MLD to the second AP MLD, the roaming from the first AP to the second AP may be performed.

The first AP may receive a Transition Request frame from the first non-AP STA (the first non-AP STA may transmit a Transition Request frame to the first AP). The first AP may transmit a Transition Response frame to the first non-AP STA (the first non-AP STA may receive a Transition Response frame from the first AP).

After the Transition Request frame is transmitted, the roaming execution phase may be performed. After the roaming execution phase is completed, the Transition Response frame may be received.

In addition, the MLD Roaming Request frame may further include information on a context that the first non-AP STA desires to transfer or information on a context that the first non-AP STA does not desire to transfer. The MLD Roaming Response frame may further include information on whether contexts requested to be transferred through the MLD Roaming Request frame have actually been transferred.

Based on packets remaining in a queue of the first AP MLD until the context is transferred, after all packets in the queue of the first AP MLD are transmitted to the first non-AP STA, Distribution System (DS) mapping is updated from the first AP MLD to the second AP MLD and the roaming from the first AP to the second AP may be performed. From after the context is transferred, packets may be accumulated in a queue of the second AP MLD.

After transfer of the context is completed (or even before transfer of the context), the second AP MLD may transmit a request frame for link addition to the first non-AP STA (the first non-AP STA may receive a request frame for link addition from the second AP MLD). Based on an added link being established between the first non-AP STA and the second AP MLD, the second AP MLD may transmit a frame including packets in the queue of the second AP MLD to the first non-AP STA through the added link (the first non-AP STA may receive a frame including packets in the queue of the second AP MLD from the second AP MLD through the added link). The first AP MLD may receive a message requesting deletion for a link connected to the first AP MLD from the first non-AP STA (the first non-AP STA may request deletion for a link connected to the first AP MLD).

The frame including packets in the queue of the second AP MLD may be received (or transmitted) based on a Sequence Number (SN) or a Packet Number (PN) included in the context.

Based on all links connected between the first non-AP STA and the first AP MLD being deleted, the roaming from the first AP to the second AP may be completed.

The MLD Roaming Request frame may be defined based on a Reconfiguration Multi-link information element (IE). The MLD Roaming Response frame may be defined based on a Basic Multi-link IE.

The MLD Roaming Request frame may include a first common information field and a first link information field.

The first common information field may include first information indicating whether a roaming reason code exists. Based on the first information indicating whether the roaming reason code exists, the roaming reason code may be included in the first common information field. The first link information field may include second information indicating whether the roaming reason code exists. Based on the second information indicating whether the roaming reason code exists, the roaming reason code may be included in the first link information field.

The MLD Roaming Response frame may include a second common information field and a second link information field. The second common information field may include first information indicating whether a roaming reason code exists. Based on the first information indicating whether the roaming reason code exists, the roaming reason code may be included in the second common information field. The second link information field may include second information indicating whether the roaming reason code exists. Based on the second information indicating whether the roaming reason code exists, the roaming reason code may be included in the second link information field.

Information on a reason for roaming based on a value of the roaming reason code may be set as follows.

Based on the roaming reason code being set to 0, a reason for recommending roaming to the AP may not be specified. Based on the roaming reason code being set to 1, the reason for recommending roaming to the AP may be an excessive frame loss rate or a poor condition. Based on the roaming reason code being set to 2, the reason for recommending roaming to the AP may be an excessive delay for a current traffic stream. Based on the roaming reason code being set to 3, the reason for recommending roaming to the AP may be insufficient quality of service (QoS) capacity for the current traffic stream. Based on the roaming reason code being set to 4, the reason for recommending roaming to the AP may be discovery of a better link.

Based on the roaming reason code being set to 5, the reason for recommending roaming to the AP may be discovery of a better AP. Based on the roaming reason code being set to 6, the reason for recommending roaming to the AP may be that too many replay counter failures are received. Based on the roaming reason code being set to 7, the reason for recommending roaming to the AP may be that too many data message integrity code (MIC) failures are received. Based on the roaming reason code being set to 8, the reason for recommending roaming to the AP may be exceeding a maximum number of retransmissions. Based on the roaming reason code being set to 9, the reason for recommending roaming to the AP may be that too many broadcast disassociations are received. Based on the roaming reason code being set to 10, the reason for recommending roaming to the AP may be that too many broadcast de-authentications are received.

Based on the roaming reason code being set to 11, the reason for recommending roaming to the AP may be failure of a previous roaming. Based on the roaming reason code being set to 12, the reason for recommending roaming to the AP may be a low received signal strength indication (RSSI). Based on the roaming reason code being set to 13, the reason for recommending roaming to the AP may be transition based on a received roaming request frame. Based on the roaming reason code being set to 14, the reason for recommending roaming to the AP may be inclusion of a recommended roaming list. Based on the roaming reason code being set to 15 to 255, the reason for recommending roaming to the AP may be reserved.

Based on the roaming from the first AP to the second AP being completed, the first non-AP STA may receive downlink (DL) data from the second AP.

### < Device configuration>

The technical features of the present disclosure described above may be applied to various devices and methods. For example, the technical features of the present disclosure described above may be performed/supported through the device of FIG. 1 and/or FIG. 14. For example, the technical features of the present disclosure described above may be applied to only a part of FIG. 1 and/or FIG. 14. For example, the technical features of the present disclosure described above may be implemented based on processing chips 114 and 124 of FIG. 1, implemented based on processors 111 and 121 and memories 112 and 122 of FIG. 1, or implemented based on a processor 610 and a memory 620 of FIG. 14. For example, a device of the present disclosure transmits a multi-link device (MLD) Roaming Request frame to a first access point (first AP); receives an MLD Roaming Response frame from the first AP; and performs roaming from the first AP to a second AP based on the MLD Roaming Request frame and the MLD Roaming Response frame.

The technical features of the present disclosure may be implemented based on a computer readable medium (CRM). For example, a CRM proposed by the present disclosure is at least one computer readable medium including instructions based on being executed by at least one processor.

The CRM may store instructions performing operations including: transmitting a multi-link device (MLD) Roaming Request frame to a first access point (first AP); receiving an MLD Roaming Response frame from the first AP; and performing roaming from the first AP to a second AP based on the MLD Roaming Request frame and the MLD Roaming Response frame. Instructions stored in the CRM of the present disclosure may be executed by at least one processor. At least one processor related to the CRM of the present disclosure may be the processors 111 and 121 or the processing chips 114 and 124 of FIG. 1, or the processor 610 of FIG. 14. Meanwhile, the CRM of the present disclosure may be the memories 112 and 122 of FIG. 1, the memory 620 of FIG. 14, or a separate external memory/storage medium/disk and the like.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
transmitting, by a first non-access point station (non-AP STA), a multi-link device (MLD) Roaming Request frame to a first AP;
receiving, by the first non-AP STA, an MLD Roaming Response frame from the first AP; and
performing, by the first non-AP STA, roaming from the first AP to a second AP based on the MLD Roaming Request frame and the MLD Roaming Response frame,
wherein the first AP is affiliated with a first AP MLD, and the second AP is affiliated with a second AP MLD,
wherein the first and second AP MLDs are included in a group capable of roaming,
wherein the MLD Roaming Request frame includes information on a context transfer level, and
wherein a context transferred from the first AP MLD to the second AP MLD is selected based on the information on the context transfer level.

2. The method of claim 1,
wherein the context transferred from the first AP MLD to the second AP MLD does not exist based on the information on the context transfer level being set to 0,
wherein the context transferred from the first AP MLD to the second AP MLD is a sequence number (SN) or a packet number (PN) based on the information on the context transfer level being set to 1,
wherein the context transferred from the first AP MLD to the second AP MLD is a Block Ack (BA) Agreement based on the information on the context transfer level being set to 2,
wherein the context transferred from the first AP MLD to the second AP MLD is Packet Reordering based on the information on the context transfer level being set to 3, and
wherein the context transferred from the first AP MLD to the second AP MLD is reserved based on the information on the context transfer level being set to 4 to 15.

3. The method of claim 2,
wherein the context transferred from the first AP MLD to the second AP MLD includes first and second contexts,
wherein a link is established between the first non-AP STA and the second AP after the MLD Roaming Request frame is transmitted,
wherein the first context is transferred from the first AP MLD to the second AP MLD after the link is established between the first non-AP STA and the second AP,
wherein the MLD Roaming Response frame is received after the first context is transferred,
wherein the first context includes static information for negotiation, and the second context includes dynamic information for negotiation, and
wherein the first and second contexts are determined based on the information on the context transfer level.

4. The method of claim 3, further comprising:
performing, by the first non-AP STA, a roaming preparation phase and a roaming execution phase with the first AP,
wherein in the roaming preparation phase, the link is established between the first non-AP STA and the second AP, and the first context is transferred, and
wherein in the roaming execution phase, the second context is transferred, and the roaming from the first AP to the second AP is performed after Distribution System (DS) mapping is updated from the first AP MLD to the second AP MLD.

5. The method of claim 4, further comprising:
transmitting, by the first non-AP STA, a Transition Request frame to the first AP; and
receiving, by the first non-AP STA, a Transition Response frame from the first AP,
wherein the roaming execution phase is performed after the Transition Request frame is transmitted, and
wherein the Transition Response frame is received after the roaming execution phase is completed.

6. The method of claim 1,
wherein the first AP MLD, the second AP MLD and the group capable of roaming are connected to a Distribution System (DS), and
wherein the context is transferred to the second AP MLD through the DS after the MLD Roaming Request frame is transmitted.

7. The method of claim 1,
wherein the MLD Roaming Request frame is defined based on a Reconfiguration Multi-link Information Element (IE), and
wherein the MLD Roaming Response frame is defined based on a Basic Multi-link IE.

8. The method of claim 7,
wherein the MLD Roaming Request frame includes a first common information field and a first link information field,
wherein the first common information field includes first information indicating whether a roaming reason code exists,
wherein the roaming reason code is included in the first common information field based on the first information indicating whether the roaming reason code exists,
wherein the first link information field includes second information indicating whether the roaming reason code exists, and
wherein the roaming reason code is included in the first link information field based on the second information indicating whether the roaming reason code exists.

9. The method of claim 7,
wherein the MLD Roaming Response frame includes a second common information field and a second link information field,
wherein the second common information field includes first information indicating whether a roaming reason code exists,
wherein the roaming reason code is included in the second common information field based on the first information indicating whether the roaming reason code exists,
wherein the second link information field includes second information indicating whether the roaming reason code exists, and
wherein the roaming reason code is included in the second link information field based on the second information indicating whether the roaming reason code exists.

10. A first non-access point station (non-AP STA) in a wireless local area network (WLAN) system, the first non-AP STA comprising:
a memory;
a transceiver; and
a processor operated to be coupled with the memory and the transceiver, wherein the processor is configured to:
transmit a multi-link device (MLD) Roaming Request frame to a first AP;
receive an MLD Roaming Response frame from the first AP; and
perform roaming from the first AP to a second AP based on the MLD Roaming Request frame and the MLD Roaming Response frame,
wherein the first AP is affiliated with a first AP MLD, and the second AP is affiliated with a second AP MLD,
wherein the first and second AP MLDs are included in a group capable of roaming,
wherein the MLD Roaming Request frame includes information on a context transfer level, and
wherein a context transferred from the first AP MLD to the second AP MLD is selected based on the information on the context transfer level.

11. A method in a wireless local area network (WLAN) system, the method comprising:
receiving, by a first access point (AP), a multi-link device (MLD) Roaming Request frame from a first non-access point station (non-AP STA); and
transmitting, by the first AP, an MLD Roaming Response frame to the first non-AP STA,
wherein roaming from the first AP to a second AP is performed based on the MLD Roaming Request frame and the MLD Roaming Response frame,
wherein the first AP is affiliated with a first AP MLD, and the second AP is affiliated with a second AP MLD,
wherein the first and second AP MLDs are included in a group capable of roaming,
wherein the MLD Roaming Request frame includes information on a context transfer level, and
wherein a context transferred from the first AP MLD to the second AP MLD is selected based on the information on the context transfer level.

12. The method of claim 11,
wherein the context transferred from the first AP MLD to the second AP MLD does not exist based on the information on the context transfer level being set to 0,
wherein the context transferred from the first AP MLD to the second AP MLD is a sequence number (SN) or a packet number (PN) based on the information on the context transfer level being set to 1,
wherein the context transferred from the first AP MLD to the second AP MLD is a Block Ack (BA) Agreement based on the information on the context transfer level being set to 2,
wherein the context transferred from the first AP MLD to the second AP MLD is Packet Reordering based on the information on the context transfer level being set to 3, and
wherein the context transferred from the first AP MLD to the second AP MLD is reserved based on the information on the context transfer level being set to 4 to 15.

13. The method of claim 12,
wherein the context transferred from the first AP MLD to the second AP MLD includes first and second contexts,
wherein a link is established between the first non-AP STA and the second AP after the MLD Roaming Request frame is transmitted,
wherein the first context is transferred from the first AP MLD to the second AP MLD after the link is established between the first non-AP STA and the second AP,
wherein the MLD Roaming Response frame is received after the first context is transferred,
wherein the first context includes static information for negotiation, and the second context includes dynamic information for negotiation, and
wherein the first and second contexts are determined based on the information on the context transfer level.

14. The method of claim 13, further comprising:
performing, by the first AP, a roaming preparation phase and a roaming execution phase with the first non-AP STA,
wherein in the roaming preparation phase, the link is established between the first non-AP STA and the second AP, and the first context is transferred, and
wherein in the roaming execution phase, the second context is transferred, and the roaming from the first AP to the second AP is performed after Distribution System (DS) mapping is updated from the first AP MLD to the second AP MLD.

15. The method of claim 14, further comprising:
receiving, by the first AP, a Transition Request frame from the first non-AP STA; and
transmitting, by the first AP, a Transition Response frame to the first non-AP STA,
wherein the roaming execution phase is performed after the Transition Request frame is transmitted, and
wherein the Transition Response frame is received after the roaming execution phase is completed.

16. The method of claim 11,
wherein the first AP MLD, the second AP MLD and the group capable of roaming are connected to a Distribution System (DS), and
wherein the context is transferred to the second AP MLD through the DS after the MLD Roaming Request frame is transmitted.

17. The method of claim 11,
wherein the MLD Roaming Request frame is defined based on a Reconfiguration Multi-link Information Element (IE), and
wherein the MLD Roaming Response frame is defined based on a Basic Multi-link IE.

18. A first access point (AP) in a wireless local area network (WLAN) system, the first AP comprising:
a memory;
a transceiver; and
a processor operated to be coupled with the memory and the transceiver, wherein the processor is configured to:
receive a multi-link device (MLD) Roaming Request frame from a first non-access point station (non-AP STA); and
transmit an MLD Roaming Response frame to the first non-AP STA,
wherein roaming from the first AP to a second AP is performed based on the MLD Roaming Request frame and the MLD Roaming Response frame,
wherein the first AP is affiliated with a first AP MLD, and the second AP is affiliated with a second AP MLD,
wherein the first and second AP MLDs are included in a group capable of roaming,
wherein the MLD Roaming Request frame includes information on a context transfer level, and
wherein a context transferred from the first AP MLD to the second AP MLD is selected based on the information on the context transfer level.

19. A computer readable medium including an instruction being executed by at least one processor and performing a method comprising the steps of:
transmitting a multi-link device (MLD) Roaming Request frame to a first access point (AP);
receiving an MLD Roaming Response frame from the first AP; and
performing roaming from the first AP to a second AP based on the MLD Roaming Request frame and the MLD Roaming Response frame,
wherein the first AP is affiliated with a first AP MLD, and the second AP is affiliated with a second AP MLD,
wherein the first and second AP MLDs are included in a group capable of roaming,
wherein the MLD Roaming Request frame includes information on a context transfer level, and
wherein a context transferred from the first AP MLD to the second AP MLD is selected based on the information on the context transfer level.

20. A device in a wireless local area network (WLAN) system, the device comprising:
a memory; and
a processor operated to be coupled with the memory, wherein the processor is configured to:
transmit a multi-link device (MLD) Roaming Request frame to a first access point (AP);
receive an MLD Roaming Response frame from the first AP; and
perform roaming from the first AP to a second AP based on the MLD Roaming Request frame and the MLD Roaming Response frame,
wherein the first AP is affiliated with a first AP MLD, and the second AP is affiliated with a second AP MLD,
wherein the first and second AP MLDs are included in a group capable of roaming,
wherein the MLD Roaming Request frame includes information on a context transfer level, and
wherein a context transferred from the first AP MLD to the second AP MLD is selected based on the information on the context transfer level.
